# EUROPEAN PATENT APPLICATION

(11) **EP 2 239 137 A1**
(43) Date of publication of application: **13.10.2010**
(21) Application number: 09706223.6
(22) Date of filing: 30.01.2009
(51) Int. Cl.: B32B 27/30, B05D 5/00, C08F 18/22, C08F 28/02, C08F 220/54, C09D 5/00, C09D 7/12, C09D 143/02, C09D 143/04, C09D 183/04

(54) **HYDROPHILIC MEMBERS**

(30) Priority: 01.02.2008 JP 2008023109; 24.03.2008 JP 2008076762; 15.08.2008 JP 2008209381
(71) Applicant: FUJIFILM Corporation, Tokyo 106-0031 (JP)
(72) Inventor: TANAKA, Satoshi, Kanagawa (JP); KONDO, Yoshiaki, Kanagawa (JP)
(74) Representative: HOFFMANN EITLE
(86) International application number: PCT/JP2009/051594
(87) International publication number: WO 2009/096531

(57) **Abstract**

A hydrophilic member is provided which comprises a substrate of every kind having formed thereon a surface having excellent antifouling properties, quick-drying properties of water or the like, and wear resistance and being flexible.

A hydrophilic member which is **characterized by** having an overcoat layer formed from a hydrophilic composition containing at least one of a hydrophilic polymer (A) containing a specific structure and a hydrophilic polymer (B) containing a specific structure; and an undercoat layer formed from a composition for forming the undercoat layer containing an alkoxide (C) represented by the general formula (III) of M(OR¹⁴)₄ wherein M represents an element selected from among Si, Ti, and Zr and an alkoxysilane (D) represented by the general formula (IV) of Si(OR¹⁵)ₐR¹⁶₄₋ₐ wherein R¹⁴ to R¹⁶ each independently represents a hydrogen atom or a hydrocarbon group, and a represents 2 or 3.

## Description

### Technical Field

The present invention relates to a hydrophilic member comprising a substrate of every kind whose surface has excellent antifouling properties and excellent wear resistance and has enough flexibility.

### BACKGROUND ART

Various techniques for preventing adhesion of oily stain onto the surface of a member have been proposed. In particular, optical members such as antireflection films, optical filters, optical lenses, lenses for spectacles, and mirrors suffer adhesion of stains such as fingerprints, sebaceous matter, sweat, and cosmetics by the use of a person, whereby not only their functions are reduced, but the removal of the stain is complicated. Therefore, it is desired to apply an effective stain-preventing treatment.
Also, in recent years, with the spread of mobiles, a display has been frequently used outdoors. When a mobile is used under an environment where external light is made incident, this incident light is regularly reflected on the display surface, and the reflected light is mixed with displayed light, whereby a problem that a displayed image is difficultly viewed or other problem is caused. For this reason, an antireflection optical member is frequently disposed on the display surface.
As such an antireflection optical member, for example, there is known one obtained by stacking a high refractive index layer and a low refractive index layer each composed of a metal oxide on a surface of a transparent substrate; one obtained by forming a single layer of a low refractive index layer made of an inorganic or organic fluorinated compound, etc. on the surface of a transparent substrate; or one obtained by forming a coating layer containing transparent fine particles on the surface of a transparent plastic film substrate, thereby making external light irregularly reflect on the uneven surface. Similar to the aforesaid optical members, when used by a person, a stain such as fingerprints or sebaceous matter is easy to adhere onto the surface of such an antireflection optical member, and only a portion where the stain has adhered becomes high in reflection, thereby causing a problem that the strain is more conspicuous. In addition to the problem, there has also been encountered a problem that the removal of the stain is difficult because fine irregularities are usually present on the surface of the antireflection film.

Various techniques for forming on the surface of a solid member an antifouling function having performance to make a stain difficultly adhere onto the surface or to make it easy to remove an adhered stain have been proposed. In particular, as a combination of an antireflection member and an antifouling member, there have been proposed, for example, an antifouling, anti-friction material having an antireflection film composed mainly of silicon dioxide and treated with an organosilicon substituent-containing compound (see, for example, patent document 1); and an antifouling, anti-friction CRT filter in which the surface of a substrate is coated with a silanol-terminated organic polysiloxane (see, for example, patent document 2) have been proposed. Also, an antireflection film containing a silane compound including polyfluoroalkyl group-containing silane compounds (see, for example, patent document 3); and a combination of an optical thin film composed mainly of silicon dioxide and a copolymer of a perfluoroalkyl acrylate and an alkoxysilane group-containing monomer (see, for example, patent document 4) have been proposed.
However, the antifouling layer which is formed by a conventional method is insufficient in antifouling properties and, in particular, it is difficult to wipe off a stain such as fingerprints, sebaceous matter, sweat, and cosmetics. Also, in the surface treatment with a material having low surface energy, such as fluorine or silicon materials, there exist fears that the antifouling performance is reduced with a lapse of time. For this reason, development of an antifouling member with excellent antifouling properties and durability has been desired.

With a resin film which is used in many ways for the surface of an optical member, etc. or an inorganic material such as glasses and metals, it is general that its surface is hydrophobic or exhibits weak hydrophilicity. When the surface of a substrate using a resin film, an inorganic material or the like is hydrophilized, adherent droplets are uniformly spread on the surface of the substrate to form a homogeneous water film. Therefore, the fogging of glass, a lens or a mirror can be effectively prevented, which is useful for preventing devitrification to be caused due to hygroscopic moisture, securing visibility in the rain, or the like. Furthermore, urban soot, a combustion product contained in exhaust gases from automobiles, etc., such as carbon black, or hydrophobic pollutants such as fats and oils and sealant elution components difficultly adhere thereto, and even when it adheres, it is simply dropped off by rainfall or water washing. Therefore, such a material is useful for various applications.

According to a surface treatment method for achieving hydrophilization which has hitherto been proposed, for example, etching treatment and plasma treatment, though the surface is highly hydrophilized, its effect is temporary, and the hydrophilized state cannot be maintained over a long period of time. Further, a surface-hydrophilic coating film using a hydrophilic graft polymer as one of hydrophilic resins is also proposed (see, for example, non-patent document 1). However, though this coating film has hydrophilicity to some extent, it cannot be said that the compatibility with a substrate is sufficient, and high durability has been demanded.

Also, a film using titanium oxide has hitherto been known as a film with excellent surface hydrophilicity. For example, a technique for forming a photocatalyst-containing layer on the surface of a substrate to highly hydrophilize the surface corresponding to optical excitation of the photocatalyst is disclosed. It is reported that, when this technique is applied to various composite materials such as glasses, lenses, mirrors, exterior materials, and wet area materials, excellent antifouling properties can be imparted to such composite materials (see, for example, patent document 5). However, a hydrophilic film using titanium oxide does not have sufficient film strength and, unless it is optically excited, it does not exhibit a hydrophilizing effect. Thus, there is involved a problem that a use site thereof is limited. Therefore, an antifouling member having durability and good wear resistance has been demanded.

In order to solve the foregoing problems, it has been found that, with noting the characteristic properties of a sol-gel organic-inorganic hybrid film, a hydrophilic surface having a cross-linked structure formed by hydrolysis and polycondensation of a hydrophilic polymer and an alkoxide shows excellent antifouling properties and has good wear resistance (see patent document 6). A hydrophilic surface layer having such cross-linked structure can be obtained by combining a specific hydrophilic polymer having a reactive group with a cross-linking agent.
However, hydrophilic materials of the conventional art have the defect that, in the case of forming a film on a film-like substrate, they show insufficient flexibility.
Patent document 1: JP-A-64-86101
Patent document 2: JP-A-4-338901
Patent document 3: JP-B-6-29332
Patent document 4: JP-A-7-16940
Patent document 5: WO96/29375
Patent document 6: JP-A-2002-361800
Non-patent document 1: Article of The Chemical Daily News, dated Jan. 30, 1995.

### Disclosure of the Invention

### Problems that the Invention is to Solve

An object of the invention is to provide a hydrophilic member comprising a substrate of every kind having formed thereon a surface with excellent antifouling properties, excellent quick-drying properties of water, excellent wear resistance, and enough flexibility by further continuing the study on the sol-gel organic-inorganic hybrid film to thereby exceed the above-described related art.

### Means for Solving the Problems

As a result of further continuing the study on the sol-gel organic-inorganic hybrid film, the inventors have found that a hydrophilic surface layer having a cross-linked structure can be formed by hydrolysis and polycondensation of a hydrophilic polymer, that the hydrophilic surface layer having such cross-linked structure can be obtained from a combination of a specific hydrophilic polymer which has a reactive group in the side chain thereof and wherein the reactive group is linked to the main chain thereof through a linking chain having high hydrophilicity and, preferably, a cross-linking group, and that thus there can be realized the same antifouling properties and quick-drying properties of water or the like as in the related art, and more excellent wear resistance. It has also been found that, by further mixing a hydrophilic polymer having a reactive group at the end of the polymer chain into the hydrophilic layer, the hydrophilic polymer chains are oriented in a graft pattern in the outermost surface of the hydrophilic layer to realize more excellent antifouling properties. Further, by combining a tri- or bi-functional alkoxysilane and a tetrafunctional alkoxide as an undercoat layer, enough flexibility can be imparted to the film formed on the substrate, thus a hydrophilic member having excellent antifouling properties, excellent quick-drying properties of water or the like, and excellent wear resistance, and having enough flexibility being completed.
That is, the present invention is as follows.

[1] A hydrophilic member which is characterized by having an overcoat layer formed from a hydrophilic composition containing at least one of a hydrophilic polymer (A) containing the structure represented by the following general formula (I-1) and the structure represented by the general formula (I-2) and a hydrophilic polymer (B) containing the structure represented by the general formula (II-1) and the structure represented by the general formula (II-2); and an undercoat layer formed from a composition for forming the undercoat layer containing an alkoxide (C) represented by the general formula (III) of M(OR¹⁴)₄ (wherein M represents an element selected from among Si, Ti, and Zr) and an alkoxysilane (D) represented by the general formula (IV) of Si(OR¹⁵)ₐR¹⁶₄₋ₐ (wherein R¹⁴ to R¹⁶ each independently represents a hydrogen atom or a hydrocarbon group, and a represents 2 or 3).

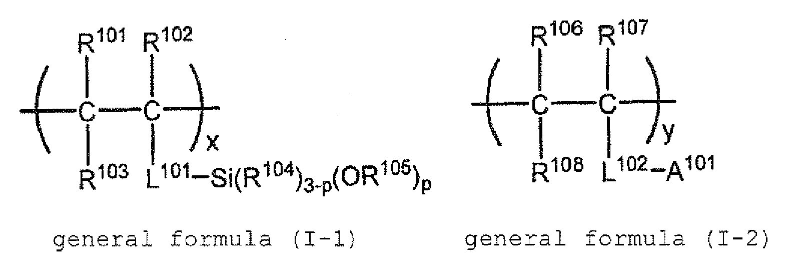

In the general formulae (I-1) and (I-2), R¹⁰¹ to R¹⁰⁸ each independently represents a hydrogen atom or a hydrocarbon group, p represents an integer of from 1 to 3, L¹⁰¹ represents a single bond or a polyvalent organic linking group having one or more structures selected from the group consisting of -CONH-, -NHCONH-, -OCONH-, -SO₂NH-, and -SO₃-, L¹⁰² represents a single bond or a polyvalent organic linking group, x and y each represents a composition ratio, with x being 0<x<100 and y being 0<y<100, A¹⁰¹ represents -OH, -ORₐ, -CORₐ, -CO₂Rₑ, -CON(Rₐ)(R_{b}), - N(Rₐ)(R_{b}), -NHCOR_{d}, -NHCO₂Rₐ, -OCON(Rₐ)(R_{b}), -NHCON(Rₐ)(R_{b}), - SO₃Re, -OSO₃Rₑ, ₋SO₂R_{d}, -NHSO₂R_{d}, -SO₂N(Rₐ)(R_{b}), -N(Rₐ)(R_{b})(R_{c}), -N(Rₐ)(R_{b})(R_{c})(R_{g}), -PO₃(Rₑ)(R_{f}), -OPO₃(Rₑ)(R_{f}) or -PO₃(R_{d})(Rₑ) (wherein Rₐ, R_{b}, and R_{c} each independently represents a hydrogen atom or a straight, branched or cyclic alkyl group, R_{d} represents a straight, branched or cyclic alkyl group, Rₑ and R_{f} each independently represents a hydrogen atom, a straight, branched or cyclic alkyl group, an alkali metal, an alkaline earth metal or an onium, and R_{g} represents a halogen ion, an inorganic anion or an organic anion.

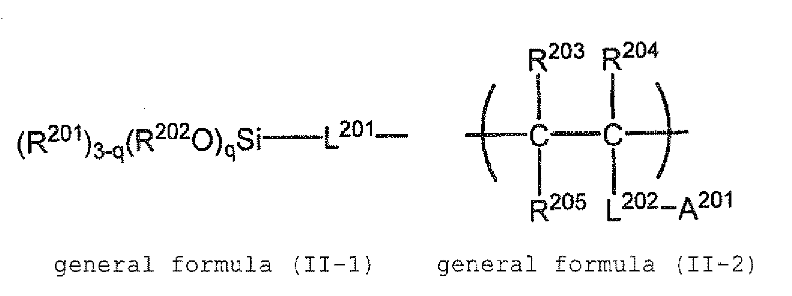

In the general formulae (II-1) and (II-2), R²⁰¹ to R²⁰⁵ each independently represents a hydrogen atom or a hydrocarbon group, q represents an integer of from 1 to 3, L²⁰¹ and L²⁰² each independently represents a single bond or a polyvalent organic linking group, A²⁰¹ represents -OH, - ORₐ, -CORₐ, -CO₂Rₑ, -CON(Rₐ)(R_{b}), -N(Rₐ)(R_{b}), -NHCOR_{d}, -NHCO₂Rₐ, -OCON (Rₐ)(R_{b}), -NHCON(Rₐ)(R_{b}), -SO₃Rₑ, -OSO₃Rₑ, -SO₂R_{d}, - NHSO₂R_{d}, -SO₂N(Rₐ)(R_{b}), -N(Rₐ)(R_{b})(R_{c}), -N(Rₐ)(R_{b})(R_{c})(R_{g}), - PO₃(Rₑ)(R_{f}), -OPO₃(Rₑ)(R_{f}) or -PO₃(R_{d})(Rₑ) (wherein Rₐ, R_{b}, and R_{c} each independently represents a hydrogen atom or a straight, branched or cyclic alkyl group, R_{d} represents a straight, branched or cyclic alkyl group, Rₑ and R_{f} each independently represents a hydrogen atom, a straight, branched or cyclic alkyl group, an alkali metal, an alkaline earth metal or an onium, and R_{g} represents a halogen ion, an inorganic anion or an organic anion.
[2] The hydrophilic member as described in [1], which is **characterized in that** the hydrophilic composition further contains a catalyst (E).
[3] The hydrophilic member as described in [1] or [2], which is **characterized in that** the hydrophilic composition further contains an alkoxide compound (F) of an element selected from among Si, Ti, Zr, and Al.
[4] The hydrophilic member as described in any one of [1] to [3], which is **characterized in that** the composition for forming the undercoat layer further contains a catalyst (E).
[5] The hydrophilic member as described in any one of [2] to [4], which is **characterized in that** the Catalyst (E) is a non-volatile catalyst.
[6] The hydrophilic member as described in any one of [1] to [5], which is **characterized in that** the hydrophilic composition contains the hydrophilic polymer (A) and the hydrophilic polymer (B) and that the weight ratio of the hydrophilic polymer (A) to the hydrophilic polymer (B) (hydrophilic polymer (A)/hydrophilic polymer (B)) is in the range of from 95/5 to 50/50.
[7] The hydrophilic member as described in any one of [1] to [6], which is **characterized in that** the hydrophilic composition further contains a surfactant (G).
[8] The hydrophilic member as described in [7], which is **characterized in that** the surfactant (G) is at least one selected from among anionic surfactants, amphoteric surfactants, and fluorine-containing surfactants.
[9] The hydrophilic member as described in any one of [1] to [8], which is **characterized in that** the weight ratio of the alkoxide (C) to the alkoxysilane (D) (alkoxide (C)/alkoxysilane (D)) in the composition for forming the undercoat layer is in the range of from 90/10 to 30/70.
[10] The hydrophilic member as described in any one of [1] to [9], which is **characterized in that** the hydrophilic member is obtained by applying the composition for forming the undercoat layer onto a substrate, and heating and drying the applied composition to form the undercoat layer, and applying the hydrophilic composition onto the undercoat layer, and heating and drying the applied composition to form the overcoat layer.
[11] The hydrophilic member as described in any one of [1] to [10], which is **characterized in that** the substrate is a flexible substrate.
[12] A fin stock using the hydrophilic member described in any one of [1] to [11].
[13] An aluminum fin stock, wherein the fin stock described in [12] is made from aluminum.
[14] A heat exchanger using the aluminum fin stock described in [13].
[15] An air-conditioner using the heat exchanger described in [14].

### Advantage of the Invention

According to the present invention, there can be provided a hydrophilic member comprising a substrate of every kind having formed thereon a surface with excellent antifouling properties, excellent quick-drying properties of water or the like, excellent wear resistance, and enough flexibility.

### Best mode for carrying out the Invention

Hereinafter, the present invention is described in detail.
The hydrophilic member of the invention is characterized by having an overcoat layer formed from a hydrophilic composition containing at least one of a hydrophilic polymer (A) containing the structure represented by the following general formula (I-1) and the structure represented by the general formula (1-2) and a hydrophilic polymer (B) containing the structure represented by the general formula (II-1) and the structure represented by the general formula (II-2); and an undercoat layer formed from a composition for forming the undercoat layer containing an alkoxide (C) represented by the general formula (III) of M(OR¹⁴)₄ (wherein M represents an element selected from among Si, Ti, and Zr) and an alkoxysilane (D) represented by the general formula (IV) of Si(OR¹⁵)ₐR¹⁶₄₋ₐ (wherein R¹⁴ to R¹⁶ each independently represents a hydrogen atom or a hydrocarbon group, and a represents 2 or 3).

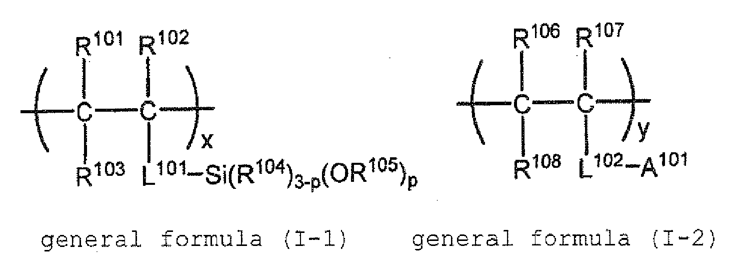

In the general formulae (I-1) and (I-2), R¹⁰¹ to R¹⁰⁸ each independently represents a hydrogen atom or a hydrocarbon group, p represents an integer of from 1 to 3, L¹⁰¹ represents a single bond or a polyvalent organic linking group having one or more structures selected from the group consisting of -CONH-, -NHCONH-, -OCONH-, -SO₂NH-, and -SO₃-, L¹⁰² represents a single bond or a polyvalent organic linking group, x and y each represents a composition ratio, with x being 0<x<100 and y being 0<y<100, A¹⁰¹ represents -OH, -ORₐ, -CORₐ, -CO₂Rₑ, -CON(Rₐ)(R_{b}), - N(Rₐ)(R_{b}), -NHCOR_{d}, -NHCO₂Rₐ, -OCON(Rₐ)(R_{b}), -NHCON(Rₐ)(R_{b}), - SO₃Rₑ, -CSO₃Rₑ, -SO₂R_{d}, -NHSO₂R_{d}, -SO₂N(Rₐ)(R_{b}), -N(Rₐ)(R_{b})₍R_{c}), -N(Rₐ)(R_{b})(R_{c})(R_{g}), -PO₃(Re)(R_{f}), -OPO₃(Rₑ)(R_{f}) or -PO₃(R_{d})(Rₑ) (wherein Rₐ, R_{b}, and R_{c} each independently represents a hydrogen atom or a straight, branched or cyclic alkyl group, R_{d} represents a straight, branched or cyclic alkyl group, Rₑ and R_{f} each independently represents a hydrogen atom, a straight, branched or cyclic alkyl group, an alkali metal, an alkaline earth metal or an onium, and R_{g} represents a halogen ion, an inorganic anion or an organic anion.

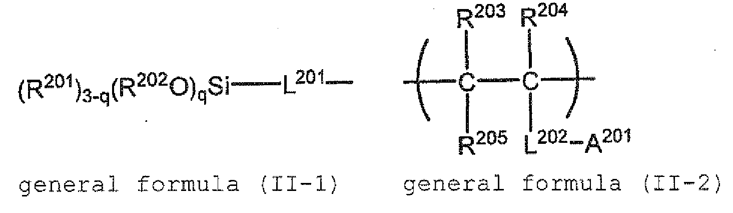

In the general formulae (II-1) and (II-2), R²⁰¹ to R²⁰⁵ each independently represents a hydrogen atom or a hydrocarbon group, q represents an integer of from 1 to 3, L²⁰¹ and L²⁰² each independently represents a single bond or a polyvalent organic linking group, A²⁰¹ represents -OH, - ORₐ, -CORₐ, ₋CO₂Rₑ, -CON(Rₐ)(R_{b}), -N(Rₐ)(R_{b}), -NHCOR_{d}, -NHCO₂Rₐ, -OCON(Rₐ)(R_{b}), -NHCON(Rₐ)(R_{b}), -SO₃Rₑ, -OS0₃Rₐ, -SO₂R_{d}, - NHSO₂R_{d}, -SO₂N(Rₐ)(R_{b}), -N(Rₐ)(R_{b})(R_{c}), -N(Rₐ)(R_{b})(R_{c})(R_{g}), - PO₃(Rₑ)(R_{f}), -OPO₃(Rₑ)(R_{f}) or -PO₃(R_{d})(Rₑ) (wherein Rₐ, R_{b}, and R_{c} each independently represents a hydrogen atom or a straight, branched or cyclic alkyl group, R_{d} represents a straight, branched or cyclic alkyl group, Rₑ and R_{f} each independently represents a hydrogen atom, a straight, branched or cyclic alkyl group, an alkali metal, an alkaline earth metal or an onium, and R_{g} represents a halogen ion, an inorganic anion or an organic anion.

The overcoat layer having a cross-linked structure formed by hydrolysis and polycondensation of a polymer having a hydrophilic group and a silane coupling group in the side chain and/or a polymer having a hydrophilic group in the side chain and a silane coupling group at the end of the polymer chain forms a film with a comparatively high strength due to formation of an organic-inorganic hybrid film having the cross-linked structure. Specifically, when the hydrophilic polymer (A) or the hydrophilic polymer (B) is dissolved and stirred in an appropriate solvent, hydrolysis and polycondensation proceed in the system to provide a sol-state hydrophilic composition and, when the composition is coated on a substrate and dried, there is formed on the surface of the substrate an organic-inorganic hybrid film having a cross-linked structure formed by reaction between the silane coupling group contained in the hydrophilic polymer (A) and the silane coupling group contained in the hydrophilic polymer (B).

Further, in the related art, high hydrophilicity is realized by localizing, upon formation of the hydrophilic layer, the hydrophilic polymer in a graft pattern on the surface through introduction of silane coupling group at the end of the hydrophilic polymer which serves to increase degree of freedom of the polymer chain and improve hydrophilicity for water. In the invention, in the case of using only the hydrophilic polymer (A), the fear is that hydrophilicity would be reduced since the above-described effect cannot be expected due to presence of the silane coupling group in the side chain. Actually, however, the same level of hydrophilicity as in the related art can be obtained seemingly because the silane coupling group and the polymer chain are linked to each other through a linking chain having high hydrophilicity.
Also, in the case of using the specific alkoxide (F), compatibility between this alkoxide and the specific hydrophilic polymer (A) is improved since the silane coupling group is introduced in the side chain of the polymer (A), and thus there can be obtained an organic-inorganic hybrid film wherein an organic component and an inorganic component are uniformly dispersed. This may be considered as the reason why a hydrophilic member having extremely excellent wear resistance can be obtained.
Also, in the case of using the hydrophilic polymer (A) and the hydrophilic polymer (B) as a mixture thereof, the above-described characteristics of the hydrophilic polymer (A) and presence of the silane coupling group at the end of the hydrophilic polymer (B) serve to orient the hydrophilic polymers in a graft pattern on the surface, which seems to provide extremely excellent hydrophilicity and wear resistance.

In the invention, in order to more improve adhesion between the substrate and the overcoat layer and improve flexibility of the entire film, it is necessary to provide an undercoat layer. The adhesion between the substrate and the overcoat layer can be realized by reaction between reactive group of the substrate surface and the reactive group of the overcoat layer. Actually, however, in the case where the substrate does not have so much reactivity, the overcoat layer can be closely adhered via an undercoat layer having many reactive groups. Also, use of a non-volatile catalyst in the undercoat layer enables the catalyst to exist in the film without volatilization and with keeping its activity in the course of the drying step in preparing a hydrophilic member. This permits the cross-linking reaction to further proceed with the lapse of time, leading to formation of a coated film with extremely high strength.
Further, since the non-volatile catalyst exists also at the interface between the substrate and the undercoat layer without losing its activity, the reaction also proceeds with the lapse of time at the interface between the undercoat layer and the substrate, which serves to realize high adhesion. Also, in the invention, use of an undercoat layer containing the specific alkoxide (C) and the specific alkoxysilane (D) serves to loosen the strong three-dimensional network of the sol-gel cross-linked structure, whereby an appropriate flexibility and an appropriate cross-linkage density can be imparted to the undercoat layer. Thus, it becomes possible to form a film which is flexible as an entire film on the substrate without losing adhesion between the substrate and the overcoat layer. A flexible film can provide a hydrophilic member having excellent wear resistance.
Also, since the film can have high adhesion and enough flexibility, a flexible substrate can be employed.

Each component contained in the hydrophilic member of the invention will be described below.

[Hydrophilic polymer (A) containing the structure represented by the general formula (I-1) and the structure represented by the general formula (1-2)]

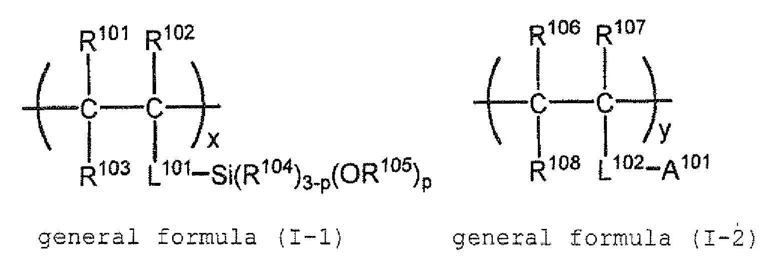

In the general formulae (I-1) and (1-2), R¹⁰¹ to R¹⁰⁸ each independently represents a hydrogen atom or a hydrocarbon group, p represents an integer of from 1 to 3, L¹⁰¹ represents a single bond or a polyvalent organic linking group having one or more structures selected from the group consisting of -CONH-, -NHCONH-, -OCONH-, -SO₂NH-, and -SO₃-, L¹⁰² represents a single bond or a polyvalent organic linking group, x and y each represents a composition ratio, with x being 0<x<100 and y being 0<y<100, A¹⁰¹ represents -OH, -ORₐ, -CORₐ, -CO₂Rₑ, -CON(Rₐ)(R_{b}), - N(Rₐ)(R_{b}), -NHCOR_{d}, -NHCO₂Rₐ, -OCON(Rₐ)(R_{b}), -NHCON(Rₐ)(R_{b}), - SO₃Rₑ, -OSO₃Rₑ, -SO₂R_{d}, -NHSO₂R_{d}, -SO₂N(Rₐ)(R_{b}), -N(Rₐ)(R_{b})(R_{c}), -N(Rₐ)(R_{b})(R_{c})(R_{g}), -PO₃(Rₑ)(R_{f}), -OPO₃(Rₑ)(R_{f}) or -PO₃(R_{d})(Rₑ) (wherein Rₐ, R_{b}, and R_{c} each independently represents a hydrogen atom or a straight, branched or cyclic alkyl group, R_{d} represents a straight, branched or cyclic alkyl group, Rₑ and R_{f} each independently represents a hydrogen atom, a straight, branched or cyclic alkyl group, an alkali metal, an alkaline earth metal or an onium, and R_{g} represents a halogen ion, an inorganic anion or an organic amnion.

In the general formulae (I-1) and (I-2), R¹⁰¹ to R¹⁰⁸ each independently represents a hydrogen atom or a hydrocarbon group. As the hydrocarbon group, there are illustrated an alkyl group, an aryl group, etc., with a straight, branched or cyclic alkyl group containing from 1 to 8 carbon atoms being preferred. Specifically, there are illustrated a methyl group, an ethyl group, a propyl group, a butyl group, a pentyl group, a hexyl group, a heptyl group, an octyl group, an isopropyl group, an isobutyl group, a s-butyl group, a t-butyl group, an isopentyl group, a neopentyl group, a 1-methylbutyl group, an isohexyl group, a 2-ethylhexyl group, a 2-methylhexyl group, and a cyclopentyl group. In view of effectiveness and availability, R¹⁰¹ to R¹⁰⁸ each preferably is a hydrogen atom, a methyl group or ethyl group.

These hydrocarbon groups may further have a substituent. When the alkyl group has a substituent, the substituted alkyl group is constituted by the substitute and an alkylene group connected to each other and, as the substituent, a monovalent non-metallic atom group except for a hydrogen atom is used. Preferred examples thereof include a halogen atom (-F, -Br, -Cl or -I), a hydroxyl group, an alkoxy group, an aryloxy group, a mercapto group, an alkylthio group, an arylthio group, an alkyldithio group, an aryldithio group, an amino group, an N-alkylamino group, an N,N-diarylamino group, an N-alkyl-N-arylamino group, an acyloxy group, a carbamoyloxy group, an N-alkylcarbamoyloxy group, an N-arylcarbamoyloxy group, an N,N-dialkylcarbamoyloxy group, an N,N-diarylcarbamoyloxy group, an N-alkyl-N-rylcarbamoyloxy group, an alkylsulfoxy group, an arylsulfoxy group, an acylthio group, an acylamino group, an N-alkylacylamino group, an N-arylacylamino group, a ureido group, an N'-alkylureido group, an N',N'-dialkylureido group, an N'-arylureido group, an N',N'-diarylureido group, an N'-alkyl-N'-arylureido group, an N-alkylureido group, an N-arylureido group, an N'-alkyl-N-alkylureido group, an N'-alkyl-N-arylureido group, an N',N'-dialkyl-N-alkylureido group, an N',N'-dialkyl-N-arylureido group, an N'-aryl-N-alkylureido group, an N'-aryl-N-arylureido group, an N',N'-diaryl-N-alkylureido group, an N',N'-diaryl-N-arylureido group, an N'-alkyl-N'-aryl-N-alkylureido group, an N'-alkyl-N'-aryl-N-arylureido group, an alkoxycarbonylamino group, an aryloxycarbonylamino group, an N-alkyl-N-alkoxycarbonylamino group, an N-alkyl-N-aryloxycarbonylamino group, an N-aryl-N-alkoxycarbonylamino group, an N-aryl-N-aryloxycarbonylamino group, a formyl group, an acyl group, a carboxyl group, an alkoxycarbonyl group,

an aryloxycarbonyl group, a carbamoyl group, an N-alkylcarbamoyl group, an N,N-dialkylcarbamoyl group, an N-arylcarbamoyl group, an N,N-diarylcarbamoyl group, an N-alkyl-N-arylcarbamoyl group, an alkylsulfinyl group, an arylsulfinyl group, an alkylsulfonyl group, anarylsulfonyl group, a sulfo group (-SO₃H) and a conjugate base group thereof (hereinafter referred to as a sulfonato group), an alkoxysulfonyl group, an aryloxysulfonyl group, a sulfinamoyl group, an N-alkylsulfinamoyl group, an N,N-dialkylsulfinamoyl group, an N-arylsulfinamoyl group, an N,N-diarylsulfinamoyl group, an N-alkyl-N-arylsulfinamoyl group, a sulfamoyl group, an N-alkylsulfamoyl group, an N,N-dialkylsulfamoyl group, an N-arylsulfamoyl group, an N,N-diarylsulfamoyl group, an N-alkyl-N-arylsulfamoyl group, a phosphono group (-PO₃H₂) and a conjugate base group thereof (hereinafter referred to as a phosphonato group), a dialkylphosphono group (-PO₃(alkyl)₂), a diarylphosphono group (-PO₃(aryl)₂), an alkylarylphosphono group (-PO₃(alkyl)(aryl)), a monoalkylphosphono group (-PO₃H(alkyl)) and a conjugate base group thereof (hereinafter referred to as an alkylphosphonato group), a monoarylphosphono group (-PO₃H(aryl)) and a conjugate base group thereof (hereinafter referred to as an arylphosphonato group), a phosphonoxy group (-OPO₃H₂) and a conjugate base group thereof (hereinafter referred to as a phosphonatoxy group), a dialkylphosphonoxy group (-OPO₃(alkyl)₂), a diarylphosphonoxy group (-OPO₃(aryl)₂), an alkylarylphosphonoxy group (-OPO(alkyl)(aryl)), a monoalkylphosphonoxy group (-OPO₃H(alkyl)) and a conjugate base group thereof (hereinafter referred to as an alkylphosphonatoxy group), a monoarylphosphonoxy group (-OPO₃H(aryl)) and a conjugate base group thereof (hereinafter referred to as an arylphosphonatoxy group), a morpholino group, a cyano group, a nitro group, an aryl group, an alkenyl group, and an alkynyl group.

As specific examples of the alkyl group in these substituents, there are similarly illustrated those alkyl groups which have been illustrated hereinbefore with respect to R¹⁰¹ to R¹⁰⁸ and, as specific examples of the aryl group, there can be illustrated a phenyl group, a biphenyl group, a naphthyl group, a tolyl group, a xylyl group, a mesityl group, a cumenyl group, a chlorophenyl group, a bromophenyl group, a chloromethylphenyl group, a hydroxyphenyl group, a methoxyphenyl group, an ethoxyphenyl group, a phenoxyphenyl group, an acetoxyphenyl group, a benzoyloxyphenyl group, a methylthiophenyl group, a phenylthiophenyl group, a methylaminophenyl group, a dimethylaminophenyl group, an acetylaminophenyl group, a carboxyphenyl group, a methoxycarbonylphenyl group, an ethoxyphenylcarbonyl group, a phenoxycarbonylphenyl group, an N-phenylcarbamoylphenyl group, a phenyl group, a cyanophenyl group, a sulfophenyl group, a sulfonatophenyl group, a phosphonophenyl group, and a phosphonatophenyl group. Also, as examples of the alkenyl group, there are illustrated a vinyl group, a 1-prapenyl group, a 1-butenyl group, a cinnamyl group, and a 2-chloro-l-ethenyl group and, as examples of the alkynyl group, there are illustrated an ethynyl group, a 1-propynyl group, a 1-butynyl group, and a trimethylsilylethynyl group. As G¹ in the acyl group (G¹CO-), there can be illustrated a hydrogen, and the above-described alkyl groups and aryl groups.

Of these substituents, a halogen atom (-F, -Br, -Cl or -I), an alkoxy group, an aryloxy group, an alkylthio group, an arylthio group, an N-alkylamino group, an N,N-dialkylamino group, an acyloxy group, an N-alkylcarbamoyloxy group, an N-arylcarbamoyloxy group, an acylamino group, a formyl group, an acyl group, a carboxyl group, an alkoxycarbonyl group, an aryloxycarbonyl group, a carbamoyl group, an N-alkylcarbamoyl group, an N,N-dialkylcarbamoyl group, an N-arylcarbamoyl group, an N-alkyl-N-arylcarbamoyl group, a sulfo group, a sulfonato group, a sulfamoyl group, an N-alkylsulfamoyl group, an N,N-dialkylsulfamoyl group, an N-arylsulfamoyl group, an N-alkyl-N-arylsulfamoyl group, a phosphono group, a phosphonato group, a dialkylphosphono group, a diarylphosphono group, a monoalkylphosphono group, an alkylphosphonato group, a monoarylphosphono group, an arylphosphonato group, a phosphonoxy group, a phosphonatoxy group, an aryl group, and an alkenyl group are more preferred.

On the other hand, as the alkylene group in the substituted alkyl group, there can be illustrated preferably those which are formed by removing any one of the hydrogen atoms of the aforesaid alkyl group containing from 1 to 20 carbon atoms to leave a divalent organic residue and, more preferably, there can be illustrated straight alkylene groups containing from 1 to 12 carbon atoms, still more preferably, from 1 to 8 carbon atoms, branched alkylene groups containing from 3 to 12 carbon atoms, still more preferably, from 3 to 8 carbon atoms, and cyclic alkylene groups containing from 5 to 10 carbon atoms, still more preferably, from 5 to 8 carbon atoms,. As preferred specific examples of the substituted alkyl group obtained by combining the substituent and the alkylene group, there can be illustrated a chloromethyl group, a bromomethyl group, a 2-chloroethyl group, a trifluoromethyl group, a hydroxymethyl group, a methoxymethyl group, a methoxyethoxyethyl group, an allyloxymethyl group, a phenoxymethyl group, a methylthiomethyl group, a tolylthiomethyl group, an ethylaminoethyl group, a diethylaminopropyl group, a morpholinopropyl group, an acetyloxymethyl group, a benzoyloxymethyl group, an N-cyclohexylcarbamoyloxyethyl group, an N-phenylcarbamoyloxyethyl group, an acetylaminoethyl group, an N-methylbenzoylaminopropyl group, a 2-hydroxyethyl group, a 2-hydroxypropyl group, a carboxypropyl group, a methoxycarbonylethyl group, an allyloxycarbonylbutyl group,

a chlorophenoxycarbonylmethyl group, a carbamoylmethyl group, an N-methylcarbamoylethyl group, an N,N-dipropylcarbamoylmethyl group, an N-(methoxyphenyl)carbamoylethyl group, an N-methyl-N-(sulfophenyl)carbamoylmethyl group, a sulfobutyl group, a sulfonatobutyl group, a sulfamoylbutyl group, an N-ethylsulfamoylmethyl group, an N,N-dipropylsulfamoylpropyl group, an N-tolylsulfamoylpropyl group, an N-methyl-N-(phosphonophenyl)sulfamoyloctyl group, a phosphonobutyl group, a phosphonatohexyl group, a diethylphosphonobutyl group, a diphenylphosphonopropyl group, a methylphosphonobutyl group, a methylphosphonatobutyl group, a tolylphosphonohexyl group, a tolylphosphonatohexyl group, a phosphonoxypropyl group, a phosphonatoxybutyl group, a benzyl group, a phenethyl group, an α-methylbenzyl group, a 1-methyl-1-phenylethyl group, a p-methylbenzyl group, a cinnamyl group, an allyl group, a 1-propenylmethyl group, a 2-butenyl group, a 2-methylallyl group, a 2-methylpropenylmethyl group, a 2-propynyl group, a 2-butynyl group, and a 3-butynyl group. In view of hydrophilicity, a hydroxymethyl group is particularly preferred.

In view of hydrophilicity, a hydroxymethyl group is preferred among the above-described groups.

L¹⁰² represents a single bond or an organic linking group. Here, the term "single bond" means that the main chain of the polymer and X are directly connected to each other without any linking chain. In the case where L¹⁰² represents an organic linking group, L¹⁰² represents a polyvalent linking group comprising non-metallic atoms of from 0 to 60 carbon atoms, from 0 to 10 nitrogen atoms, from 0 to 50 oxygen atoms, from 0 to 100 hydrogen atoms, and from 0 to 20 sulfur atoms. Specifically, a preferred one is selected from among -N<, an aliphatic group, an aromatic group, a heterocyclic group, and a combination thereof, and L¹⁰² is preferably -O-, -S-, -CO-, -NH- or a divalent linking group comprising a combination containing -O-, -S-, -CO- or -NH-. As more specific linking groups, there can be illustrated those which are constituted by the following structural units or a combination thereof.

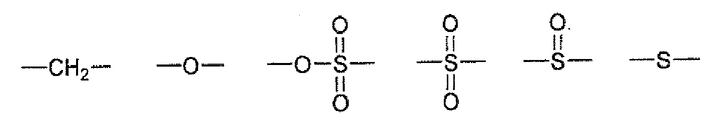

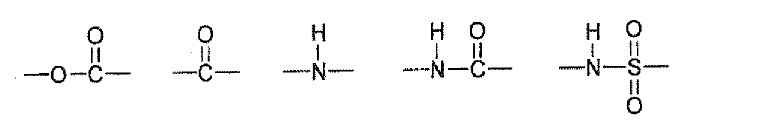

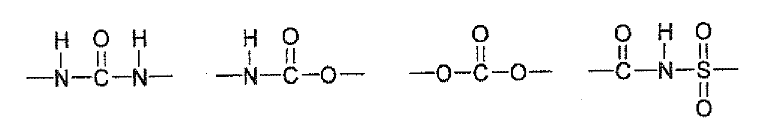

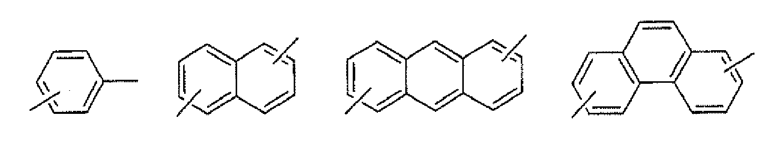

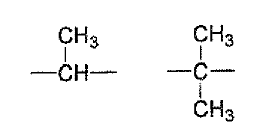

In the general formula (I-1), L¹⁰¹ is a single bond or a linking group containing one or more structures selected from the group consisting of -CONH-, -NHCONH-, - OCONH-, -SO₂NH-, and -SO₃H.

In the general formula (1-2), A¹⁰¹ represents -OH, - ORₐ, -CORₐ, -CO₂Rₑ, -CON(Rₐ)(R_{b}), -N(Rₐ)(R_{b}), -NHCOR_{d}-, - NHCO₂Rₐ, -OCON(Rₐ)(R_{b}), -NHCON(Rₐ)(R_{b}), -SO₃Rₑ, -OSO₃Rₑ, -SO₂R_{d}, -NHSO₂R_{d}, -SO₂N(Rₐ)(R_{b}), -N(Rₐ)(R_{b})(R_{c}), -N(Rₐ)(R_{b})(R_{c})(R_{g}), - Po₃(Rₑ)(R_{f}), -OPO₃(Rₑ)(R_{f}) or -PO₃(R_{d})(Rₑ). Here, Rₐ, R_{b}, and R_{c} each independently represents a hydrogen atom or a straight, branched or cyclic alkyl group (containing preferably from1 to 8 carbon atoms), R_{d} represents a straight, branched or cyclic alkyl group (containing preferably from 1 to 8 carbon atoms), Rₑ and R_{f} each independently represents a hydrogen atom, a straight, branched or cyclic alkyl group (containing preferably from1 to 8 carbon atoms), an alkali metal, an alkaline earth metal or an onium, and R_{g} represents a halogen ion, an inorganic anion or an organic anion. Also, with - CON(Rₐ)(R_{b}), -N(Rₐ)(R_{b}), -OCON(Rₐ)(R_{b}), -NHCON(Rₐ)(R_{b}), - SO₂N(Rₐ)(R_{b}), -N(Rₐ)(R_{b})(R_{c}), -N(Rₐ)(R_{b})(R_{c})(R_{g}), PO₃(Rₑ)(R_{f}), -OPO₃(Rₑ)(R_{f}) or -PO₃(R_{d})(Rₑ), Rₐ to R_{g} may be connected to each other to form a ring, and the formed ring may be a heterocyclic ring which contains a hetero atom such as oxygen atom, sulfur atom, nitrogen atom or the like. Rₐ to R_{g} may further have a substituent and, as the introducible substituent, there can similarly be illustrated those which have been illustrated hereinbefore as substituents introducible in the case where R¹ to R⁸ are alkyl groups.

As the straight, branched or cyclic alkyl group for Rₐ to R_{f}, there are preferably illustrated, specifically, a methyl group, an ethyl group, a propyl group, a butyl group, a pentyl group, a hexyl group, a heptyl group, an octyl group, an isopropyl group, an isobutyl group, a s-butyl group, a t-butyl group, an isopentyl group, a neopentyl group, a 1-methylbutyl group, an isohexyl group, a 2-ethylhexyl group, a 2-methylhexyl group, and a cyclopentyl group.
Also, as the alkali metal for Rₐ to R_{g}, there are illustrated an alkali metal such as lithium, sodium or potassium; an alkaline earth metal such as barium; and onium such as ammonium, iodonium or sulfonium.
As the halogen ion, there can be illustrated a fluorine ion, chlorine ion, and bromine ion. As the inorganic anion, there are preferably illustrated a nitrate anion, a sulfate anion, a tetrafluoroborate anion, and a hexafluorophosphate anion and, as the organic anion, there are preferably illustrated a methanesulfonate anion, a trifluoromethanesulfonate anion, a nonafluorobutanesulfonate anion, and a p-toluenesulfonate anion.

As A¹⁰¹, specifically, -NHCOCH₃, -CONH₂, -CON(CH₃)₂, -COOH, -SO₃⁻NMe₄⁺, -SO₃⁻K⁺, -(CH₂CH₂O)ₙH, a morpholyl group, etc. are preferred. -NHCOCH₃, -CONH₂, -CON(CH₃)₂, -SO₃⁻K⁺, and -(CH₂CH₂O)ₙH are more preferred. Additionally, in the above description, n represents preferably an integer of from 1 to 100.

p represents an integer of from 1 to 3, preferably 2 or 3, more preferably 3.

In the hydrophilic polymer containing the structure represented by the general formula (I-1) and the structure represented by the general formula (I-2), x and y each represents a composition ratio of the structure unit represented by the general formula (I-1) and the structure unit represented by the general formula (I-2), with x being 0<x<100 and y being 0<y<100. x is preferably in the range of 1<x<90, more preferably in the range of 1<x<50. y is preferably in the range of 10<x<99, more preferably in the range of 50<x<99.

The copolymerization proportion of the structure represented by the general formula (I-1) and the structure represented by the general formula (1-2) in the hydrophilic polymer (A) can be arbitrarily determined so that the amount of the unit of the general formula (I-2) having the hydrophilic group falls within the above-described range. The molar ratio (y) of the structural unit of the general formula (1-2) to the molar ratio (x) of the structural unit of the general formula (I-1) having the hydrolysable silyl group, y/x, is preferably in the range of from 30/70 to 99/1, more preferably from 40/60 to 98/2, most preferably from 50/50 to 97/3. When y/x is equal to or more than 30/70, there results sufficient hydrophilicity whereas, when y/x is eual to or less than 99/1, the amount of the hydrolyzable silyl group becomes enough to provide sufficient hardness and sufficient film strength.

The weight-average molecular weight of the polymer containing the structure represented by the general formula (I-1) and the structure represented by the general formula (1-2) is preferably from 1,000 to 1,000,000, more preferably from 1,000 to 500,000, most preferably from 1,000 to 200,000.

Specific examples of the hydrophilic polymer containing the structure represented by the general formula (I-1) and the structure represented by the general formula (1-2) will be described below together with the weight-average molecularweights (M.W.) thereof. However, the invention is not limited at all by them. Additionally, the specific polymers shown below mean random copolymers or block copolymers containing respective structural units in the described molar ratios.

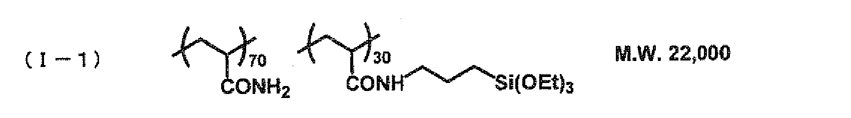

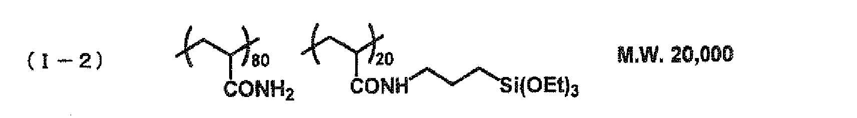

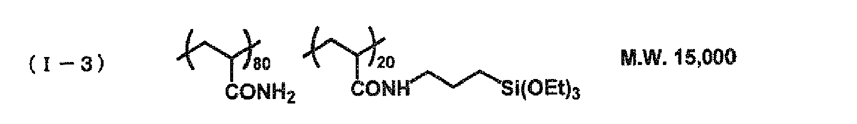

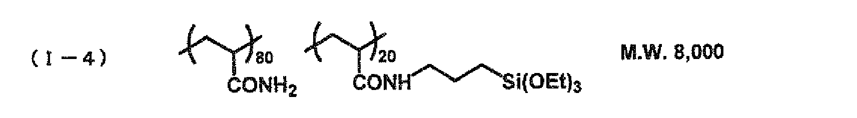

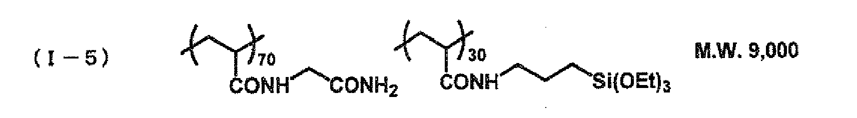

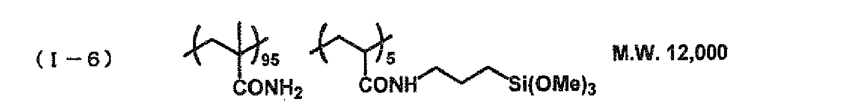

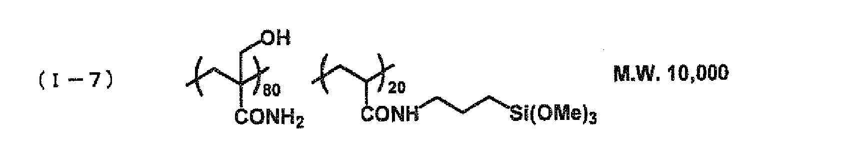

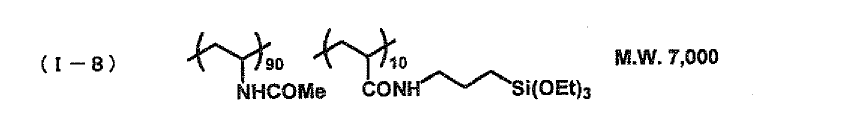

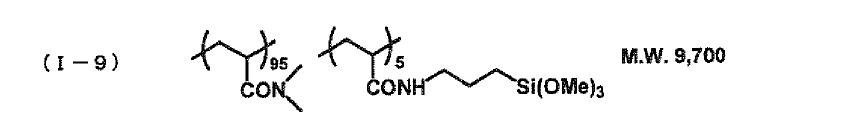

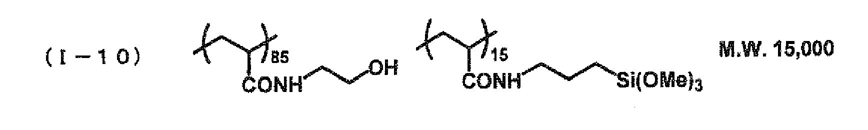

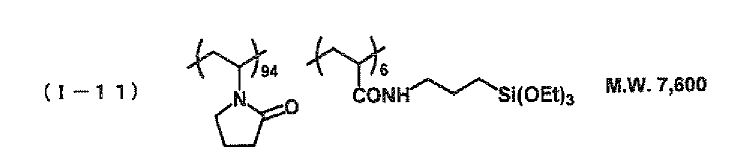

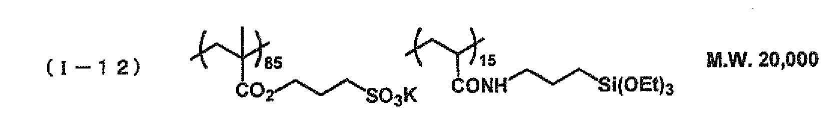

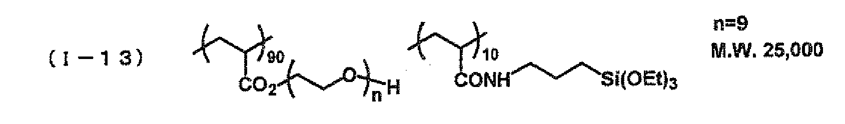

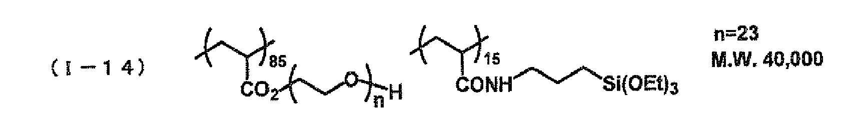

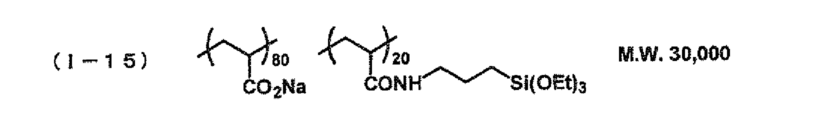

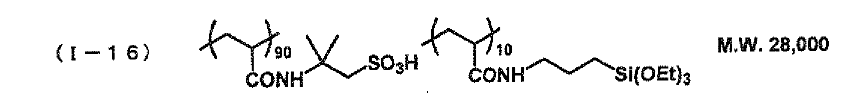

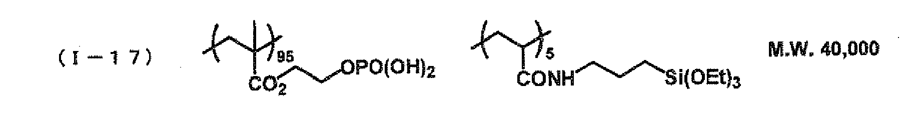

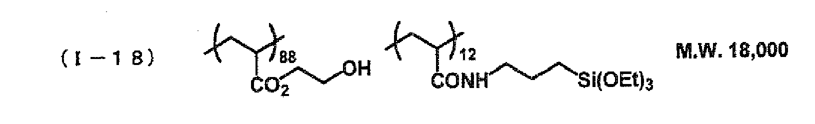

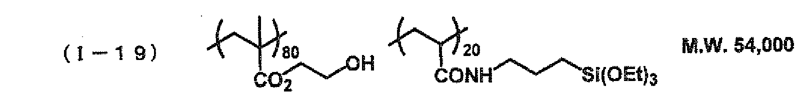

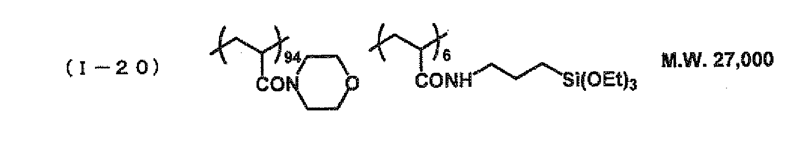

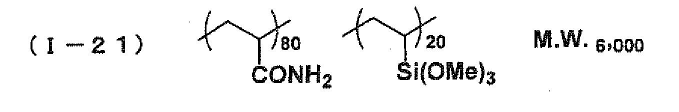

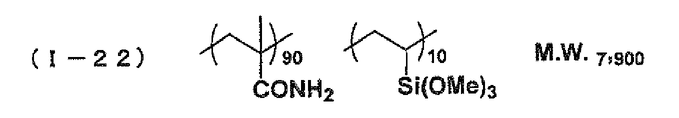

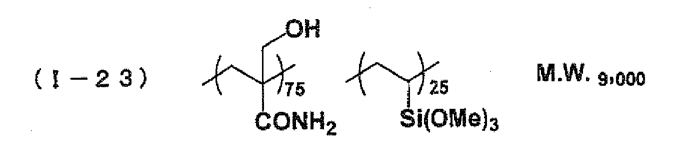

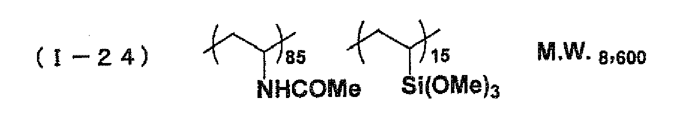

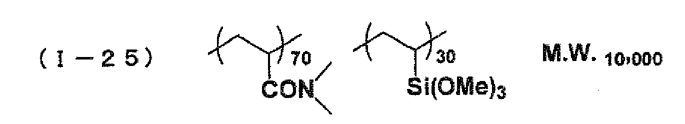

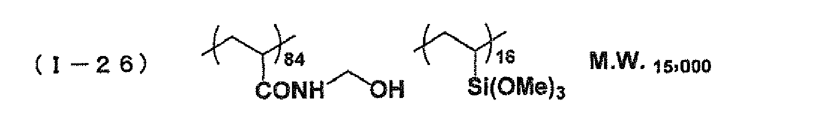

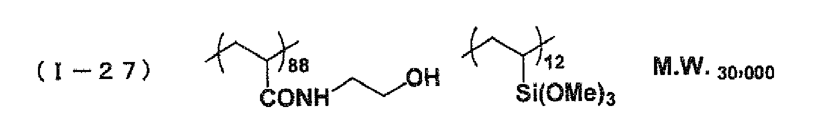

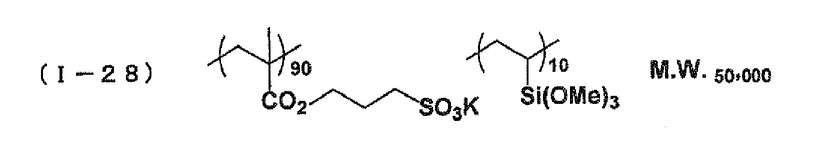

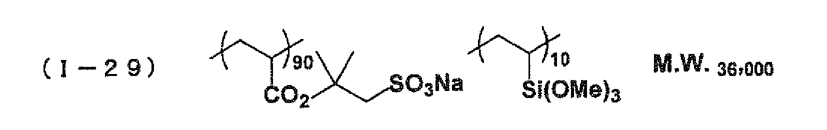

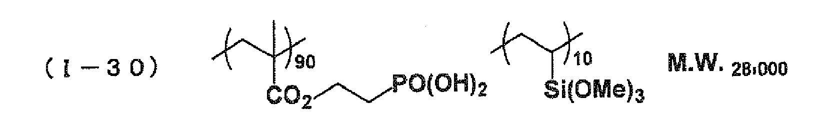

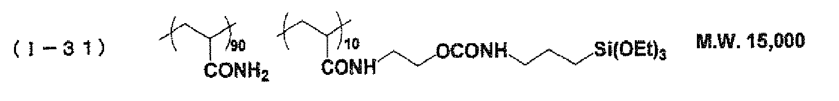

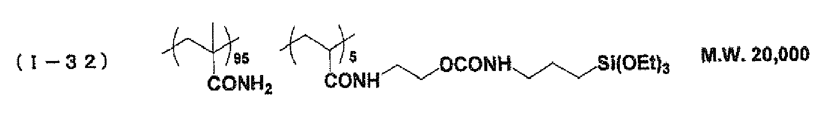

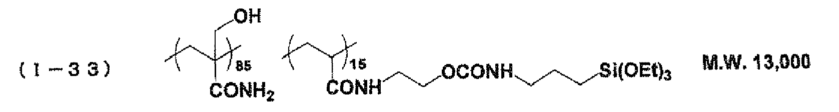

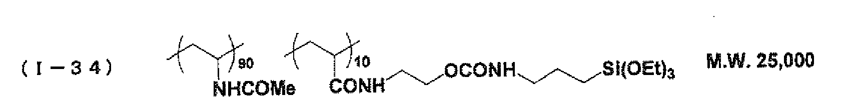

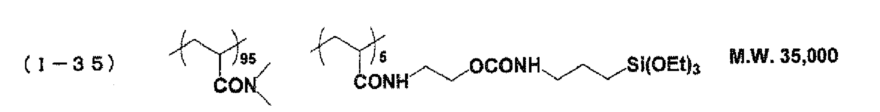

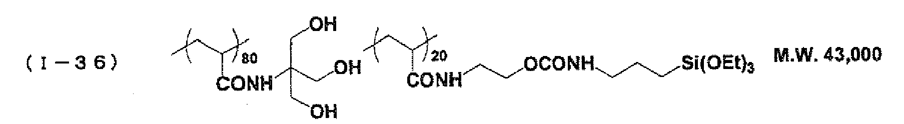

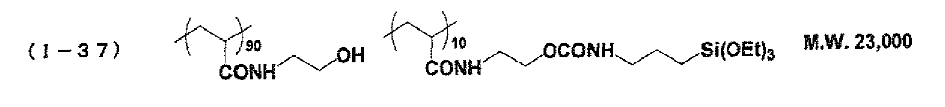

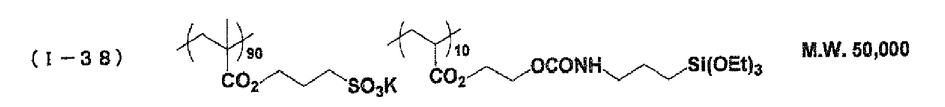

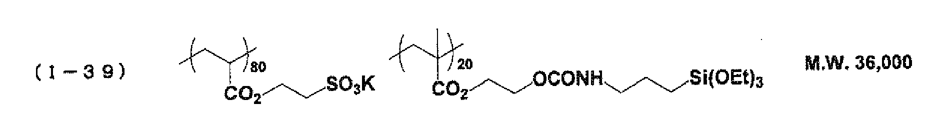

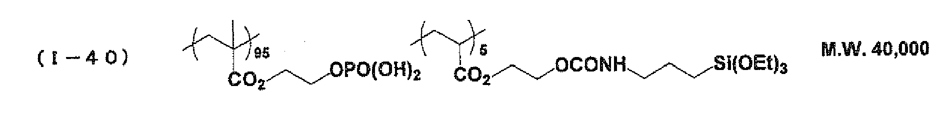

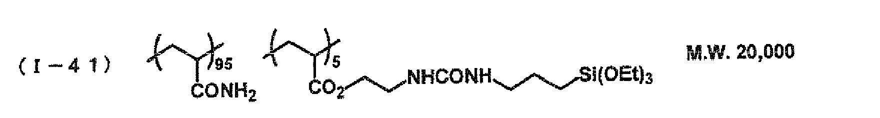

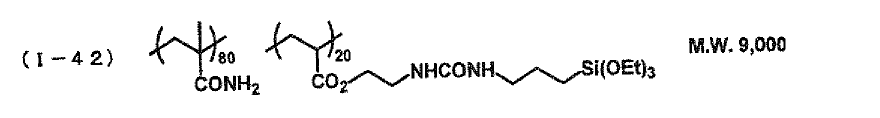

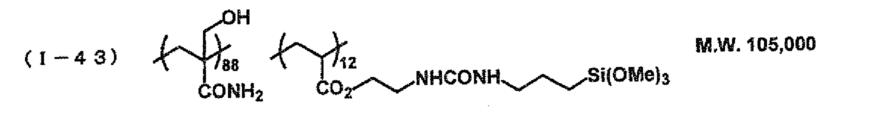

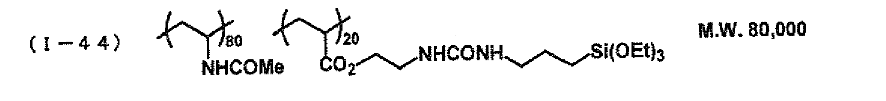

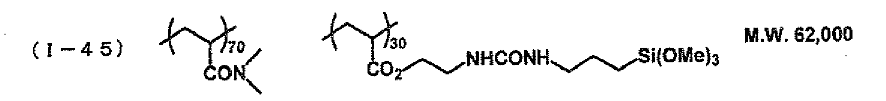

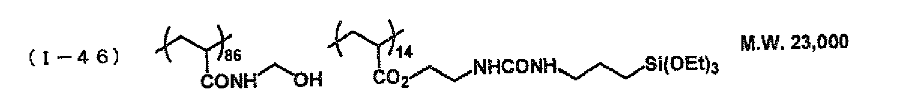

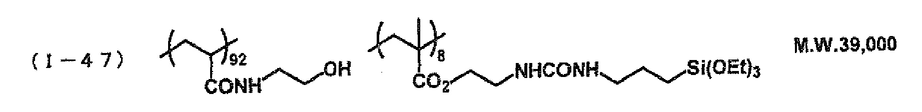

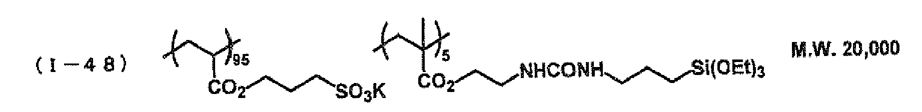

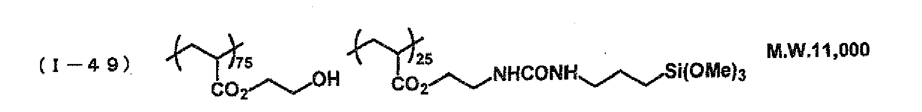

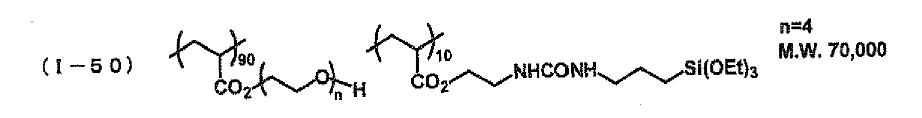

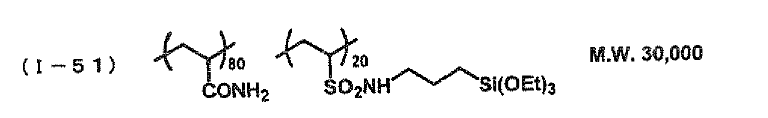

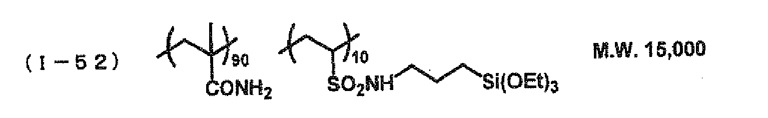

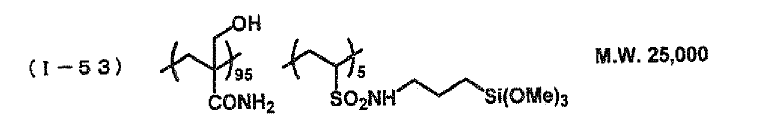

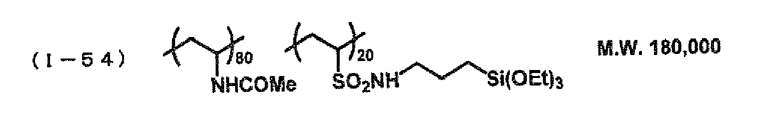

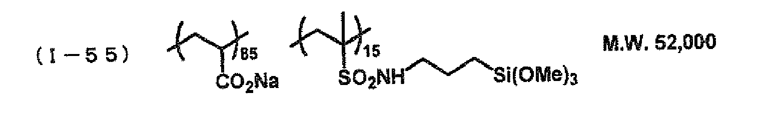

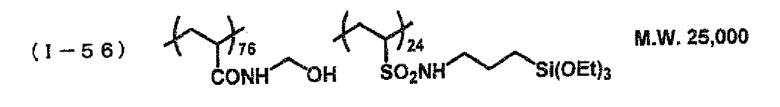

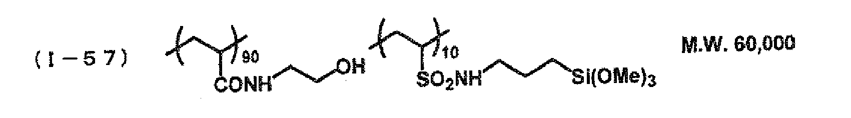

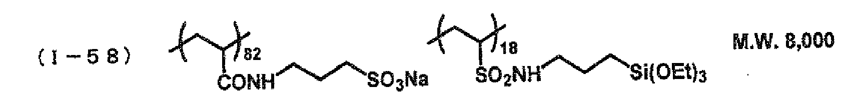

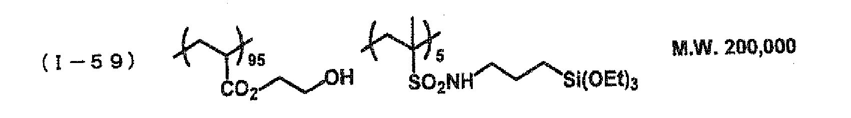

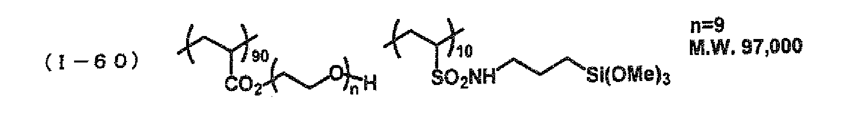

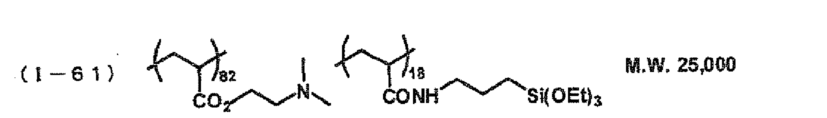

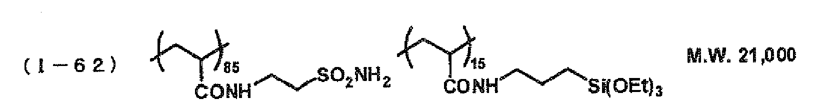

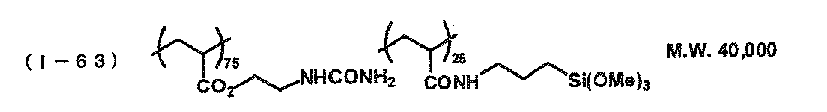

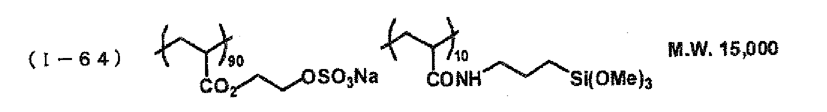

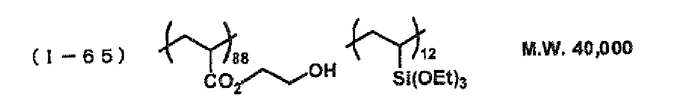

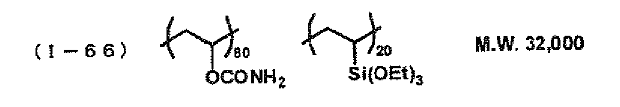

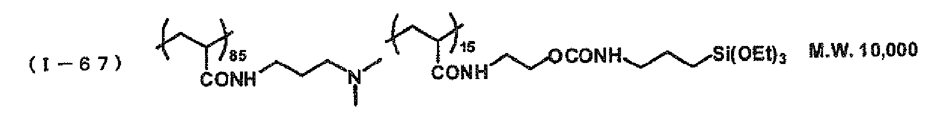

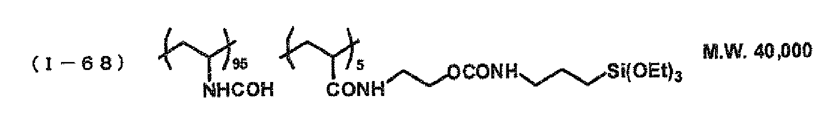

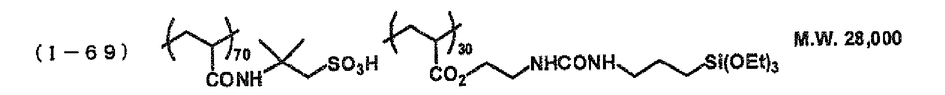

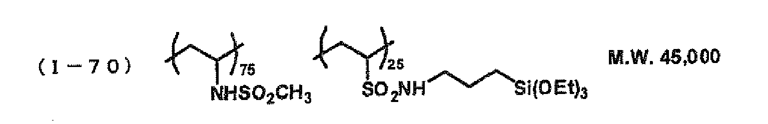

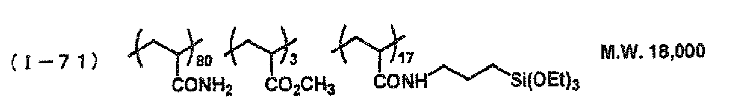

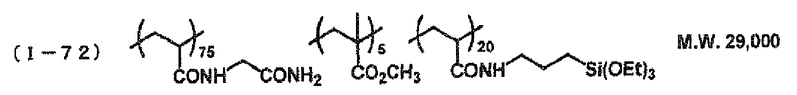

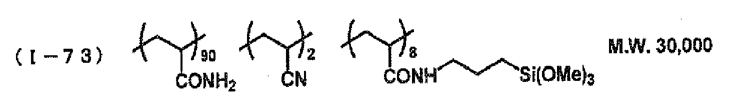

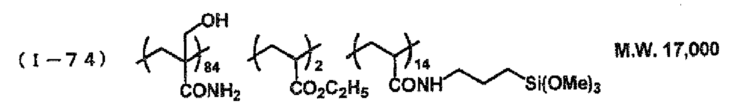

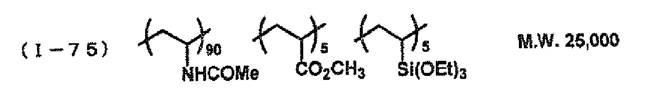

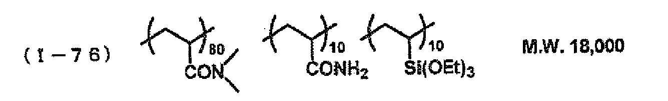

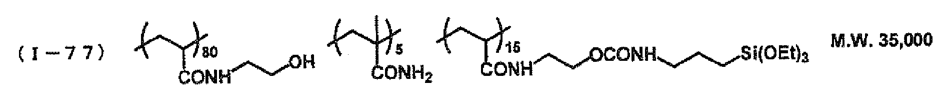

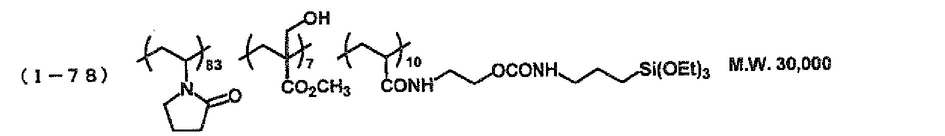

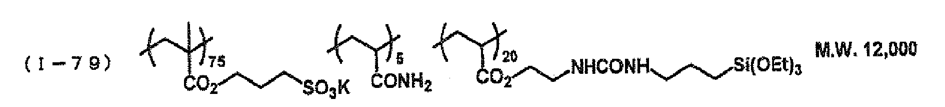

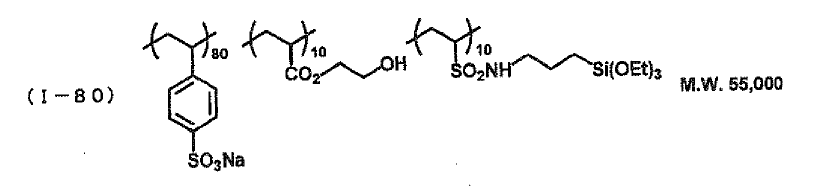

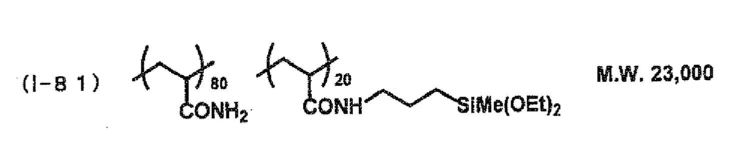

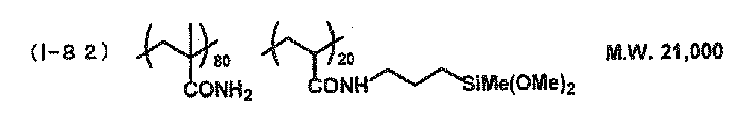

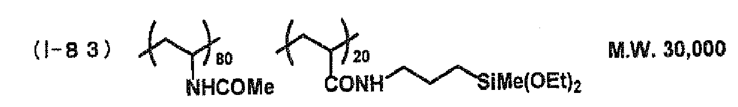

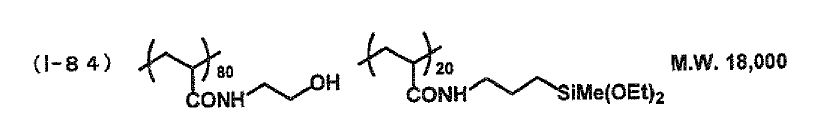

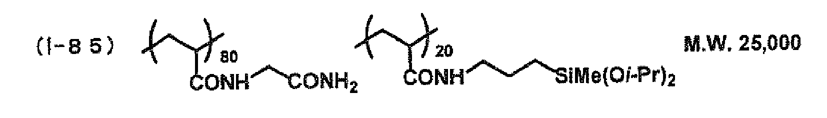

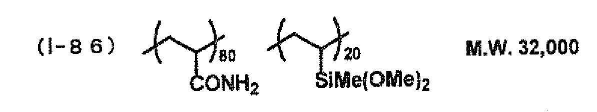

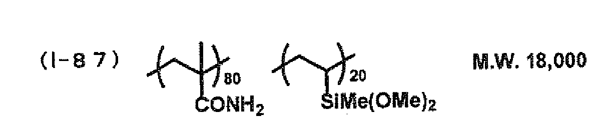

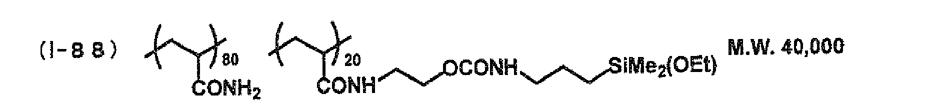

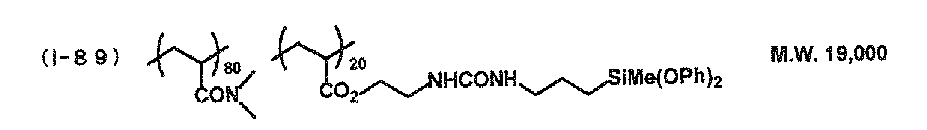

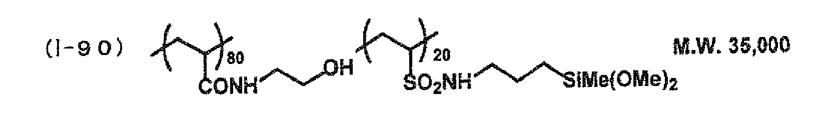

Respective compounds for synthesizing the hydrophilic polymer containing the structure represented by the general formula (I-1) and the structure represented by the general formula (I-2) are commercially available, and also can readily be synthesized.
As the radical polymerization for synthesizing the hydrophilic polymer containing the structure represented by the general formula (I-1) and the structure represented by the general formula (I-2), any of conventionally known methods can be used.
Specifically, general radical polymerization methods are described in, for example, Shin Kobunshi Jikken-gaku 3 (edited by Kyoritsu Shuppan in year 1999), Kobunshi No Gosei To Hanno 1 (compiled by The Society of Polymer Science and published by Kyoritsu Shuppan in year 1992); Shin Jikken Kagaku Koza 19 (edited by Maruzen in year 1978), Kobunshi Kagaku (I) (edited by The Chemical Society of Japan, Maruzen, 1996); and Busshitus Kogaku Koza, Kobunshi Gosei Kagaku (the publishing department of Tokyo Denki University in year 1995), and these methods can be employed.

[(B) Hydrophilic polymer containing the structural unit represented by the general formula (II-1) and the structural unit represented by the general formula (II-2)]

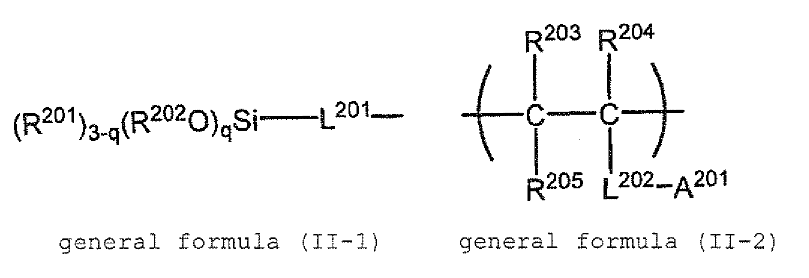

In the general formulae (II-1) and (II-2), R²⁰¹ to R²⁰⁵ each independently represents a hydrogen atom or a hydrocarbon group. q represents an integer of from 1 to 3, and L²⁰¹ and L²¹² each represents a single bond or a polyvalent organic linking group. A²⁰¹ represents -OH, -ORₐ, -CORₐ, -CO₂Rₑ, -CON(Rₐ)(R_{b}), -N(Rₐ)(R_{b}), -NHCOR_{d}-, -NHCO₂Rₐ, - OCON(Rₐ)(R_{b}), -NHCON(Rₐ)(R_{b}), -SO₃Rₑ, -OSO₃Rₑ, -SO₂R_{d}, -NHSO₂R_{d}, -SO₂N(Pₐ)(R_{b}), -N(Rₐ)(R_{b})(R_{c}), -N(Rₐ)(R_{b})(R_{c})(R_{g}), -PO₃(Rₑ)(R_{f}), -OPO₃(Rₑ)(R_{f}) or -PO₃(R_{d})(Rₑ). Here, Rₐ, R_{b}, and R_{c} each independently represents a hydrogen atom or a straight, branched or cyclic alkyl group, R_{d} represents a straight, branched or cyclic alkyl group, Rₑ and R_{f} each independently represents a hydrogen atom, a straight, branched or cyclic alkyl group, an alkali metal, an alkaline earth metal or an onium, and R_{g} represents a halogen ion, an inorganic anion or an organic anion.

The hydrophilic polymer (B) containing the structural unit represented by the general formula (II-1) and the structural unit represented by the general formula (II-2) preferably has the structural unit represented by the above general formula (II-2) and preferably has the partial structure represented by the above general formula (II-1) at the end of the polymer chain.

In the foregoing general formulae (II-1) and (II-2), R²⁰¹ to R²⁰⁵ each independently represents a hydrogen atom or a hydrocarbon group. As the hydrocarbon group when R²⁰¹ to R²⁰⁵ each represents a hydrocarbon group, there are illustrated an alkyl group, an aryl group, and the like, with a straight, branched or cyclic alkyl group containing from 1 to 8 carbon atoms being preferred. Specifically, there can be illustrated similar ones that have been illustrated hereinbefore with respect to R¹⁰¹ to R¹⁰⁸ in the foregoing general formulae (I-1) and (I-2).
L²⁰¹ and L²⁰² each independently represents a single bond or a polyvalent organic linking group. Here, the term "single bond" means that the main chain of the polymer is directly connected to A²⁰¹ or Si atom without any linking group. In the case where L²⁰¹ and L²⁰² each represents a polyvalent organic linking group, specific examples and preferred examples thereof are similar to those which have been illustrated with respect to L¹⁰² in the foregoing general formula (I-1).
A²⁰¹ represents -OH, -ORₐ, -CORₐ, -CO₂Rₑ, -CON(Rₐ)(R_{b}), - N(Rₐ)(R_{b}), -NHCOR_{d}-, -NHCO₂Rₐ, -OCON(Rₐ)(R_{b}), -NHCON(Rₐ)(R_{b}), -SO₃Rₑ, -OSO₃Rₑ, -SO₂R_{d}, -NHSO₂R_{d}, -SO₂N(Rₐ)(R_{b}), -N(Rₐ)(R_{b})(R_{c}), -N(Rₐ)(R_{b})(R_{c})(R_{g}), -PO₃(Rₑ)(R_{f}), -OPO₃(Rₑ)(R_{f}) or -PO₃(R_{d})(Rₑ). Specific examples and preferred examples of A²⁰¹ are similar to those which have been illustrated with respect to A¹⁰¹ in the foregoing general formula (I-2).
q represents an integer of from 1 to 3, preferably 2 or 3, more preferably 3.

L²⁰¹ and L²⁰² more preferably represent -CH₂CH₂CH₂-S-, -CH₂S-, -CONHCH(CH₃)CH₂-, -CONH-, -CO-, -CO₂-, and -CH₂-.

The hydrophilic polymer containing the structures represented by the general formulae (II-1) and (II-2) can be synthesized by, for example, radical polymerization of a hydrophilic monomer (for example, acrylamide, acrylic acid, or a potassium salt of 3-sulfopropyl methacrylate) in the presence of a chain transfer agent (described in Kanji Kamachi and Tsuyoshi Endo, Radical Polymerization Handbook, NTS) or Iniferter (described in Macromolecules, 1986, 19, pages 287, et seq., Otsu). Examples of the chain transfer agent include 3-mercaptopropionic acid, 2-aminoethanethiol hydrochloride, 3-mercaptopropanol, 2-hydroxyethyl disulfide, and 3-mercaptopropyl trimethoxysilane. Also, a hydrophilic monomer (for example, acrylamide) may be radical polymerized by using a radical polymerization initiator having a reactive group without using a chain transfer agent.

The hydrophilic polymer containing the structural unit represented by the general formula (II-1) and the structural unit represented by the general formula (II-2) can be synthesized by radical polymerization of a radical polymerizable monomer represented by the following general formula (i) by using a silane coupling agent having chain transfer ability in radical polymerization as represented by the following formula (ii). Since the silane coupling agent (ii) has chain transfer ability, a polymer in which a silane coupling group is introduced in an end of the main chain of the polymer in the radical polymerization can be synthesized.

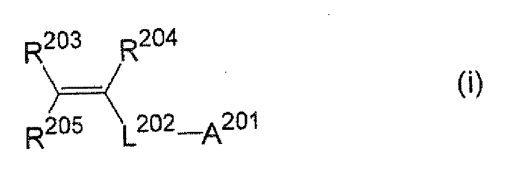

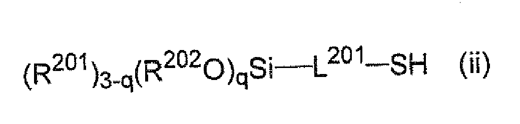

In the above general formulae (i) and (ii), R²⁰¹ to R²⁰⁵, L²⁰¹_{,} L²⁰², A²⁰¹ and q are the same as those in the foregoing general formulae (II-1) and (II-2). These compounds are commercially available or can be readily synthesized. The radical-polymerizable monomer represented by the general formula (i) contains a hydrophilic group A²⁰¹, and this monomer constitutes one structural unit in the hydrophilic polymer.

In the hydrophilic polymer (B) containing both the structural unit represented by the general formula (II-1) and the structural unit represented by the general formula (II-2), the mol number of the structural unit of the general formula (II-2) is preferably from 1000 to 10 times, more preferably from 500 to 20 times, most preferably from 200 to 30 times, as much as the mol number of the hydrolyzable silyl group-containing structural unit represented by the general formula (II-1). When the mol number of the structural unit of the general formula (II-2) is at least 30 times as much as that of the structural unit of the general formula (II-1), sufficient hydrophilicity can be obtained whereas, when the mol number of the structural unit of the general formula (II-2) is not more than 200 times as much as that of the structural unit of the general formula (II-1), the amount of the hydrolyzable silyl group becomes enough to provide sufficient hardness and sufficient film strength.

The weight-average molecular weight of the hydrophilic polymer (B) containing the structural unit represented by the general formula (II-1) and the structural unit represented by the general formula (II-2) is preferably from 1,000 to 1,000,000, more preferably from 1,000 to 500,000, most preferably from 1,000 to 200,000.

Specific examples of the hydrophilic polymer (B) which can preferably be used in the invention will be described below. However, the invention is not limited by them at all. In the specific examples, * shows the point of attachment to the polymer.

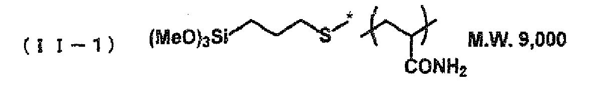

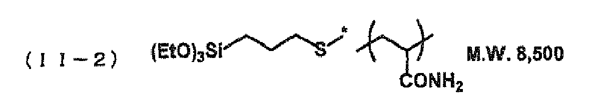

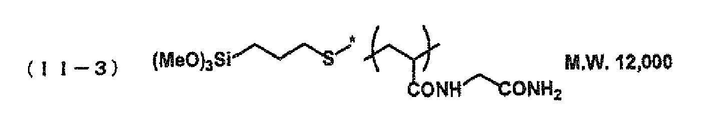

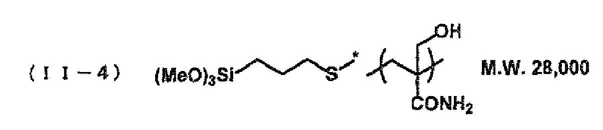

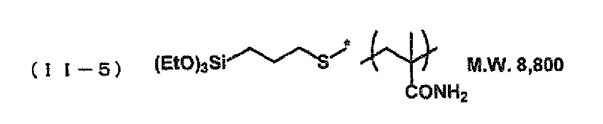

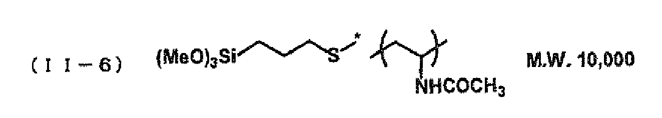

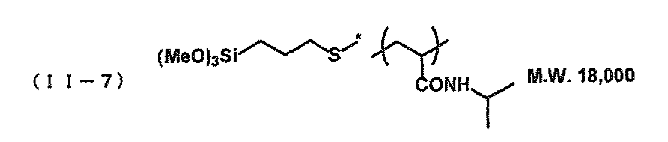

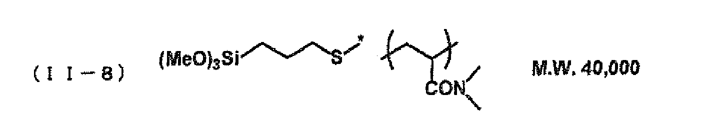

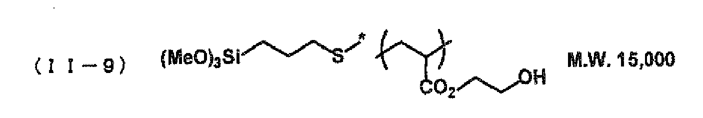

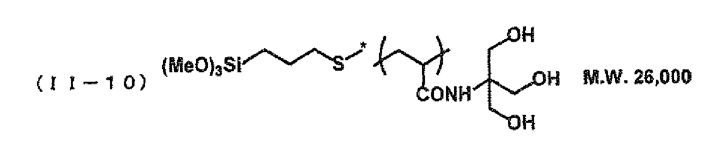

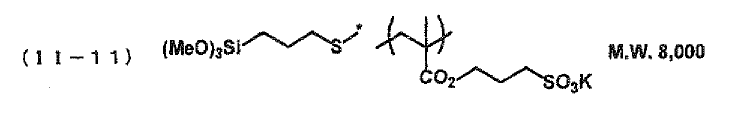

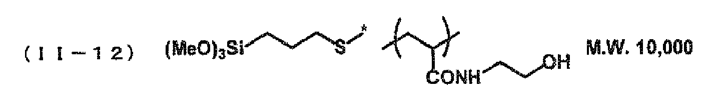

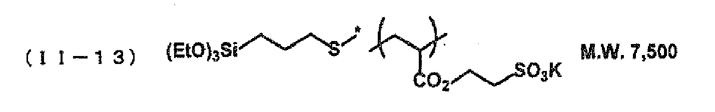

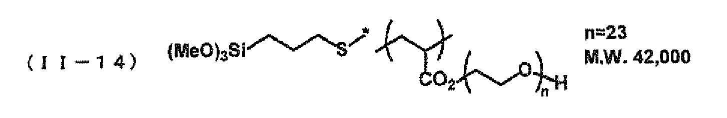

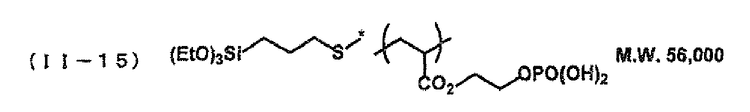

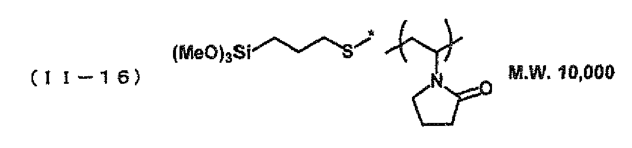

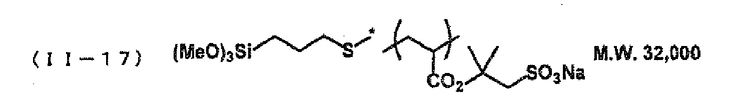

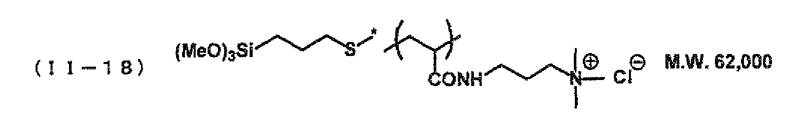

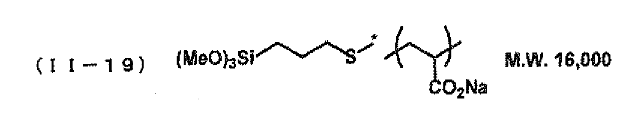

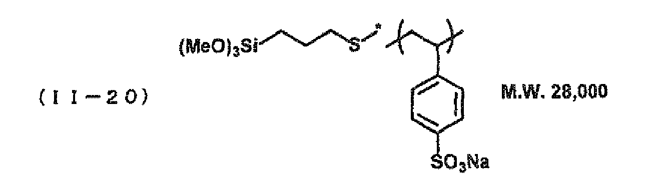

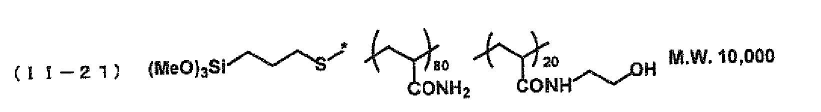

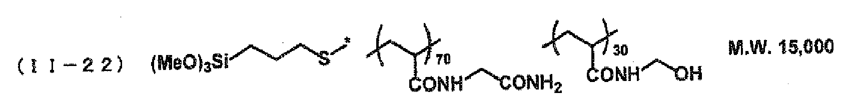

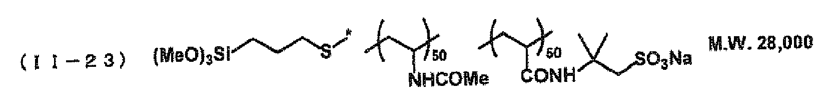

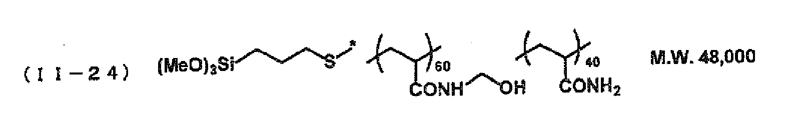

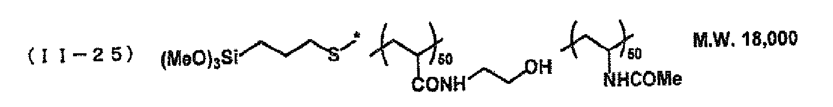

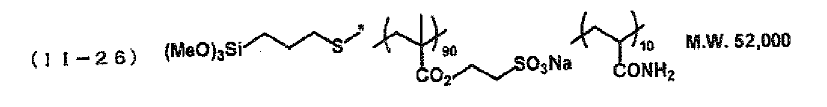

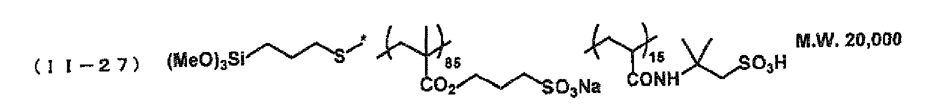

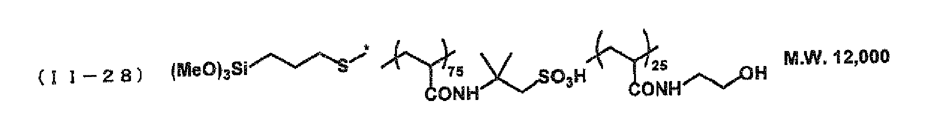

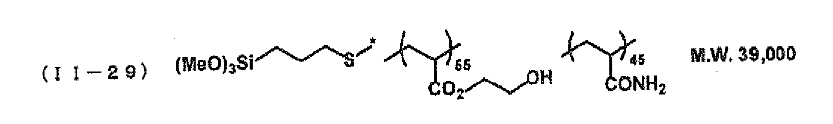

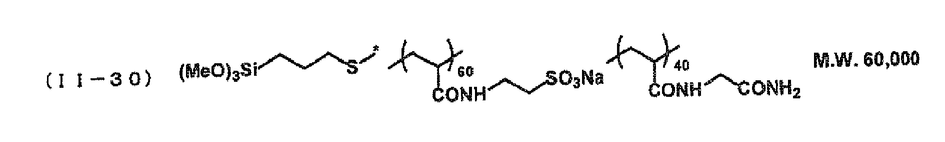

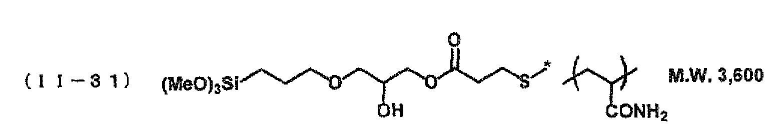

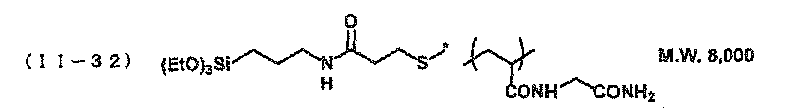

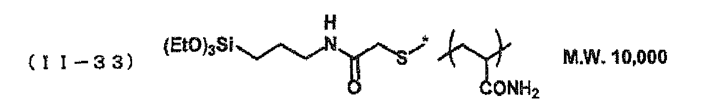

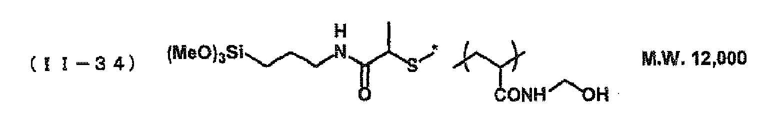

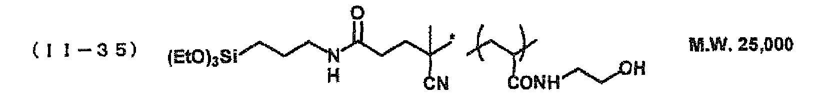

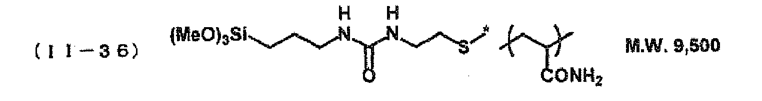

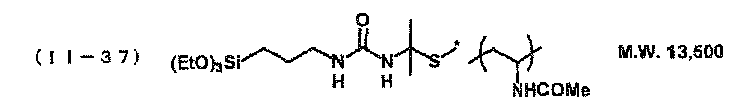

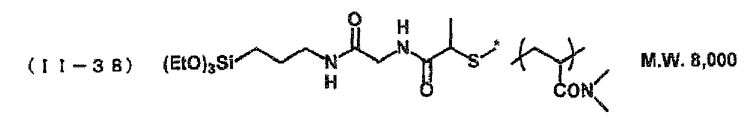

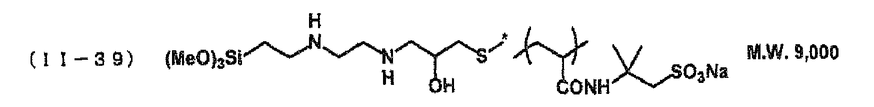

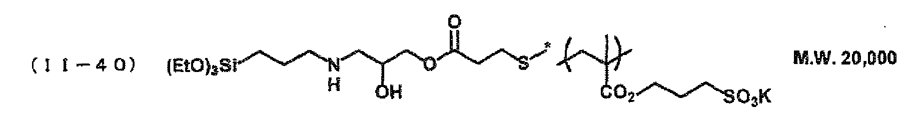

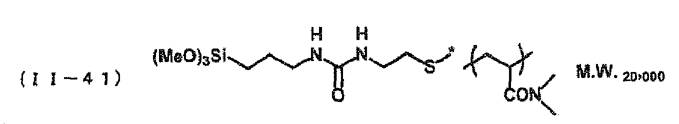

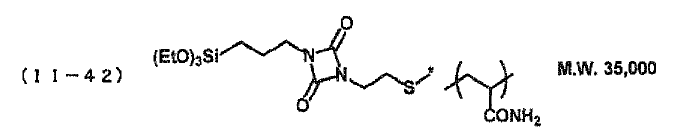

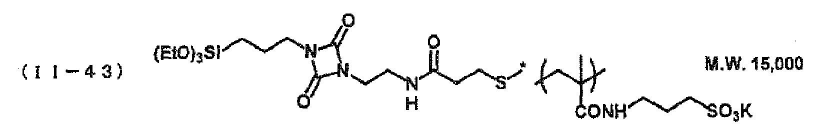

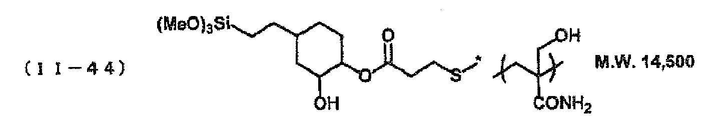

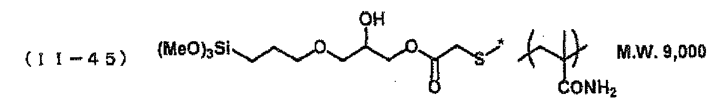

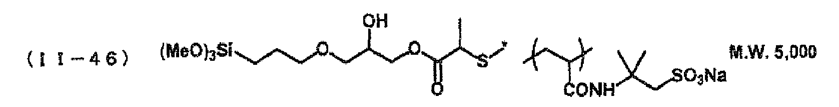

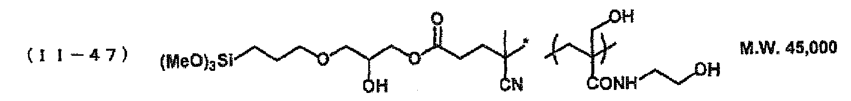

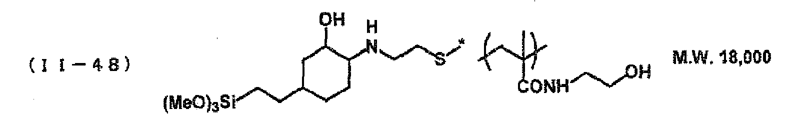

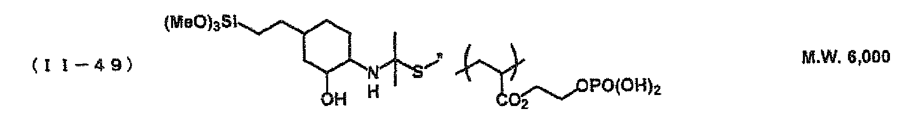

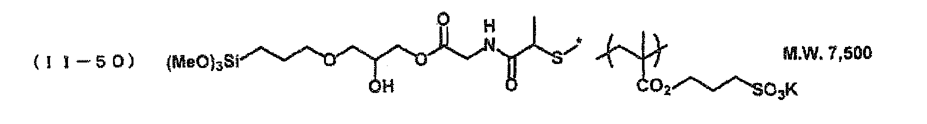

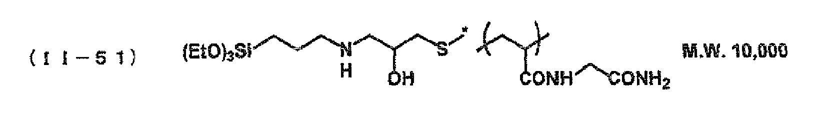

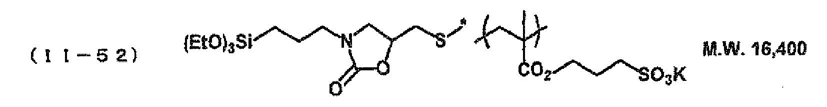

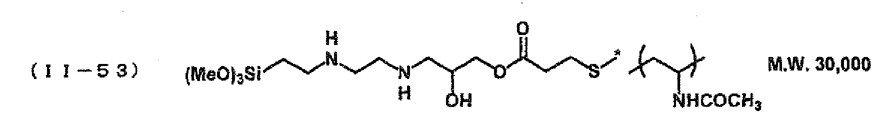

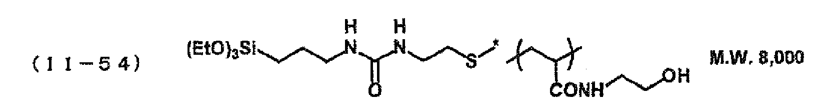

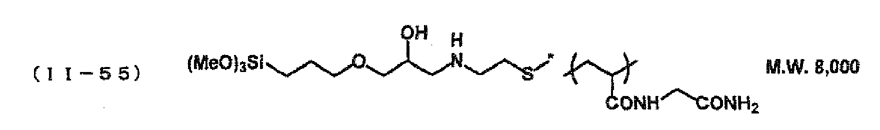

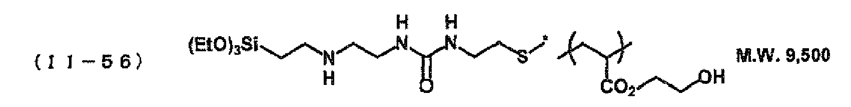

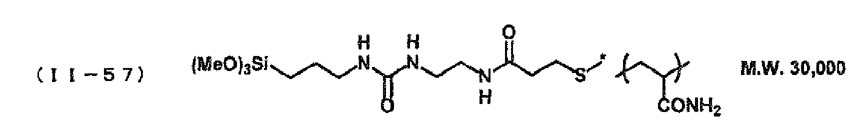

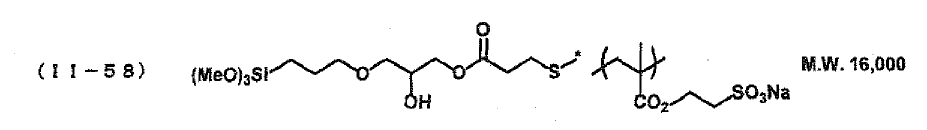

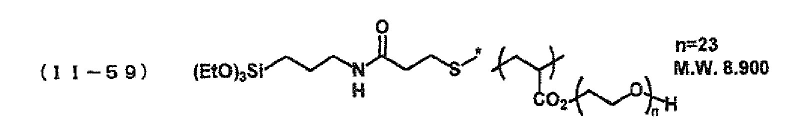

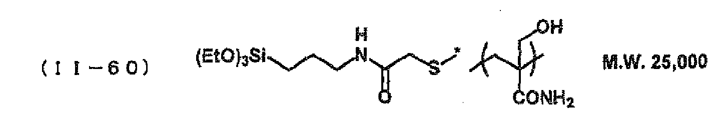

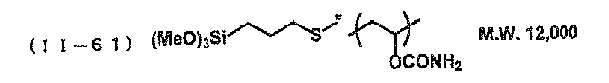

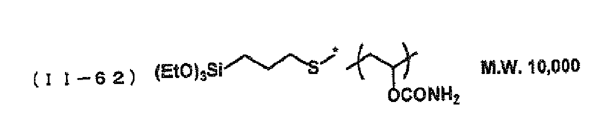

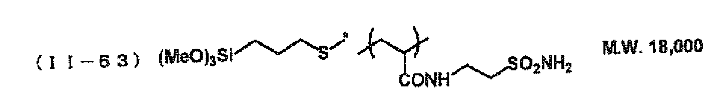

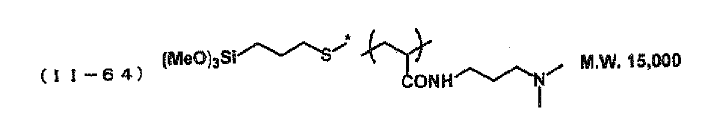

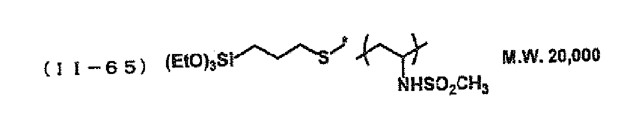

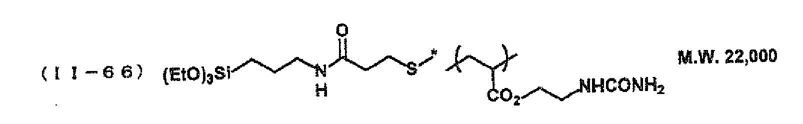

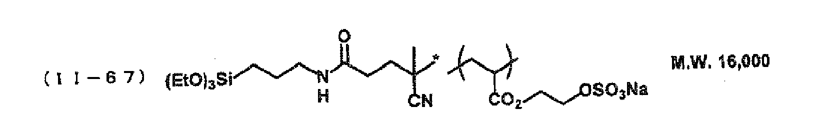

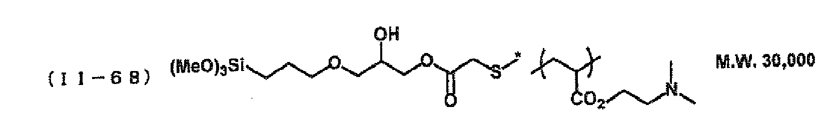

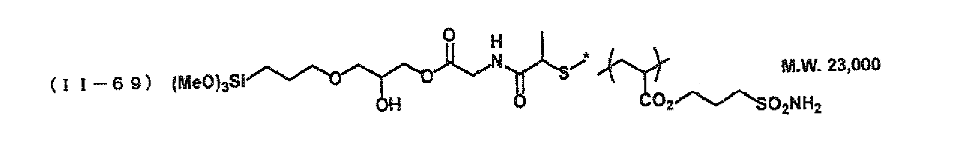

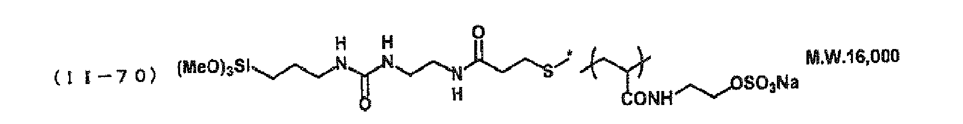

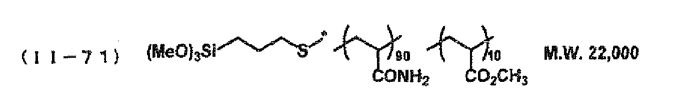

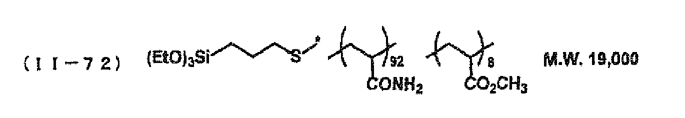

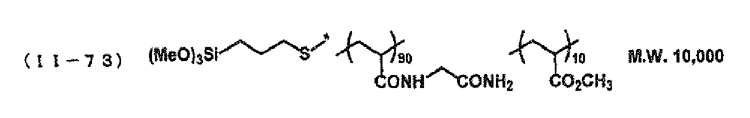

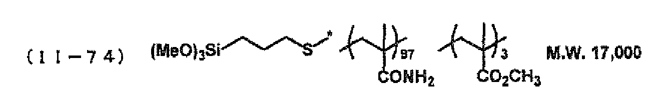

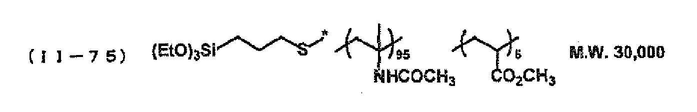

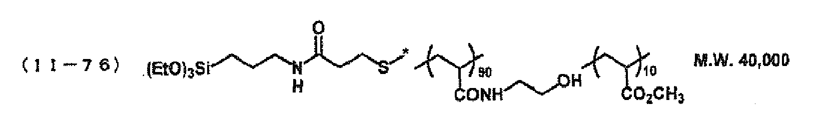

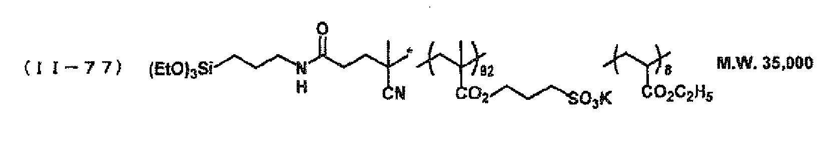

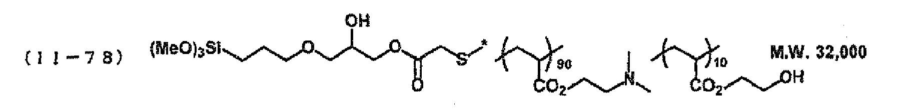

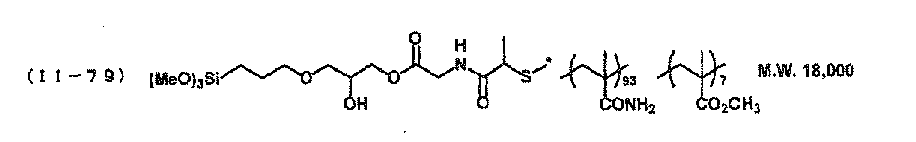

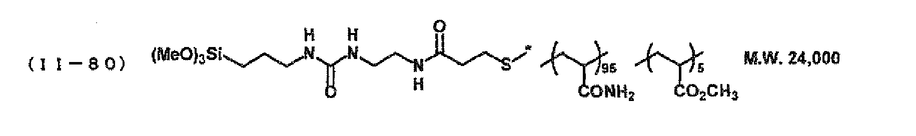

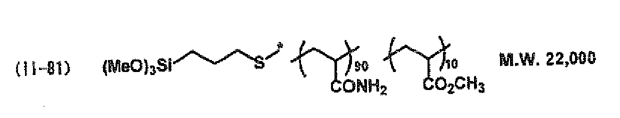

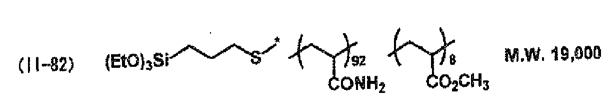

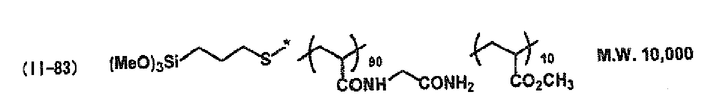

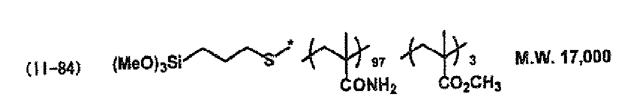

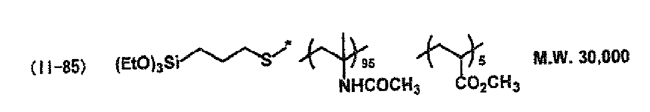

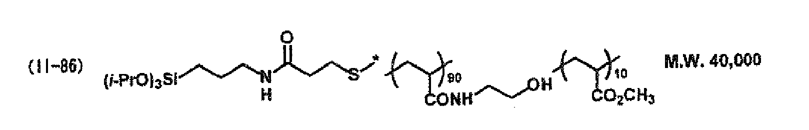

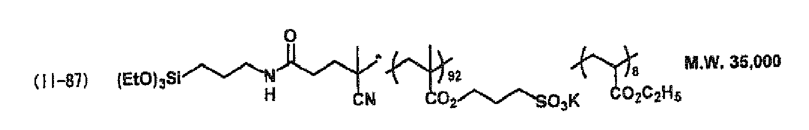

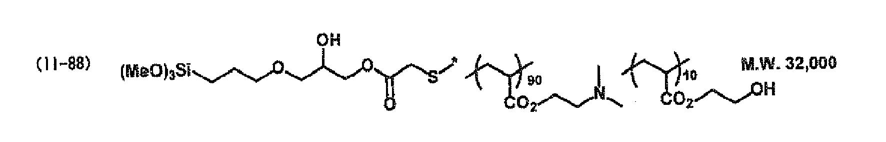

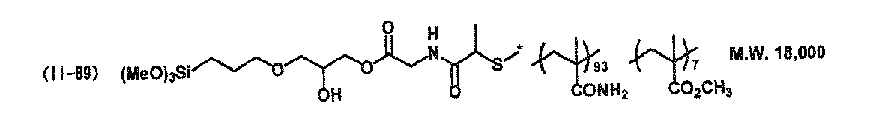

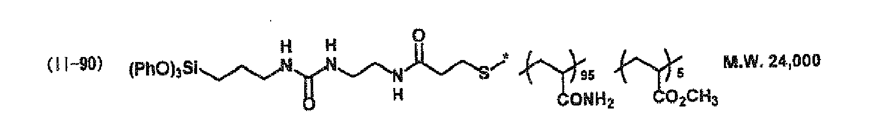

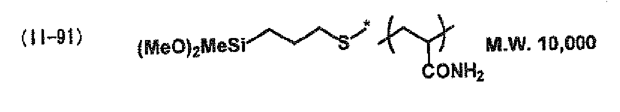

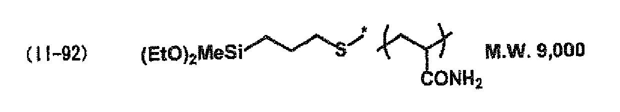

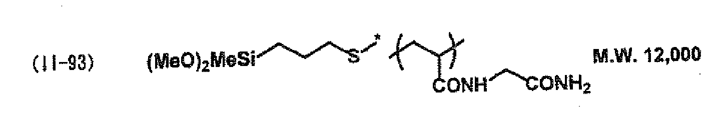

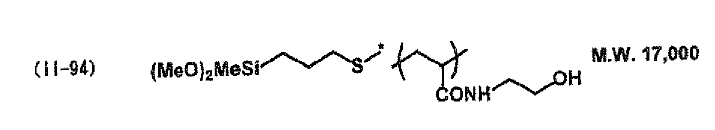

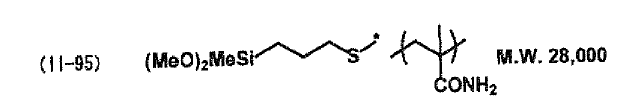

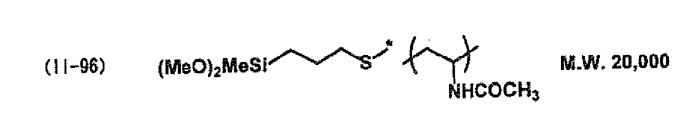

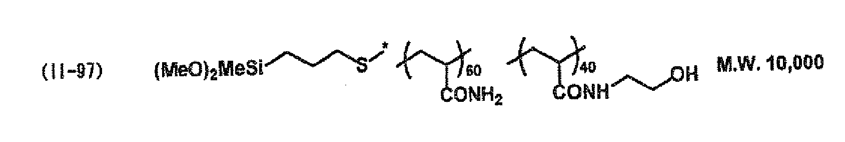

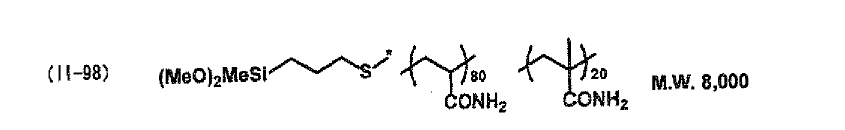

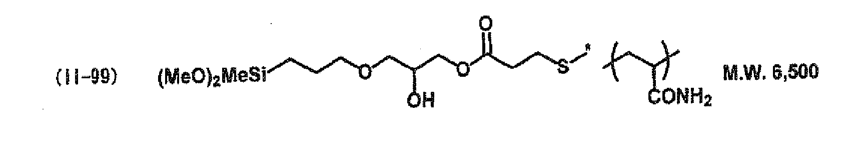

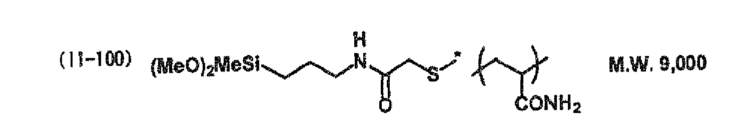

| | | Weight-average molecular weight |
|---|---|---|
| (II-101) | 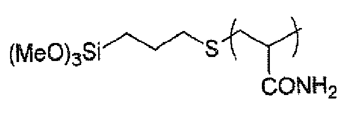 | 5,000 |
| (II-102) | 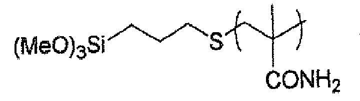 | 6,000 |
| (II-103) | 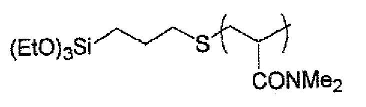 | 10,000 |
| (II-104) | 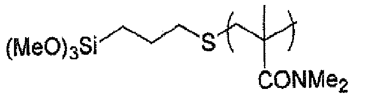 | 8,000 |
| (II-105) | 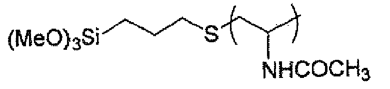 | 15,000 |
| (II-106) | 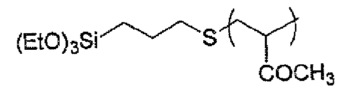 | 10,000 |
| (II-107) | 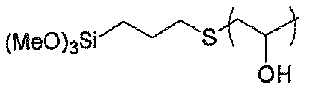 | 30,000 |
| (II-108) | 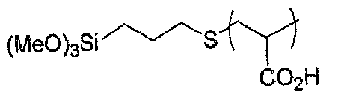 | 5,000 |
| (II-109) | 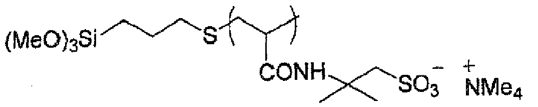 | 10,000 |
| (II-110) | 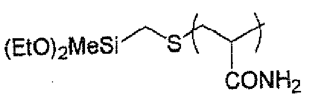 | 20,000 |
| (II-111) | 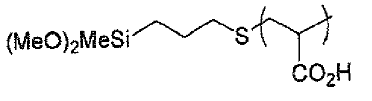 | 7,000 |
| (II-112) | 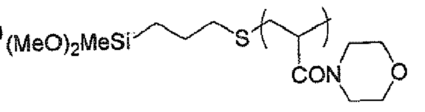 | 15,000 |
| (II-113) | 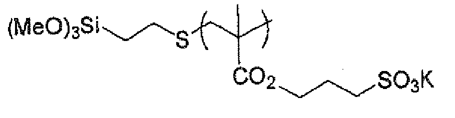 | 5,000 |

The hydrophilic polymer (A) or (B) may be a copolymer with other monomer. As the other monomers to be used, there are also illustrated known monomers such as acrylic acid esters, methacrylic acid esters, acrylamides, methacrylamides, vinyl esters, styrenes, acrylic acid, methacrylic acid, acrylonitrile, maleic anhydride, maleimide, etc. Various physical properties such as film-forming properties, film strength, hydrophilicity, hydrophobicity, solubility, reactivity, stability, etc. can be improved by copolymerizing these monomers.

As specific examples of the acrylic acid esters, there are illustrated methyl acrylate, ethyl acrylate, (nor i-)propyl acrylate, (n-, i-, sec- or t-)butyl acrylate, amyl acrylate, 2-ethylhexyl acrylate, dodecyl acrylate, chloroethyl acrylate, 2-hydroxyethyl acrylate, 2-hydroxypropyl acrylate, 2-hydroxypentyl acrylate, cyclohexyl acrylate, allyl acrylate, trimethylolpropane monoacrylate, pentaerythritol monoacrylate, benzyl acrylate, methoxybenzyl acrylate, chlorobenzyl acrylate, hydroxybenzyl acrylate, hydroxyphenethyl acrylate, dihydroxyphenethyl acrylate, furfuryl acrylate, tetrahydrofurfuryl acrylate, phenyl acrylate, hydroxyphenyl acrylate, chlorophenyl acrylate, sulfamoylphenyl acrylate, 2-(hydroxyphenylcarbonyloxy)ethyl acrylate, etc.

As specific examples of the methacrylic acid esters, there are illustrated methyl methacrylate, ethyl methacrylate, (n- or i-)propyl methacrylate, (n-, i-, sec-or t-)butyl methacrylate, amyl methacrylate, 2-ethylhexyl methacrylate, dodecyl methacrylate, chloroethyl methacrylate, 2-hydroxyethyl methacrylate, 2-hydroxypropyl methacrylate, 2-hydroxypentyl methacrylate, cyclohexyl methacrylate, allyl methacrylate, trimethylolpropane monomethacrylate, pentaerythritol monomethacrylate, benzyl methacrylate, methoxybenzyl methacrylate, chlorobenzyl methacrylate, hydroxybenzyl methacrylate, hydroxyphenethyl methacrylate, dihydroxyphenethyl methacrylate, furfuryl methacrylate, tetrahydrofurfuryl methacrylate, phenyl methacrylate, hydroxyphenyl methacrylate, chlorophenyl methacrylate, sulfamoylphenyl methacrylate, 2-(hydroxyphenylcarbonyloxy)ethyl methacrylate, etc.

As specific examples of the acrylamides, there are illustrated acrylamide, N-methylacrylamide, N-ethylacrylamide, N-propylacrylamide, N-butylacrylamide, N-benzylacrylamide, N-hydroxyethylacrylamide, N-phenylacrylamide, N-tolylacrylamide, N-(hydroxyphenyl)acrylamide, N-(sulfamoylphenyl)acrylamide, N-(phenylsulfonyl)acrylamide, N-(tolylsulfonyl)acrylamide, N,N-dimethylacrylamide, N-methyl-N-phenylacrylamide, N-hydroxyethyl-N-methylacrylamide, etc.

As specific examples of the methacrylamides, there are illustrated methacrylamide, N-methylmethacrylamide, N-ethylmethacrylamide, N-propylmethacrylamide, N-butylmethacrylamide, N-benzylmethacrylamide, N-hydroxyethylmethacrylamide, N-phenylmethacrylamide, N-tolylmethacrylamide, N-(hydroxyphenyl)methacrylamide, N-(sulfamoylphenyl)methacrylamide, N-(phenylsulfonyl)methacrylamide, N-(tolylsulfonyl)methacrylamide, N,N-dimethylmethacrylamide, N-methyl-N-phenylmethacrylamide, N-hydroxyethyl-N-methylmethacrylamide, etc.

As specific examples of the vinyl esters, there are illustrated vinyl acetate, vinyl butyrate, vinyl benzoate, etc.
As specific examples of the styrenes, there are illustrated styrene, methylstyrene, dimethylstyrene, trimethylstyrene, ethylstyrene, propylstyrene, cyclohexylstyrene, chloromethylstyrene, trifluoromethylstyrene, ethoxymethylstyrene, acetoxymethylstyrene, methoxystyrene, dimethoxystyrene, chlorosyrene, dichlorostyrene, bromostyrene, iodostyrene, fluorostyrene, carboxystyrene, etc.

It is also possible to use the hydrophilic polymer (A) or (B) alone or as a mixture thereof in the hydrophilic composition of the invention.
In view of curability and hydrophilicity, the hydrophilic polymer (A) or (B) is used in an amount of preferably from 20 to 99.5% by weight, more preferably from 30 to 99.5% by weight, based on the weight of all solid components in the hydrophilic composition.

In the case of using the hydrophilic polymer (A) and the hydrophilic polymer (B) in combination, the weight ratio of the hydrophilic polymer (A) to the hydrophilic polymer (B) contained in the hydrophilic composition (hydrophilic polymer (A)/hydrophilic polymer (B)) is in the range of preferably from 95/5 to 50/50, more preferably from 92/8 to 55/45, still more preferably from 90/10 to 60/40.

The above-described hydrophilic polymers form a cross-linked film in a state of a mixture with a product of hydrolysis and polycondensation of a metal alkoxide. The organic component of the hydrophilic polymer participates in film thickness and film flexibility. In particular, when the hydrophilic polymer has a viscosity of from 0.1 to 100 mPa·s (5% aqueous solution; measured at 20°C), preferably from 0.5 to 70 mPa·s, still more preferably from 1 to 50 mPa·s, there results good film properties.

The proportion of these other monomers to be used in synthesis of the copolymer must be at an enough level to improve various properties but, in order to exhibit sufficient functions as a hydrophilic film and obtain sufficient advantages of adding the specific hydrophilic polymer (A) or the specific hydrophilic polymer (B), the proportion is preferably not so larger. Therefore, the proportion of the total structural units derived from the other monomers in the specific hydrophilic polymer (A) or the specific hydrophilic polymer (B) is preferably 80% by weight or less than that, more preferably 50% by weight or less than that.

Measurement of the copolymerization ratio of the hydrophilic polymer (A) or (B) can be conducted by means of a nuclear magnetic resonance apparatus (NMR) or by means of an infrared spectrometer with preparing a calibration curve using standard substances.

In view of curabiity and hydrophilicity, the specific hydrophilic polymers (A) and (B) in accordance with the invention is contained in the hydrophilic composition of the invention in a content of preferably from 5 to 95% by weight, still more preferably from 15 to 90% by weight, most preferably from 20 to 85% by weight, based on the weight of non-volatile components. The polymers may be used alone or in combination of two or more thereof. Here, the term "non-volatile components" means components excluding volatile solvents.

[(C) Alkoxide represented by the general formula (III)]
In the invention, an alkoxide (C) represented by the following general formula (III) (hereinafter also referred to as "specific alkoxide (C)) is used in the composition for forming the undercoat layer.

M(OR¹⁴)₄ general formula (III)

In the general formula (III), R¹⁴ represents a hydrogen atom or a hydrocarbon group (preferably, an alkyl group or an aryl group). In the case where R¹⁴ represents an alkyl group, the alkyl group contains preferably from 1 to 18 carbon atoms, more preferably from 1 to 8 carbon atoms. The alkyl or aryl group may have a substituent, and examples of introducible substituents include a halogen atom, an amino group, and a mercapto group. Additionally, this compound is a low-molecular weight compound and has a molecular weight of preferably 1,000 or less than that.

M represents an element selected from the group consisting of Si, Ti, and Zr. Specific examples of the specific alkoxide (C) will be described below, but the invention is not limited at all by them.

In the case where M is Si, that is, the specific alkoxide (C) contains silicon, examples of the alkoxide include tetramethoxysilane, tetraethoxysilane, tetrapropoxysilane, tetrabutoxysilane, methoxytriethoxysilane, ethoxytrimethoxysilane, methoxytripropoxysilane, ethoxytripropoxysilane, propoxytrimethoxysilane, propoxytriethoxysilane, and dimethoxydiethoxysilane. Of these, tetramethoxysilane and tetraethoxy are particularly preferred.

In the case where M represents Ti, that is, the specific alkoxide (C) contains titanium, examples thereof include tetramethoxy titanate, tetraethoxy titanate, tetrapropoxy titanate, tetraisoprapoxy titanate, and tetrabutoxy titanate.

In the case where M represents Zr, that is, the specific alkoxide (C) contains zirconium, examples thereof include zirconates corresponding to the above-exemplified titanium-containing compounds.
Of these, those alkoxides wherein M represents Si are preferred in view of properties of the resulting film.

The specific alkoxides (C) in accordance with the invention may be used alone or in combination of two or more thereof. The specific alkoxide (C) is used in the composition of the invention for forming the undercoat layer in the range of preferably from 5 to 80% by weight, more preferably from 10 to 70% by weight, based on the weight of the non-volatile components.
The specific alkoxide (C) is commercially available with ease, and may also be obtained by known synthesizing processes, for example, by reacting a chloride of each metal with an alcohol.

[(D) Alkoxysilane represented by the general formula (IV)]
In the invention, an alkoxysilane (D) represented by the following general formula (IV) (hereinafter also referred to as "specific alkoxysilane) is used in the composition for forming the undercoat layer. Additionally, this compound is a low-molecular weight compound, and has a molecular weight of preferably 2,000 or less than that, more preferably 1,000 or less than that.

Si(OR¹⁵)ₐR¹⁶₄₋ₐ general formula (IV)

In the general formula (IV), R¹⁵ and R¹⁶ each independently represents a hydrogen atom or a hydrocarbon group (preferably an alkyl group or an aryl group). In the case where R¹⁵ and R¹⁶ each represents an alkyl group, the alkyl group contains preferably from 1 to 18 carbon atoms, more preferably from 1 to 8 carbon atoms. The alkyl or aryl group may have a substituent, and examples of introducible substituents include a halogen atom, an amino group, and a mercapto group. a represents 2 or 3.

Specific examples of the specific alkoxysilane (D) represented by the general formula (IV) will be described below. However, the invention is not limited at all by them. Examples of the alkoxysilane (D) wherein a is 2, namely, examples of trifunctional alkoxysilanes include dimethyldimethoxysilane, diethyldimethoxysilane, propylmethyldimethoxysilane, dimethyldiethoxysilane, diethyldiethoxysilane, dipropyldiethoxysilane, γ-chloropropylmethyldiethoxysilane, γ-chloropropyldimethyldimethoxysilane, chlorodimethyldiethoxysilane, (p-chloromethyl)phenylmethyldimethoxysilane, γ-bromopropylmethyldimethoxysilane, acetoxymethylmethyldiethoxysilane, acetoxymethylmethyldimethoxysilane, acetoxypropylmethyldimethoxysilane, benzoyloxypropylmethyldimethoxysilane, 2-(carbomethoxy)ethylmethyldimethoxysilane, phenylmethyldimethoxysilane, phenylethyldiethoxysilane, phenylmethyldipropoxysilane, hydroxymethylmethyldiethoxysilane, N-(methyldiethoxysilylpropyl)-O-polyethylene oxide urethane, N-(3-methyldiethoxysilylpropyl)-4-hydroxybutylamide, N-3-methyldiethoxysilylpropyl)gluconamide, vinylmethyldimethoxysilane, vinylmethyldiethoxysilane, vinylmethyldibutoxysilane, isopropenylmethyldimethoxysilane, isopropenylmethyldiethoxysilane, isopropenylmethyldibutoxysilane, vinylmethylbis(2-methoxyethoxy)silane, allylmethyldimethoxysilane, vinyldecylmethyldimethoxysilane, vinyloctylmethyldimethoxysilane, vinylphenylmethyldimethoxysilane, isopropenylphenylmethyldimethoxysilane, 2-(meth)acryloxyethylmethyldimethoxysilane, 2-(meth)acryloxyethylmethyldiethoxysilane, 3-(meth)acryloxypropylmethyldimethoxysilane, 3-(meth)acryloxypropylmethyldimethoxysilane, 3-(meth)acryloxypropylmethyldis(2-methoxyethoxy)silane, 3-[2-(allyloxycarboryl)phenylcarbonyloxy]propylmethyldimethoxysilane, 3-(vinylphenylamino)propylmethyldimethoxysilane, 3-(vinylphenylamino)propylmethyldiethoxysilane, 3-(vinylbenzylamino)propylmethyldiethoxysilane, 3-(vinylbenzylamino)propylmethyldiethoxysilane, 3-[2-(N-vinylphenylmethylamino)ethylamino]propylmethyldimethoxysilane, 3-[2-(N-isopropenylphenylmethylamino)ethylamino]-propylmethyldimethoxysilane, 2-(vinyloxy)ethylmethyldimethoxysilane, 3-(vinyloxy)propylmethyldimethoxysilane, 4-(vinyloxy)butylmethyldiethoxysilane, 2-(isopropenyloxy)ethylmethyldimethoxysilane, 3-(allyloxy)propylmethyldimethoxysilane, 10-(allyloxycarbonyl)decylmethyldimethoxysilane, 3-(isopropenylmethyloxy)propylmethyldimethoxysilane, 10-(isopropenylmethyloxycarbonyl)decylmethyldimethoxysilane, 3-[(meth)acryloxypropyl]methyldimethoxysilane, 3-[(meth)acryloxypropyl]methyldiethoxysilane, 3-[(meth)acryloxymethyl]methyldimethoxysilane, 3-[(meth)acryloxymethyl]methyldiethoxysilane, γ-glycidoxypropylmethyldimethoxysilane, N-3-(meth)acryloxy-2-hydroxypropyl)-3-aminopropylmethyldiethoxysilane, O-[(meth)acryloxyethyl]-N-(methyldiethoxysilylpropyl)urethane, γ-glycidoxypropylmethyldiethoxysilane, β-(3,4-epoxycyclohexyl)ethylmethyldimethoxysilane, γ-aminopropylmethyldiethnxysilane, γ-aminopropylmethyldimethoxysilane, 4-aminobutylmethyldiethoxysilane, 11-aminoundecylmethyldiethoxysilane, m-aminophenyldimethoxysilane, p-aminophenylmethyldimethoxysilane, 3-aminopropylmethyldis(methoxyethoxyethoxy)silane, 2-(4-pyridylethyl)methyldiethoxysilane, 2-(methyldimethoxysilylethyl)pyridine, N-(3-methyldimethoxysilylpropyl)pyrrole, 3-(m-aminophenoxy)propylmethyldimethoxysilane, N-(2-aminoethyl)-3-aminopropylmethyldimethoxysilane, N-(2-aminoethyl)-3-aminopropylmethyldiethoxysilane, N-(6-aminohexyl)aminomethylmethyldiethoxysilane, N-(6-aminohexyl)aminopropylmethyldimethoxysilane, N-(2-aminoethyl)-11-aminoundesylmethyldimethoxysilane, (aminoethylaminomethyl)phenethylmethyldimethoxysilane, N-3-[(amino(polypropyleneoxy))]aminopropylmethyldimethoxysilane, n-butylaminopropylmethyldimethoxysilane, N-ethylaminoisobutylmethyldimethoxysilane, N-methylaminopropylmethyldimethoxysilane, N-phenyl-γ-aminopropylmethyldimethoxysilane, N-phenyl-γ-aminomethylmethyldiethoxysilane, (cyclohexylaminomethyl)methyldiethoxysilane, N-cyclohexylaminopropylmethyldimethoxysilane, bis(2-hydroxyethyl)-3-aminopropylmethyldiethoxysilane, diethylaminomethylmethyldiethoxysilane, diethylaminopropylmethyldimethoxysilane, dimethylaminopropylmethyldimethoxysilane, N-3-methyldimethoxysilylpropyl-m-phenylenediamine, N,N-bis[3-(methyldimethoxysilyl)propyl]ethylenediamine, bis(methyldiethoxysilylpropyl)amine, bis(methyldimethoxysilylpropyl)amine, bis[(3-methyldimethoxysilyl)propyl]-ethylenediamine, bis[3-(methyldiethoxysilyl)propyl]urea, bis(methyldimethoxysilylpropyl)urea, N-(3-methyldiethoxysilylpropyl)-4,5-dihydroimidazole, ureidopropylmethyldiethoxysilane, ureidopropylmethyldimethoxysilane, acetamidopropylmethyldimethoxysilane, 2-(2-pyridylethyl)thiopropylmethyldimethoxysilane, 2-(4-pyridylethyl)thiopropylmethyldimethoxysilane, bis[3-(methyldiethoxysilyl)propyl]disulfide, 3-(methyldiethoxysilyl)propylsuccinic acid anhydride, γ-mercaptopropylmethyldimethoxysilane, γ-mercaptopropylmethyldiethoxysilane, isocyanatopropylmethyldimethoxysilane, isocyanatopropylmethyldiethoxysilane, isocyanatoethylmethyldiethoxysilane, isocyanatomethylmethyldiethoxysilane, carboxyethylmethylsilanediol sodium salt, trisodium N-(methyldimethoxysilylpropyl)ethylenediaminetriacetate, 3-(methyldihydroxysilyl)-1-propanesulfonic acid, diethylphosphato-ethylmethyldiethoxysilane, sodium 3-methyldihydroxysilylpropylmethylphosphonate, bis(methyldiethoxysilyl)ethane, bis(methyldimethoxysilyl)ethane, bis(methyldiethoxysilyl)methane, 1,6-bis(methyldiethoxysilyl)hexane, 1,8-bis(methyldiethoxysilyl)octane, p-bis(methyldimethoxysilylethyl)benzene, p-bis(methyldimethoxysilylmethyl)benzene, 3-methoxypropylmethyldimethoxysilane, 2-[methoxy(polyethyleneoxy)propyl]methyldimethoxysilane, methoxytriethyleneoxypropylmethyldimethoxysilane, tris(3-methyldimethoxysilylpropyl) isocyanurate, [hydroxyl(polyethyleneoxy)propyl]methyldiethoxysilane, N,N'-bis(hydroxyethyl)-N,N'-bis(methyldimethoxysilylpropyl)ethylenediamine, bis-[3-(methyldiethoxysilylpropyl)-2-hydroxypropoxy]polyethylene oxide, bis[N,N'-(methyldiethoxysilylproyl)aminocarbonyl]polyethylene oxide, and bis(methyldiethoxysilylpropyl)polyethylene oxide.
Of these, dimethyldimethoxysilane, diethyldimethoxysilane, dimethyldiethoxysilane, diethyldiethoxysilane, etc. are particularly preferred in view of availability and adhesion to the hydrophilic layer.

Examples of the alkoxysilane (D) wherein a is 3, namely, examples of trifunctional alkoxysilanes include methyltrimethoxysilane, ethyltrimethoxysilane, propyltrimethoxysilane, methyltriethoxysilane, ethyltriethoxysilane, propyltriethoxysilane, γ-chloropropyltriethoxysilane, γ-chloropropyltrimethoxysilane, chloromethyltriethoxysilane, (p-chloromethyl)phenyltrimethoxysilane, γ-bromopropyltrimethoxysilane, acetoxymethyltriethoxysilane, acetoxymethyltrimethoxysilane, acetoxypropyltrimethoxysilane, benzoyloxypropyltrimethoxysilane, 2-(carboethoxy)ethyltrimethoxysilane, phenyltrimethoxysilane, phenyltriethoxysilane, phenyltripropoxysilane, hydroxymethyltriethoxysilane, N-(triethoxysilylpropyl)-O-polyethylene oxide urethane, N-(3-triethoxysilylpropyl)-4-hydroxybutylamide, N-(3-triethoxysilylpropyl)gluconamide, vinyltrimethoxysilane, vinyltriethoxysilane, vinyltributoxysilane, isopropenyltrimethoxysilane, isopropenyltriethoxysilane, isopropenyltributoxysilane, vinyltris(2-methoxyethoxy)silane, allyltrimethoxysilane, vinyldecyltrimethoxysilane, vinyloctyltrimethoxysilane, vinylphenyltrimethoxysilane, isopropylphenyltrimethoxysilane, 2-(meth)acryloxyethyltrimethoxysilane, 2-(meth)acryloxyethyltriethoxysilane, 3-(meth)acryloxypropyltrimethoxysilane, 3-(meth)acryloxypropyltrimethoxysilane, 3-(meth)acryloxypropyltris(2-methoxyethoxy)silane, 3-[2-(allyloxycarbonyl)phenylcarbonyloxy]propyltrimethoxy-silane, 3-(vinylphenylamino)propyltrimethoxysilane, 3-(vinylphenylamino)propyltriethoxysilane, 3-(vinylbenzylamino)propyltriethoxysilane, 3-(vinylbenzylamino)propyltriethoxysilane, 3-[2-(N-vinylphenylmethylamino)ethylamino]propyltrimethoxysilane, 3-[2-(N-isopropenylphenylmethylamino)ethylamino]propyltrimethoxysilane, 2-(vinyloxy)ethyltrimethoxysilane, 3-(vinyloxy)propyltrimethoxysilane, 4-(vinyloxy)butyltriethoxysilane, 2-(isopropenyloxy)ethyltrimethoxysilane, 3-(allyloxy)propyltrimethoxysilane, 10-(allyloxycarbonyl)decyltrimethoxysilane, 3-(isopropenylmethyloxy)propyltrimethoxysilane, 10-(isopropenylmethyloxycarbonyl)decyltrimethoxysilane, 3-[(meth)acryloxypropyl]trimethoxysilane, 3-[(meth)acryloxypropyl]triethoxysilane, 3-[(meth)acryloxymethyl]trimethoxysilane, 3-[(meth)acryloxymethyl]triethoxysilane, γ-glycidoxypropyltrimethoxysilane, N-[3-(meth)acryloxy-2-hydroxypropyl]-3-aminopropyltriethoxysilane, O-[(meth)acryloxyethyl]-N-(triethoxysilylpropyl)urethane, γ-glycidoxypropyltriethoxysilane, β-(3,4-epoxycyclohexyl)ethyltrimethoxysilane, γ-aminopropyltriethoxysilane, γ-aminopropyltrimethoxysilane, 4-aminobutyltriethoxysilane, 11-aminoundecyltriethoxysilane, m-aminophenyltrimethoxysilane, p-aminophenyltrimethoxysilane, 3-aminopropyltris(methoxyethoxyethoxy)silane, 2-(4-pyridylethyl)triethoxysilane, 2-(trimethoxysilylethyl) pyridine, N-(3-trimethoxysilylpropyl)pyrrole, 3-(m-aminophenoxy)propyltrimethoxysilane, N-(2-aminoethyl)-3-aminopropyltrimethoxysilane, N-(2-aminoethyl)-3-aminopropyltriethoxysilane, N-(6-aminohexyl)aminomethyltriethoxysilane, N-(6-aminohexyl)aminopropyltrimethoxysilane, N-(2-aminoethyl)-11-aminoundecyltrimethoxysilane, (aminoethylaminomethyl)phenethyltrimethoxysilane, N-3-[(amino(polypropyleneoxy))]aminopropyltrimethoxsysilane, n-butylaminopropyltrimethoxysilane, N-ethylaminoisobutyltrimethoxysilane, N-methylaminopropyltrimethoxysilane, N-phenyl-γ-aminopropyltrimethoxysilane, N-phenyl-γ-aminomethyltriethoxysilane, (cyclohexylaminomethyl)triethoxysilane, N-cyclohexylaminopropyltrimethoxysilane, bis(2-hydroxyethyl)-3-aminopropyltriethoxysilane, diethylaminomethyltriethoxysilane, diethylaminopropyltrimethoxysilane, dimethylaminopropyltrimethoxysilane, N-3-trimethoxysilylpropyl-m-phenylenediamine, N,N-bis[3-(trimethoxysilyl)propyl]ethylenediamine, bis(triethoxysilylpropyl)amine, bis(trimethoxysilylpropyl)amine, bis[(3-trimethoxysilyl)propyl]ethylenediamine, bins[3-(triethoxysilyl)propyl]urea, bis(trimethoxysilylpropyl)urea, N-(3-triethoxysilylpropyl)-4,5-dihydroimidazole, ureidopropyltriethoxysilane, ureidopropyltrimethoxysilane, acetamidopropyltrimethoxysilane, 2-(2-pyridylethyl)thiopropyltrimethoxysilane, 2-(4-pyridylethyl)thiopropyltrimethoxysilane, bis[3-(triethoxysilyl)propyl]disulfide, 3-(triethoxysilyl)propylsuccinic acid anhydride, γ-mercaptopropyltrimethoxysilane, γ-mercaptopropyltriethoxysilane, isocyanatopropyltrimethoxysilane, isocyanatopropyltriethgoxysilane, isocyanatoethyltriethoxysilane, isocyanatomethyltriethoxysilane, carboxyethylsilane triol sodium salt, trisodium N-(trimethoxysilylpropyl)ethylenediaminetetraacetate, 3-(trihydroxysilyl)-1-propanesulfonic acid, diethylphosphatoethyltriethoxysilane, sodium 3-trihydroxysilylpropylmethylphosphonate, bis(triethoxysilyl)ethane, bis(trimethoxysilyl)ethane, bis(triethoxysilyl)methane, 1,6-bis(triethoxysilyl)hexane, 1,8-bis(triethoxysilyl)octane, p-bis(trimethoxysilylethyl)benzene, p-bis(trimethoxysilylmethyl)benzene, 3-methoxypropyltrimethoxysilane, 2-[methoxy(polyethyleneoxy)propyl]trimethoxysilane, methoxytriethyleneoxypropyltrimethoxysilane, tris(3-trimethoxysilylpropyl) isosyanurate, [hydroxyl(polyethyleneoxy)propyl]triethoxysilane, N,N'-bis(hydroxyethyl)-N,N'-bis(trimethoxysilylpropyl)ethylenediamine, bis-[3-(triethoxysilylpropyl)-2-hydroxypropoxy]polyethylene oxide, bis[N,N'-(triethoxysilylpropyl)aminocarbonyl]poly-ethylene oxide, and bis(triethoxysilylpropyl)polyethylene oxide. Of these, methyltrimethoxysilane, ethyltrimethoxysilane, methyltriethoxysilane, ethyltriethoxysilane, etc. are particularly preferred in view of availability and adhesion to the hydrophilic layer.

The specific alkoxysilanes (D) in accordance with the invention may be used alone or in combination of two or more thereof.
The specific alkoxysilanes (D) are readily available as commercial products, and may also be obtained by known synthesizing processes, for example, by reaction between a chloride of each metal with an alcohol.

The weight ratio of the specific alkoxide (C) to the specific alkoxysilane (D) (alkoxide (C)/alkoxysilane (D)) contained in the composition for forming the undercoat layer is preferably from 90/10 to 30/70, more preferably from 85/15 to 35/65, still more preferably from 80/20 to 40/60.
Also, the specific alkoxide (C) and the specific alkoxysilane (D) are used in the composition for forming the undercoat layer in an amount ranging preferably from 5 to 99% by weight, still more preferably from 10 to 98% by weight, in terms of the sum of the specific alkoxide (C) and the specific alkoxysilane (D), based on the weight of non-volatile components .

[(E) Catalyst]
A catalyst (E) is preferably contained in the hydrophilic composition and the composition for forming an undercoat layer. The contained catalyst (E) can accelerate the reaction of the specific hydrophilic polymer (A) and the specific hydrophilic polymer (B), or can accelerate reaction of the specific alkoxide (C) and the specific alkoxysilane (D). As the catalyst (E), an acid or a basic compound is used as it is or in a state of being dissolved in water or in an alcohol (hereinafter, these are also inclusively referred to as "acidic catalysts and basic catalysts", respectively). In the case of dissolving the acid or the basic compound in a solvent, there is no limit as to concentration thereof, and it suffices to properly select the concentration depending upon characteristics of the acid or basic compound to be used, desired amount of the catalyst, and the like. Here, in the case where the concentration of the acid or the basic compound which constitutes the catalyst is high, hydrolysis rate and polycondensation rate tend to become large. However, use of the basic catalyst in a high concentration might in some cases produce a precipitate in the sol solution. Hence, in the case of using the basic catalyst, the concentration of the catalyst is desirably 1N or less than that in terms of concentration as an aqueous solution.

Kinds of the acidic catalysts or the basic catalysts are not particularly limited but, in the case where the catalysts must be used in high concentration, those catalyst are preferred which are constituted by elements scarcely remaining in the coated film after drying. Specifically, examples of the acidic catalyst include hydrogen halides (for example, hydrochloric acid), nitric acid, sulfuric acid, sulfurous acid, hydrogen sulfide, perchloric acid, hydrogen peroxide, carbonic acid, carboxylic acids (for example, formic acid and acetic acid), substituted carboxylic acid of the structural formula of RCOOH wherein R is substituted by other element or substituent, sulfonic acid (for example, benzenesulfonic acid, and examples of the basic catalyst include ammoniacal bases (for example, aqueous ammonia) and amines (for example, ethylamine and aniline).

Also, the catalyst (E) is preferably a non-volatile catalyst. The non-volatile catalyst is that other than those which have a boiling point of lower than 125°C and, in other words, that which has a boiling point of 125°C or higher or that which originally has no boiling points (including those which do not undergo phase change such as those which undergo thermal decomposition).
The non-volatile catalysts to be used in the invention are not particularly limited, and are exemplified by metal chelate compounds and silane coupling agents.

The metal chelate compounds (hereinafter also referred to as "metal complexes") are not particularly limited, and are exemplified by metal complexes constituted of a metal element selected from those belonging to the groups 2A, 3B, 4A, and 5A of the periodic table and an oxo or hydroxyl-oxygen-containing compound selected from β-diketones, keto esters, hydroxycarboxylic acids or esters thereof, amino alcohols, and enolic active hydrogen compounds.
Of the constitutional metal elements, elements of the group 2A (for example, Mg, Ca, Sr, and Ba), elements of the group 3B (for example, Al and Ga), elements of the group 4A (for example, Ti and Zr), and elements of the group 5A (for example, V, Nb, and Ta) are preferred, and each of them forms a complex exerting an excellent catalytic effect. Above all, complexes obtained from Zr, Al, or Ti are excellent and preferred.

In the invention, as the oxo or hydroxyl oxygen-containing compound which constitutes a ligand of the foregoing metal complex, there are illustrated β-diketones such as acetylacetone, acetylacetone (2,4-pentanedione) and 2,4-heptanedione, keto esters such as methyl acetoacetate, ethyl acetoacetate, and butyl acetoacetate, hydroxycarboxylic acids and esters thereof such as lactic acid, methyl lactate, salicylic acid, ethyl salicylate, phenyl salicylate, malic acid, tartaric acid, and methyl tartarate, keto alcohols such as 4-hydroxy-4-methyl-2-pentanone, 4-hydroxy-2-pentanone, 4-hydroxy-4-methyl-2-heptanone, and 4-hydroxy-2-heptanone, amino alcohols such as monoethanolamine, N,N-dimethylethanolamine, N-methyl-monoethanolamine, diethanolamine, and triethanolamine, enolic active compounds such as methylolmelamine, methylolurea, methylolacrylamide, and diethyl malonate, and compounds having a substituent on the methyl group, methylene group or carbonyl carbon of acetylacetone (2,4-pentanedione).

The ligand is preferably an acetylacetone or an acetylacetone derivative. In the invention, the acetylacetone derivative refers to a compound having a substituent on the methyl group, methylene group or carbonyl carbon of acetylacetone. Examples of the substituent which is substituted on the methyl group of acetylacetone include a straight or branched alkyl group, a straight or branched acyl group, a straight or branched hydroxyalkyl group, a straight or branched carboxyalkyl group, a linear or branched alkoxy group and a straight or branched alkoxyalkyl group each having from 1 to 3 carbon atoms; examples of the substituent which is substituted on the methylene group of acetylacetone include a carboxyl group and a straight or branched carboxyalkyl group and a straight or branched hydroxyalkyl group each having from 1 to 3 carbon atoms as well as a carboxyl group; and examples of the substituent which is substituted on the carbonyl carbon of acetylacetone include an alkyl group containing from 1 to 3 carbon atoms and, in this case, a hydrogen atom is added to the carbonyl oxygen to form a hydroxyl group.

As preferred specific examples of the acetylacetone derivative, there are illustrated ethylcarbonylacetone, n-propylcarbonylacetone, i-propylcarbonylacetone, diacetylacetone, 1-acetyl-1-propionyl-acetylacetone, hydroxyethylcarbonylacetone, hydroxypropylcarbonylacetone, acetoacetic acid, acetopropionic acid, diacetoacetic acid, 3,3-diacetopropionic acid, 4,4-diacetobutyric acid, carboxyethylcarbonylacetone, carboxypropylcarbonylacetone, and diacetone alcohol.
Of these, acetylacetone and diacetylacetone are particularly preferred. The complex of the foregoing acetylacetone derivative with the foregoing metal element is a mononuclear complex in which from 1 to 4 acetylacetone derivative molecules are coordinated per metal element. When the coordination number of the metal element is greater than the total coordination number of the acetylacetone derivative, ligands commonly used in usual complexes such as a water molecule, a halogen ion, a nitro group, and an ammonio group may be coordinated on the metal element.

As preferred examples of the metal complex, there are illustrated a tris(acetylacetonato)aluminum complex salt, a di-(acetylacetonato)aluminum aquocomplex, a mono-(acetylacetonato)aluminum chlorocomplex salt, a di-(diacetylacetonato)aluminum complex salt, ethylacetoacetate aluminum diisopropylate, aluminum tris(ethylacetoacetate), cyclic aluminum oxide isopropylate, a tris(acetylacetonato)barium complex salt, a di(acetylacetonato)titanium complex salt, a tris(acetylacetonato)titanium complex salt, a di-i-propoxy bis(acetylacetonato)titanium complex salt, zirconium tris(ethylacetoacetate), and a zirconium tris(benzoic acid) complex salt. These metal complexes exhibit excellent stability in an aqueous coating solution and are excellent in an effect for accelerating the gelation in a sol-gel reaction at the heat drying. Above all, ethylacetoacetate aluminum diisopropylate, aluminum tris(ethylacetoacetate), a di(acetylacetonato)titanium complex salt, and zirconium tris(ethylacetoacetate) are particularly preferred.

In this specification, the description of a counter salt of the foregoing metal complex is omitted. The kind of the counter salt is arbitrary so far as it is a water-soluble salt which keeps the electric charge as a complex compound neutral. For example, there can be used salts which can be stoichiometrically kept neutral, such as nitrates, halogenic acid salts, sulfates, and phosphates, may be used.
The behavior of the metal complex in a silica sol-gel reaction is described in detail in J. Sol-Ge1. Sci. and Tec., 16, 209 (1999). As its reaction mechanism, the following scheme may be presumed. That is, it is thought that the metal complex takes a coordination structure and is stable in a coating solution and, in a dehydration condensation reaction starting with a heating and drying step after coating, accelerates cross-linking according to a mechanism similar to an acid catalyst. In any event, use of this metal complex has made it possible to improve the stability with time of the coating solution and the surface quality of the film and to attain high hydrophilicity and high durability to satisfactory levels.

The foregoing metal complex catalyst is easily available as a commercial product and is also obtainable by a known synthesis process by, for example, a reaction between a chloride of each metal and an alcohol.

In the invention, the silane coupling agent to be used as the non-volatile catalyst is not particularly limited, and there are illustrated those which have a functional group showing acidity or basicity. More specifically, there are illustrated those silane coupling agents which have a functional group showing acidity such as a peroxo acid, a carboxylic acid, carbohydrazonic acid, carboximic acid, sulfonic acid, sulfinic acid, selenoic acid, selenic acid, selenenic acid, telluroic acid, and the alkali metal salts thereof, or which have a functional group showing basicity such as an amino group.

The catalyst (E) in accordance with the invention is used in the hydrophilic composition and the composition for forming the undercoat layer of the invention in an amount ranging preferably from 0 to 50% by weight, more preferably from 5 to 25% by weight, based on the weight of the non-volatile components. Additionally, the catalysts (E) may be used alone or in combination of two or more thereof.

[(F) Alkoxide of an element selected from among Si, Zi, and Al]
In the case where the hydrophilic composition contains a hydrophilic polymer containing both the structure represented by the foregoing general formula (I-1) and the structure represented by the foregoing general formula (I-2), the composition preferably contains a cross-linking agent for obtaining good curability. Also, in the case where the hydrophilic composition contains a hydrophilic polymer containing both the structure represented by the foregoing general formula (II-1) and the structure represented by the foregoing general formula (II-2), the composition may contain a cross-linking agent for obtaining a coated film with extremely excellent film strength, though good curability can be obtained in the absence of the cross-linking agent.

As the cross-linking agent, alkoxide compounds containing an element selected from among Si, Ti, Zr, and Al are particularly preferred.
In the invention, it is preferred for the hydrophilic composition to contain the alkoxide compound (F) of an element selected from among Si, Ti, Zr, and Al (hereinafter also referred to as "specific alkoxide (F)").
It may be presumed that, by the use of the specific alkoxide (F), reaction sites for forming cross-linkage increases in the hydrolysis and polycondensation in the reaction system between the silane coupling groups contained in the specific hydrophilic polymer (A) and in the specific hydrophilic polymer (B) and the polymerizable functional group formed by hydrolysis of the specific alkoxide (F), which serves to form an organic-inorganic hybrid film having a cross-linked structure with higher density and higher strength, thus the resulting overcoat layer film having higher strength, realizing excellent wear resistance, and providing long-lasting high surface hydrophilicity. Also, when water adheres to the surface having extremely high hydrophilicity, then it may spread widely, therefore the surface area adjacent to air increases with the result that the drying speed of the surface wet with water may be extremely high, or that the coated film has excellent rapid drivability.
The specific alkoxide (F) to be used in the invention, that is, an alkoxide compound of an element selected from among Si, Ti, Zr, and Al, is a hydrolyzable, polymerizable compound having a polymerizable functional group in the structure thereof and exerting a function as a cross-linking agent and, when polycondensed with the specific hydrophilic polymer (A) and the specific hydrophilic polymer (B), it forms a strong coated film having a cross-linked structure.

The metal alkoxide can be represented by the following general formula (V-1) or (V-2). In these formulae, R²⁰ represents a hydrogen atom, an alkyl group, or an aryl group, R²¹ and R²² each represents an alkyl group or an aryl group, Z represents Si, Ti or Zr, and m represents an integer of from 0 to 2. When R²⁰ and R²¹ each represents an alkyl group, they contain preferably from 1 to 4 carbon atoms. The alkyl group and the aryl group may each have a substituent, and examples of the substituent which can be introduced include a halogen atom, an amino group, and a mercapto group. Additionally, this compound is a low-molecular weight compound, and preferably has a molecular weight of 2,000 or less than that.

(R²⁰)ₘ-Z-(OR²¹)₄-m (V-1)

Al-(OR²²)₃ (V-2)

Specific examples of the metal oxides represented by the general formulae (V-1) or (V-2) will be given below, but the invention is not limited thereto.

In the case where Z represents Si, that is, silicon is contained in the hydrolyzable compound, examples thereof include trimethoxysilane, tetramethoxysilane, tetraethoxysilane, tetrapropoxysilane, methyltrimethoxysilane, dimethyldimethoxysilane, γ-chloropropyltriethoxysilane, γ-mercaptopropyltrimethoxysilane, γ-aminopropyltriethoxysilane, phenyltrimethoxysilane, and diphenyldimethoxysilane. Of these, trimethoxysilane, tetramethoxysilane, tetraethoxysilane, methyltrimethoxysilane, dimethyldimethoxysilane, and phenyltrimethoxysilane are particularly preferred.

In the case where Z represents Ti, that is, titanium is contained in the hydrolyzable compound, examples thereof include trimethoxy titanate, tetramethoxy titanate, triethoxy titanate, tetraethoxy titanate, tetrapropoxy titanate, chlorotrimethoxy titanate, chlorotriethoxy titanate, ethyltrimethoxytitanate, methyltriethoxy titanate, ethyltriethoxy titanate, diethyldiethoxy titanate, phenyltrimethoxy titanate, and phenyltriethoxy titanate. In the case where Z represents Zr, that is, zirconium is contained in the hydrolyzable compound, examples thereof include zirconates corresponding to the above-exemplified titanium-containing compounds.
Also, in the case where the central metal is Al, that is, aluminum is contained in the hydrolyzable compound, examples thereof include trimethoxy aluminate, triethoxy aluminate, tripropoxy aluminate, and triisopropoxy aluminate.

Among the above-described ones, tetramethoxysilane, tetraethoxysilane, methyltrimethoxysilane, and methyltriethoxysilane are particularly preferred.

The specific alkoxides (F) in accordance with the invention may be used alone or in combination of two or more thereof.
The specific alkoxide (F) is used in the hydrophilic composition of the invention in an amount ranging preferably from 5 to 80% by weight, more preferably from 10 to 70% by weight, based on the weight of the non-volatile components.
The specific alkoxide (F) is readily available as a commercial product, and is also obtainable by a known synthesis process by, for example, a reaction between a chloride of each metal and an alcohol.

[(G) Surfactant]
Further, the hydrophilic composition and the composition for forming the undercoat layer of the invention preferably contain a surfactant (G). The surfactant provides not only the effect of improving surface state of a film upon formation of the film on a substrate but also the effect of improving hydrophilicity. The hydrophilicity-improving effect is generally obtained by outward discharging of the surfactant itself, but the surfactant (G) in the invention provides additional other effects. Upon localization of the surfactant (G) to the surface area, the hydrophilic functional groups of the surfactant (G) causes mutual action with the hydrophilic groups in the specific polymer (A) and in the hydrophilic polymer (B) and can localize the hydrophilic functional groups in the specific polymer (A) and in the hydrophilic polymer (B). Thus, extremely high hydrophilicity can be realized in the invention. Also, since the surface free energy of the formed film amounts to 75 mN/m or more, water enters into the space between the film and a stain component adhering on the film surface, thus excellent antifouling properties being realized.

The surfactant includes nonionic surfactants, anionic surfactants, cationic surfactants, amphoteric surfactants, and fluorine-containing surfactants. The surfactant (G) is preferably at least one member selected from among anionic surfactants, amphoteric surfactants, and fluorine-containing surfactants.

The nonionic surfactants to be used in the invention are not particularly limited, and any conventionally known ones may be used. For example, they include polyoxyethylene alkyl ethers, polyoxyethylene alkylphenyl ethers, polyoxyethylene polystyrylphenyl ethers, polyoxyethylene polyoxypropylene alkyl ethers, glycerin fatty acid partial esters, sorbitan fatty acid partial esters, pentaerythritol fatty acid partial esters, propylene glycol monofatty acid esters, sucrose fatty acid partial esters, polyoxyethylene sorbitan fatty acid partial esters, polyoxyethylene sorbitol fatty acid partial esters, polyethylene glycol fatty acid esters, polyglycerin fatty acid partial esters, polyoxyethylenated castor oils, polyoxyethylene glycerin fatty acid partial esters, fatty acid diethanolamides, N,N-bis-2-hydroxyalkylamines, polyoxyethylene-alkylamines, triethanolamine fatty acid esters, trialkylamine oxides, polyethylene glycols, and polyethylene glycol/polypropylene glycol copolymers.

The anionic surfactants to be used in the invention are not particularly limited, and any conventionally known ones may be used. For example, they include fatty acid salts, abietic acid salts, hydroxyalkanesulfonic acid salts, alkanesulfonic acid salts, dialkylsulfosuccinate salts, linear alkylbenzenesulfonic acid salts, branched chain alkylbenzenesulfonic acid salts, alkylnaphthalenesulfonic acid salts, alkylphenoxypolyoxyethylene-propylsulfonic acid salts, polyoxyethylene-alkylsulfophenyl ether salts, N-methyl-N-oleyltaurine sodium salts, N-alkylsulfosuccinic acid monoamide disodium salts, petroleum-sulfonic acid salts, sulfated beef tallow oils, sulfate salts of fatty acid alkyl esters, alkylsulfate salts, polyoxyethylene alkyl ether sulfate salts, fatty acid monoglyceride sulfate salts, polyoxyethylene alkylphenyl ether sulfate salts, polyoxyethylene styrylphenyl ether sulfate salts, alkylphosphate salts, polyoxyethylene alkyl ether phosphate salts, polyoxyethylene alkylphenyl ether phosphate salts, styrene/maleic anhydride copolymer partial saponificates, olefin/maleic anhydride copolymer partial saponificates, and naphthalenesulfonic acid salt/formalin condensates.

The cationic surfactants to be used in the invention are not particularly limited, and any conventionally known ones may be used. For example, they include alkylamine salts, quaternary ammonium salts, polyoxyethylene alkylamine salts, and polyethylene polyamine derivatives.
The amphoteric surfactants to be used in the invention are not particularly limited, and any conventionally known ones may be used. For example, they include carboxybetaines, aminocarboxylic acids, sulfobetaines, aminosulfates, and imidazolines.
Additionally, in the above surfactants, "polyoxyethylene" may be replaced with any other "polyoxyalkylene" such as polyoxymethylene, polyoxypropylene, and polyoxybutylene; and all such surfactants are also usable in the invention.

More preferred surfactants are fluorine-containing surfactants, which have a perfluoroalkyl group in the molecule. The fluorine-containing surfactants include, for example, anionic type such as perfluoroalkylcarboxylic acid salts, perfluoroalkylsulfonic acid salts, and perfluoroalkylphosphates; amphoteric type such as perfluoroalkylbetaines; cationic type such as perfluoroalkyltrimethylammonium salts; and nonionic type such as perfluoroalkylamine oxide, perfluoroalkylethylene oxide adducts, oligomers having a perfluoroalkyl group and a hydrophilic group, oligomers having a perfluoroalkyl group and an oleophilic group, oligomers having a perfluoroalkyl group, a hydrophilic group, and an oleophilic group, and urethanes having a perfluoroalkyl group and an oleophilic group. In addition, the fluorine-containing surfactants described in JP-A-62-170950, JP-A-62-226143, and JP-A-60-168144 are also favorably illustrated.
The surfactant is used in the hydrophilic composition of the invention in an amount ranging preferably from 0.001 to 10% by weight, more preferably from 0.01 to 5% by weight, based on the weight of the non-volatile components therein. Also, the surfactants may be used alone or in combination of two or more thereof.

Specific examples of preferred surfactants are shown below, but the invention is not limited at all by them.

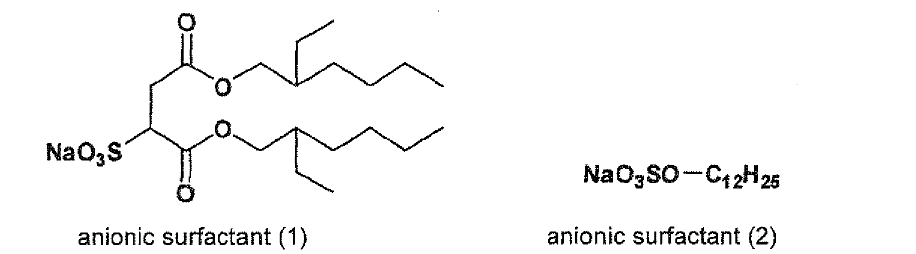

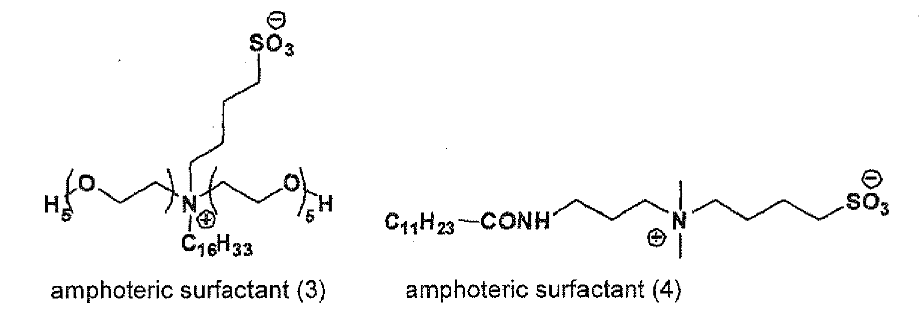

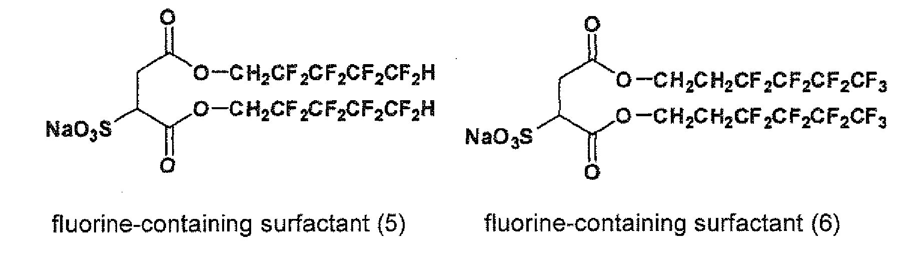

### [Other components]

Various compounds may be additionally used in the hydrophilic composition and the composition for forming the undercoat layer of the invention according to the purpose as long as the advantages of the invention are not spoiled. Components which can additionally be used will be described below.

### [Antibacterial Agent]

In order to impart antibacterial properties, anti-fungal properties, and anti-algal properties to the hydrophilic member of the invention, an antibacterial agent can be contained in the hydrophilic composition and the composition for forming the undercoat layer. It is preferred to contain a hydrophilic, water-soluble antibacterial agent. By containing the hydrophilic, water-soluble antibacterial agent, a surface-hydrophilic member which is excellent in antibacterial properties, anti-fungal properties, and anti-algal properties can be obtained without spoiling the surface hydrophilicity.
As the antibacterial agent, a compound which does not reduce the hydrophilicity of the hydrophilic member is preferred. Examples of such an antibacterial agent include inorganic antibacterial agents and water-soluble organic antibacterial agents. As the antibacterial agent, ones exhibiting an antibacterial effect against microbes existing in the surroundings, for example, bacteria represented by Staphylococcus aureus and Escherichia coli and Eumycetes such as fungi and yeasts are used.

Examples of the organic antibacterial agent include phenol ether derivatives, imidazole derivatives, sulfone derivatives, N-haloalkylthio compounds, anilide derivatives, pyrrole derivatives, quaternary ammonium salts, pyridine based compounds, triazine based compounds, benzisothiazoline based compounds, and isothiazoline based compounds.
For example, there are illustrated 1,2-benzisothiazolin-3-one, N-fluorodichloromethylthiophthalimide, 2,3,5,6-tetra-chloroisophthalonitrile, N-trichloromethylthio-4-cyclohexene-1,2-dicarboxylmide, copper 8-quinolinate, bis-(tributyltin) oxide, 2-(4-thiazolyl)benzimidazole (hereinafter referred to as "TBZ"), methyl 2-benzimidazole carbamate (hereinafter referred to as "BCM"), 10,10'-oxybisphenoxy arsine (hereinafter referred to as "OBPA"), 2,3,5,6-tetrachloro-4-(methylsulfone)pyridine, bis(2-pyridylthio-1-oxide)zinc (hereinafter referred to as "ZPT"), N,N-dimethyl-N'-(fluorodichloromethyl-thio)-N'-phenylsulfamide (dichlorfluanid), poly(hexamethylenebiguanide) hydrochloride, dithiol-2,2'-bis(benzmethylamide), 2-methyl-4,5-trimethylene-4-isothiazolin-3-one, 2-bromo-2-nitro-1,3-propanediol, hexahydro-1,3-tris(2-hydroxyethyl)-s-triazine, p-chloro-m-xylenol, and 1,2-benzisothiazolin-3-one. However, these are not limitatie at all.
These organic antibacterial agents can be properly chosen and used in consideration of hydrophilicity, water resistance, sublimation properties, safety, etc. Of the organic antibacterial agents, 2-bromo-2-nitro-1,3-propanediol, TBZ, BCM, OBPA, and ZPT are preferred in view of hydrophilicity, antibacterial effect, and cost.

As the inorganic antibacterial agent, mercury, silver, copper, zinc, iron, lead, and bismuth can be exemplified in the order of a high sterilization effect. Examples thereof include antibacterial agents obtained by supporting a metal (for example, silver, copper, zinc, or nickel) or a metal ion thereof on a silicate-based carrier, a phosphate-based carrier, an oxide, glass, potassium titanate, an amino acid, etc. Examples thereof include zeolite-based antibacterial agents, calcium silicate-based antibacterial agents, zirconium phosphate-based antibacterial agents, calcium phosphate-based antibacterial agents, zinc oxide-based antibacterial agents, soluble glass-based antibacterial agents, silica gel-based antibacterial agents, active carbon-based antibacterial agents, titanium oxide-based antibacterial agents, titania-based antibacterial agents, organometal-based antibacterial agents, ion exchanger ceramic-based antibacterial agents, stratiform phosphate-quaternary ammonium-based antibacterial agents, and antibacterial stainless steel. However, these are not limitative at all.

Examples of naturally occurring antibacterial agents include chitosan which is a basic polysaccharide obtained by hydrolysis of chitin contained in crustaceans such as crabs and shrimps.
A trade name "HOLON KILLER BEADS CELLER" of Nikko Co., which is composed of an amino metal having a metal compounded on both sides of an amino acid, is preferred in the invention.
Such an antibacterial agent is non-volatile; is easy to mutually act on the polymer or the cross-linking agent component in the hydrophilic layer; and is stably molecularly dispersible or solid dispersible. Also, such an antibacterial agent is easily exposed effectively on the surface of the overcoat layer and, even when wetted with water, does not dissolve out and is able to hold its effect over a long period of time. Furthermore, it does not affect the human body. The antibacterial agent can be stably dispersed in the overcoat layer or the coating solution and does not cause deterioration of the overcoat layer or the coating solution.
Of the foregoing antibacterial agents, silver-based inorganic antibacterial agents and water-soluble organic antibacterial agents are the most preferred in view of the matter that the antibacterial effect is large. A silver zeolite having silver supported on a zeolite as a silicate-based carrier, an antibacterial agent having silver supported on a silica gel, 2-bromo-2-nitro-1,3-propanediol, TPN, TBZ, BCM, OBPA, and ZPT are particularly preferred. Particularly preferred examples of a commercially available silver zeolite-based antibacterial agent include "ZEOMIC" available from Shinagawa Fuel Co., Ltd., "SILMELL" available from Fuji Silysia Chemical Ltd., and "BACTENON" available from Japan Electronic Materials Corporation. Besides, "NOVARON" available from Toagosei Co., Ltd. having silver supported on an inorganic ion exchanger ceramic, "ATOMY BALM" available from Catalysts & Chemicals Ind. Co., Ltd., and "SAN-AI BAC P" available from San-Ai Oil Co., Ltd. which is a triazine-based antibacterial agent are also preferred.

The content of the antibacterial agent in the hydrophilic composition and in the composition for forming the undercoat layer is generally from 0.001 to 10% by weight, preferably from 0.005 to 5% by weight, more preferably from 0.01 to 3% by weight, particularly preferably from 0.02 to 1.5% by weight, most preferably from 0.05 to 1% by weight, based on the weight of the non-volatile components. When the content of the antibacterial agent is 0.001% by weight or more, an effective antibacterial effect can be obtained. Also, when the content of the antibacterial agent is 10% by weight or less, the hydrophilicity is not reduced, the properties with time do not become worse, and the antifouling properties and anti-fogging properties are not adversely affected.

### [Inorganic fine particles]

The hydrophilic layer and the composition for forming the undercoat layer of the invention may contain inorganic fine particles for the purposes of improving cured film strength and the hydrophilicity of the formed film. As preferred examples of the inorganic fine particles, there are illustrated silica, alumina, magnesium oxide, titanium oxide, magnesium carbonate, calcium alginate, and mixtures thereof.
The inorganic fine particles preferably have an average particle size of from 5 nm to 10 µm, more preferably from 0.5 to 3 µm. When the particle size of the inorganic fine particles falls within the foregoing range, they can stably be dispersed in the layer, whereby sufficient film strength can be maintained, thus a hydrophilic member with excellent hydrophilicity being obtained. The inorganic fine particles as described above are readily available as a commercial product such as a colloidal silica dispersion.

The inorganic fine particles in accordance with the invention is used in an amount of preferably 20% by weight or less, more preferably 10% by weight or less, based on the weight of the non-volatile components. The inorganic fine particles may be used alone or in combination of two or more thereof in kind.

### [Ultraviolet absorbent]

From the viewpoint of improving weatherability and durability of a hydrophilic member, an ultraviolet absorbent can be used in the invention.
As the ultraviolet absorbent, there are illustrated the benzotriazole compounds described, e.g., in JP-A-58-185677, JP-A-61-190537, JP-A-2-782, JP-A-5-197075, and JP-A-9-34057, the benzophenone compounds described, e.g., in JP-A-46-2784, JP-A-5-194483, and U.S. Pat. No. 3,214,463, the cinnamic acid compounds described, e.g., in JP-B-48-30492, JP-B-56-21141, and JP-A-10-88106, the triazine compounds described, e.g., in JP-A-4-298503, JP-A-8-53427, JP-A-8-239368, JP-A-10-182621, JP-T-8-501291, the compounds described in Research Disclosure, No. 24239, and the compounds generating fluorescence by absorbing ultraviolet rays, typified by stilbene compounds and benzoxazole compounds, the so-called fluorescent whiteners.
The addition amount is properly selected according to the intended purpose and, generally, is preferably from 0.5 to 15% by mass on a solids basis.

### [Antioxidant]

An antioxidant can be added to the hydrophilic composition and the composition for forming the undercoat layer for the purpose of improving the stability of the hydrophilic member of the invention. As the antioxidant, there can be illustrated the compounds described in EP-A-223739, EP-A-309401, EP-A-309402, EP-A-310551, EP-A-310552, EP-A-459416, DE-A-3435443, JP-A-54-48535, JP-A-62-262047, JP-A-63-113536, JP-A-63-163351, JP-A-2-262654, JP-A-2-71262, JP-A-3-121449, JP-A-5-61166, JP-A-5-119449, and U.S. Pat. Nos. 4,814,262 and 4,980,275.
The addition amount of the antioxidant is properly selected according to the intended purpose, and is preferably from 0.1 to 8% by mass on a solids basis.

### [Solvent]

For the purpose of securing formability of a uniform coating on a substrate at the time of forming the undercoat layer and the overcoat layer of the hydrophilic member of the invention, it is also effective to add an organic solvent in a moderate amount to the hydrophilic composition and the composition for forming the undercoat layer.
As the solvent, there are illustrated, for example, ketone solvents such as acetone, methyl ethyl ketone, and diethyl ketone; alcohol solvents such as methanol, ethanol, 2-propanol, 1-propanol, 1-butanol, and tert-butanol; chlorine-containing solvents such as chloroform and methylene chloride; aromatic solvents such as benzene and toluene; ester solvents such as ethyl acetate, butyl acetate, and isopropyl acetate; ether solvents such as diethyl ether, tetrahydrofuran, and dioxane; and glycol ether solvents such as ethylene glycol monomethyl ether and ethylene glycol dimethyl ether.
In this case, the addition of such a solvent is effective within the quantitative limitation within which no troubles related to VOC (volatile organic solvent) will occur, and the addition amount is preferably from 0 to 50% by mass, more preferably from 0 to 30% by mass, based on the total amount of the coating solution upon formation of the hydrophilic member.

### [High-molecular compound]

For the purpose of controlling film properties of the hydrophilic layer, various kinds of high-molecular compounds can be added to the hydrophilic composition and the composition for forming the undercoat layer of the invention within an amount of not spoiling hydrophilicity. As the high-molecular compound, there can be used acrylic polymers, polyvinyl alcohol resins, polyvinyl butyral resins, polyurethane resins, polyamide resins, polyester resins, epoxy resins, phenol resins, polycarbonate resins, polyvinyl formal resins, shellac, vinyl resins, acrylic resins, gum resins, waxes, and other natural resins. Any two or more of these resins may be used in combination. Of these resins, vinyl copolymerization obtained by copolymerization of acrylic monomers are preferred. Further, as a copolymer composition for polymeric binder, copolymers containing as structural units "carboxyl group-containing monomers", "alkyl methacrylates" or "alkyl acrylates" can also be preferably used.

### [Other additives]

Also, it is possible to further add as required, e.g., a leveling additive and a matting agent, waxes for adjusting film properties, and a tackifier for improvement in adhesiveness to a substrate in an amount not spoiling hydrophilicity.
Specific examples of the tackifier include the high-molecular-weight tacky polymers described in JP-A-2001-49200, pp. 5-6 (such as copolymers comprising (esters between (meth)acrylic acid and an alcohol containing from 1 to 20 carbon atoms, esters between (meth)acrylic acid and an alicyclic alcohol containing from 3 to 14 carbon atoms, and esters between (meth)acrylic acid and an aromatic alcohol containing from 6 to 14 carbon atoms), and low-molecular-weight tackiness imparting resin having polymerizable unsaturated bonds.

The hydrophilic composition and the composition for forming the undercoat layer of the invention may contain zirconia chlorides, nitrates, alkoxides, and organic complexes, from the viewpoint of the abrasion resistance, the acid resistance, and the alkali resistance. The zirconia chloride includes zirconium chloride, zirconium oxychloride (8 hydrate), chlorine-containing zirconium alkoxide Zr(OCₘH₂ₘ₊₁)ₓCl_{y} (wherein m, x, and y each represents an integer with x+y=4). The zirconium nitrate includes zirconium oxynitrate (2 hydrate); the zirconium alkoxide includes zirconium ethoxide, zirconium propoxide, zirconium isopropoxide, zirconium butoxide, and zirconium t-butoxide; and the organic complex includes acetylacetone derivatives, specifically tetrakis(acetylacetonato)zirconium, bis(acetylacetonato)zirconium dibutoxide, bis(acetylacetonato)zirconium dichloride, tetrakis(3,5-heptanedionato) zirconium, tetrakis(2,2,6,6-tetramethyl-3,5-heptanedionato)zirconium, and bis(2,2,6,6-tetramethyl-3,5-heptanedionato)zirconium isopropoxide.
The above-described zirconium compound is used in the hydrophilic composition and in the composition for forming the undercoat layer of the invention in an amount of preferably from 0 to 50% by weight, more preferably from 5 to 25% by weight, based on the non-volatile components.

### [Preparation of hydrophilic composition]

Preparation of the hydrophilic composition can be conducted by dissolving at least one of (A) the specific hydrophilic polymer and (B) the specific hydrophilic polymer and, as needed, (E) the catalyst and (F) the specific alkoxide in a solvent such as ethanol, and stirring the resulting mixture. The reaction temperature is from room temperature to 80°C, and the reaction time, i.e., the period of continuing stirring, is in the range of preferably from 1 to 72 hours. By this stirring, hydrolysis and polycondensation of the two components is allowed to proceed to obtain an organic inorganic composite sol solution.

The solvent to be used in preparing the hydrophilic composition is not particularly limited so long as it can uniformly dissolve or disperse the components, but is preferably an aqueous solvent such as methanol, ethanol or water.

As has been described hereinbefore, preparation of the organic inorganic composite sol solution (hydrophilic composition) for forming a hydrophilic film from the hydrophilic composition of the invention utilizes the sol-gel process. The sol-gel process is described in detail in such books as "Sol-gel Ho Niyoru Hakumaku Coating gijutsu" published by K. K. Gijutsu Joho Kyokai in year 1988, Sol-gel Ho No Kagaku by Sumio Sakuhana and published by K. K. Agune Shofu-sha in year 1988 and Saisin Sol-gel Ho Niyoru Kinosei Hakumaku Sakusei Gijutsu by Seki Hirajima and published by Sogo Gijutsu Center in year 1992, and the processes described therein can be applied to preparation of the hydrophilic composition in the invention.

### [Preparation of the composition for forming the undercoat layer]

Preparation of the composition for forming the undercoat layer can be conducted by dissolving the specific alkoxide (C), the alkoxysilane and, as needed, the catalyst (E) in a solvent such as ethanol, and stirring the solution.
The composition for forming the undercoat layer can also be prepared in the same manner as with the above-described hydrophilic composition.

The hydrophilic member of the invention can be obtained by coating the solution that contains the composition for forming the undercoat layer and the solution that contains the hydrophilic composition of the invention onto a suitable substrate, and drying them. That is, the hydrophilic member of the invention is obtained by coating on a substrate the composition for forming the undercoat layer, and heating and drying to form the undercoat layer, and then coating the hydrophilic composition thereon, and heating and drying to form the overcoat layer.
Regarding the heating and drying conditions, the heating and drying are conducted preferably at a temperature falling within a range of from 50 to 200°C for 2 minutes to 1 hour or so, more preferably at a temperature falling within a range of from 80 to 160°C for 5 to 30 minutes, from the viewpoint of efficiently forming a high-density cross-linked structure. Any known heating means may be employed as heating means. For example, preferably used is a drier having a temperature-controlling function.

Also, in the case where the hydrophilic member of the invention is produced by forming the overcoat layer and the undercoat layer on a substrate, the catalyst may be mixed with the coating compositions immediately before applying the compositions onto the substrate. Specifically, it is preferred that the coating compositions are applied immediately after or within 1 hour after the catalyst is mixed with them. When the catalyst is mixed with them and left as such for a long period of time and then applied onto a substrate, then the viscosity of the composition for forming the undercoat layer or the hydrophilic composition may increase, thus sometimes coating defects such as coating unevenness being caused. The other components are also preferably mixed just before the coating operation, but they may be stored for a long period of time after being mixed.

### [Substrate]

The substrate for use in the invention is not particularly limited, and any of glass, plastics, metals, ceramics, wood, stones, cement, concrete, fibers, fabrics, paper, leathers, tiles, rubbers, latexes, and their combinations and laminates can favorably be used. Particularly preferred are flexible substrates such as plastic substrates and metal substrates. Use of such flexible substrates allows to transform articles, which serves to increase degree of freedom with respect to mounting work and mounting site and to enhance durability. Usually, when the trifunctional or bifunctional alkoxysilane (D) to be used in the invention is used in the undercoat layer, the surface of the undercoat layer becomes hydrophobic, and hence there exists the fear that uneven coating may occur upon forming the hydrophilic layer thereon or that there may result insufficient adhesion. Therefore, it has been believed that use of the trifunctional or bifunctional alkoxysilane (D) in the undercoat layer of the hydrophilic member is problematical. In the invention, however, combination with a silane coupling group-having hydrophilic polymer has realized special effects.
The plastic substrate to be used in the invention is not particularly limited. As a substrate for optical members, an appropriate one is selected in consideration of the optical properties thereof such as the transparency, the refractivity, and the dispersibility thereof, and the substrate of the type is selected in consideration of various properties thereof, for example, the physical properties such as strength, e.g., impact resistance and flexibility thereof, and also the heat resistance, the weather resistance, and the durability thereof, depending upon its use. As the plastic substrate to be used in the invention, there can be illustrated films or sheets of polyester, polyethylene, polypropylene, cellophane, triacetyl cellulose, diacetyl cellulose, acetyl cellulose butyrate, polyvinyl chloride, polyvinylidene chloride, polyvinyl alcohol, polyethylene-vinyl alcohol, polystyrene, polycarbonate, polymethylpentene, polysulfone, polyether ketone, acrylic resin, nylon, fluorine-containing resin, polyimide, polyetherimide, and polyether sulfone. Of those, polyester films of polyethylene terephthalate, polyethylene naphthalate, etc. are particularly preferred. Depending on their use, these may be used alone or as combined in the form of their mixtures, copolymers or laminates. The thickness of the plastic substrate varies depending upon the layer to be laminated thereon. For example, in a part having many curved profiles, thinner substrates are preferred and, thus, substrates having a thickness of from about 6 to about 50 µm are used. Also, in a flat part, or in a part that must have high strength, substrates having a thickness of from 50 to 400 µm are used.

For the purpose of increasing the adhesion between the substrate and the undercoat layer, if desired, one or both surfaces of the substrate may be treated for imparting hydrophilicity to the surface through oxidation or surface roughening. As the oxidation treatment, there are illustrated, for example, corona discharge treatment, glow discharge treatment, chromic acid treatment (wet treatment), flame treatment, hot air treatment, and ozone/UV irradiation treatment. As to the surface-roughening treatment, mechanical surface-roughening treatment may be conducted by sand blasting or brushing.

The plastic substrate for use herein may comprise a plastic sheet having formed thereon an inorganic compound layer such as that mentioned hereinafter for glass sheets. In this case, the inorganic compound layer may serve as an antireflection layer. The inorganic compound layer may be formed on a plastic sheet in the same manner as that mentioned hereinabove for inorganic substrates.

In the case where an inorganic compound layer is formed on a transparent plastic substrate, a hard coat layer may be formed between the two layers. The hard coat layer may improve the surface hardness of the substrate having it, and may smooth the substrate surface and, therefore, the adhesion between the transparent plastic substrate and the inorganic compound layer may be improved, the scratch resistance of the substrate may be improved, and the inorganic compound layer may be prevented from being cracked when the substrate is bent. Use of the substrate of the type improves the mechanical strength of the hydrophilic member. Materials for forming the hard coat layer are not particularly limited, and any material that has transparency, suitable strength, and mechanical strength may be used. For example, a resin curable through irradiation with ionizing radiations or UV rays, or a thermo-setting resin may be used and, in particular, UV-curable acrylic resins, organo-silicon resins, and thermo-setting polysiloxane resins are preferred. More preferably, the refractive index of the resin is on the same level as or is near to the refractive index of the transparent plastic substrate.

Methods for forming the hard coat layer are not particularly limited, and any method that can permit uniform coating may be employed. The thickness of the hard coat layer may be 3 µm for its sufficient strength, but is preferably within a range of from 5 to 7 µm in view of the transparency, the coating accuracy, and the handlability thereof. Further, inorganic or organic particles having an average particle size of from 0.01 to 3 µm may be mixed and dispersed in the hard coat layer for light diffusion treatment of the layer generally referred to as antiglare treatment. The material of the particles is not particularly limited and may be any transparent one, but is preferably one having a low refractive index. Particularly preferred are silicon oxide and magnesium fluoride in view of their stability and heat resistance. The light diffusion treatment may also be attained by roughening the surface of the hard coat layer. When provided between the substrate and the undercoat layer, the inorganic compound layer and the hard coat layer serves to improve adhesion between the substrate and the undercoat layer.

As the metal thin sheet, an aluminum sheet is particularly preferred.
The aluminum sheet is a pure aluminum sheet, an alloy sheet mainly composed of aluminum and containing trace amounts of foreign elements, or a sheet wherein a plastic film is laminated on a thin film of aluminum or aluminum alloy. The foreign elements contained in the aluminum alloys include silicon, iron, manganese, copper, magnesium, chromium, zinc, bismuth, nickel, and titanium. The amount of the foreign elements contained in the alloys is 10% by weight or less than that. Of these, a pure aluminum sheet is preferred in the invention. However, it is difficult to produce pure aluminum in terms of refining technology, and hence aluminum containing the foreign elements in trace amounts is also allowed. The aluminum sheets are not particularly limited as to their composition, and aluminum sheets made of previously known and used materials can be appropriately utilized.

The thickness of the substrate is preferably from 0.05 to 0.6 mm, more preferably from 0.08 to 0.2 mm.

Prior to use, the aluminum sheet is preferably subjected to a surface treatment such as a surface-roughening treatment or an anode oxidation treatment. Such surface treatment serves to improve hydrophilicity of the substrate and to make it easy to ensure adhesion between the undercoat layer and the substrate. Prior to the surface-roughening treatment of the aluminum sheet, degreasing treatment may be conducted, as needed, with a surfactant, an organic solvent or with an alkaline aqueous solution for removing rolling oil remaining on the surface of the sheet. The methods for treating the aluminum substrate may be conducted in a known manner.

As the substrate to be used in the invention, a substrate having been subjected to the surface treatment as described above and having an anodic oxide film may be used as such but, in order to more improve adhesion to the upper layer, the substrate may be subjected to another treatment as need, for example, the treatment for expanding or sealing the micropores in the anodic oxide film described in JP-A-2001-253181 and JP-A-2001-322365 or a surface hydrophilizing treatment of immersing it in an aqueous solution containing a hydrophilic compound. The expanding and sealing treatments are not limited to the methods described above, and any one of conventionally known methods may be used.
For example, as the micropore sealing treatment, treatment with fluorozirconic acid alone, treatment with sodium fluoride, and treatment with lithium chloride-containing steam may be employable as well as treatment with steam.

### <Micropore sealing treatment>

The micropore sealing treatment to be used in the invention is not particularly limited, and any of conventionally known treatments may be used. Among them, micropore sealing treatment in an aqueous solution containing an inorganic fluorine compound, micropore sealing treatment with water vapor, and micropore sealing treatment with hot water are preferred. The treatments are respectively described below.

### <Micropore sealing treatment in an aqueous solution containing an inorganic fluorine compound>

The inorganic fluorine compound to be used in micropore sealing treatment in an aqueous solution containing an inorganic fluorine compound is preferably a metal fluoride.
Specifically, there are illustrated, for example, sodium fluoride, potassium fluoride, calcium fluoride, magnesium fluoride, sodium fluorozirconate, potassium fluorozirconate, sodium fluorotitanate, potassium fluorotitanate, ammonium fluorozirconate, ammonium fluorotitanate, potassium fluorotitanate, fluorozirconic acid, fluorotitanic acid, hexafluorosilicic acid, nickel fluoride, iron fluoride, fluorophosphoric acid, and ammonium fluorophosphate. Of these, sodium fluorozirconate, sodium fluorotitanate, fluorozirconic acid, and fluorotitanic acid are preferred.

The concentration of the inorganic fluorine compound in the aqueous solution is 0.01% by weight or more, more preferably 0.05% by weight or more, from the viewpoint of sufficiently sealing the micropores on the anodic oxide film, and preferably 1% by weight or less, more preferably 0.5% by weight or less, from the viewpoint of stain resistance.

Preferably, the aqueous solution containing an inorganic fluorine compound further contains a phosphate compound. Preferred examples of the phosphate compound include metal phosphates such as alkali metal phosphates and alkaline metal phosphates.
Specific examples thereof include zinc phosphate, aluminum phosphate, ammonium phosphate, diammonium hydrogen phosphate, ammonium dihydrogen phosphate, monoammonium phosphate, monopotassium phosphate, monosodium phosphate, potassium dihydrogen phosphate, dipotassium hydrogen phosphate, calcium phosphate, ammonium sodium hydrogen phosphate, magnesium hydrogen phosphate, magnesium phosphate, ferrous phosphate, ferric phosphate, sodium dihydrogen phosphate, sodium phosphate, disodium hydrogen phosphate, lead phosphate, diammonium phosphate, calcium dihydrogen phosphate, lithium phosphate, phosphotungstic acid, ammonium phosphotungstate, sodium phosphotungstate, ammonium phosphomolybdate, sodium phosphomolybdate, sodium phosphite, sodium tripolyphosphate, and sodium pyrophosphate. Of these, sodium dihydrogen phosphate, disodium hydrogen phosphate, potassium dihydrogen phosphate, and dipotassium hydrogen phosphate are preferred.
Combination of the inorganic fluorine compound and the phosphate compound is not particularly limited, but it is preferred that the aqueous solution contains at least sodium fluorozirconate as the inorganic fluorine compound and at least sodium dihydrogen phosphate as the phosphate compound.

The concentration of the phosphate compound in the aqueous solution is preferably 0.01% by weight or more, more preferably 0.1% by weight or more, from the viewpoint of stain resistance, and is preferably 20% by weight or less, more preferably 5% by weight or less, from the viewpoint of solubility.

The proportion between the compounds in the aqueous solution is not particularly limited, but the weight ratio of the inorganic fluorine compound to the phosphate compound is preferably from 1/200 to 10/1, more preferably from 1/30 to 2/1.
Also, the temperature of the aqueous solution is preferably 20°C or more, more preferably 40°C or more, and is preferably 100°C or less, more preferably 80°C or less.
The pH of the aqueous solution is preferably 1 or more, more preferably 2 or more, and is preferably 11 or less, more preferably 5 or less.
The method for the micropore sealing treatment in an aqueous solution containing an inorganic fluorine compound is not particularly limited, and examples thereof include an immersion method and a spray method. Operations in these methods may be performed once or more than once individually, or these methods may be used in combination.
Among the methods, the immersion method is preferred. In the case where the immersion method is used for the treatment, the treatment period is preferably 1 second or longer, more preferably 3 seconds or longer, and is preferably 100 seconds or shorter, more preferably 20 seconds or shorter.

### <Micropore sealing treatment in steam>

The micropore sealing treatment in steam can be performed, for example, by bringing steam under elevated or normal pressure into contact with the anodic oxide film continuously or non-continuously.
The temperature of the steam is preferably 80°C or higher, more preferably 95°C or higher, and is preferably 105°C or lower.
The pressure of the steam is preferably in the range of (atmospheric pressure - 50 mmAq) to (atmospheric pressure + 300 mmAq), or (1.00×10⁵ to 1.043×10⁵ Pa).
The contact time of the steam is preferably 1 second or longer, more preferably 3 seconds or longer, and is preferably 100 seconds or shorter, more preferably 20 seconds or shorter.

### <Micropore Sealing treatment in hot water>

The micropore sealing treatment in steam is performed, for example, by immersing an aluminum sheet having formed thereon an anodic oxide film in hot water. The hot water may contain an inorganic salt (e.g., phosphate salt) or an organic salt.
The temperature of the hot water is preferably 80°C or higher, more preferably 95°C or higher, and is preferably 100°C or lower. The period of immersion in hot water is preferably 1 second or longer, more preferably 3 seconds or longer, and is preferably 100 seconds or shorter, more preferably 20 seconds or shorter.

### <Hydrophilizing treatment>

As the hydrophilizing treatment, there is illustrated the alkali metal silicate methods described in US Patent Nos. 2,714,066, 3,181,461, 3,280,734, and 3,902,734. In this treatment, the support is immersed or electrolyzed in an aqueous solution of, for example, sodium silicate or the like. Also included are the method of treating the support with potassium fluorozirconate described in JP-B-36-22063 and the method of treating it with polyvinylphosphonic acid described in US Patent Nos. 3,276,868, 4,153,461, and 4,689,272.

The support preferably has an average center-line roughness of from 0.10 to 1.2 µm. In this range, it is possible to obtain desirable adhesion to the undercoat layer and good staining resistance.

As a glass plate to be used in the invention, there can be illustrated glass plates with inorganic compound layers formed from metallic oxides such as silicon oxide, aluminum oxide, magnesium oxide, titanium oxide, tin oxide, zirconium oxide, sodium oxide, antimony oxide, indium oxide, bismuth oxide, yttrium oxide, cerium oxide, zinc oxide, and ITO (Indium Tin Oxide); and metal halides such as magnesium fluoride, calcium fluoride, lanthanum fluoride, cerium fluoride, lithium fluoride, and thorium fluoride. Also, float sheet glass, figured sheet glass, ground sheet glass, wire glass, crosswire glass, tempered glass, laminated glass, multilayered glass, vacuum glass, security glass and high-heat insulating Low-E multi-layered glass can be used depending upon the purpose. Though the foregoing undercoat layer and the hydrophilic layer can be provided by coating on a raw sheet glass as it is, one surface or both surfaces of the sheet glass can be subjected to a surface hydrophilization treatment such as an oxidation method and a roughing method for the purpose of enhancing the adhesion of the undercoat layer and the hydrophilic layer, as the need arises. Examples of the foregoing oxidation method include a corona discharge treatment, a glow discharge treatment, a chromic acid treatment (wet type), a flame treatment, a hot blast treatment, and an ozone or ultraviolet ray irradiation treatment. As the roughing method, mechanical roughing by sand blast, brush polishing, etc. can be applied.

Such inorganic compound layers each can be configured to have a single-layer or multi-layer structure. Depending on the thickness, each inorganic compound layer allows retention of transmittance to light in some instances, or allows to act as an antireflection layer in other instances. To the formation of inorganic compound layers are applicable known methods including coating methods such as a dip coating method, a spin coating method, a flow coating method, a spray coating method, a roll coating method, and a gravure coating method; and vapor-phase methods including a physical vapor deposition (PVD) method and a chemical vapor deposition (CVD) method, such as a vacuum evaporation method, a reactive evaporation method, an ion-beam assist method, a sputtering method, and an ion plating method.

### [Layer configuration upon use of hydrophilic member]

In the case where the hydrophilic member of the invention is used while expecting an effect for revealing antifouling properties and/or anti-fogging properties, it can be used with proper addition of another layer depending upon the purpose, form, or use place. The layer configuration which is added as the need arises is described below.

### 1) Adhesive layer

In the case where the hydrophilic member of the invention is stuck on another substrate to use, an adhesive which is a pressure-sensitive adhesive is favorably used as an adhesive layer on the back surface of the substrate. As the adhesive, adhesives generally used for an adhesive sheet, for example, rubber based adhesives, acrylic adhesives, silicone based adhesives, vinyl ether based adhesives, and styrene based adhesives can be used.
In the case where optically transparent one is required, adhesives useful for an optical application are chosen. In the case where coloration, semi-transparency or a pattern with a mat tone is required, it is possible to bring the effect by adding a dye or organic or inorganic fine particles to the adhesive in addition to patterning on the substrate.
In the case where a tackifier is required, a resin, for example, tackiness-imparting resins (for example, rosin based resins, terpene based resins, petroleum resins, styrene based resins, and hydrogenation products thereof) can be used alone or as a mixture thereof.
The adhesive strength of the adhesive to be used in the invention is of generally called strong adhesion and is 200 g/25 mm or more, preferably 300 g/25 mm or more, more preferably 400 g/25 mm or more. Additionally, the term "adhesive strength" as referred to herein is a value as measured by a 180-degree peeling test according to JIS Z0237.

### 2) Release layer

In the case where the hydrophilic member of the invention has the foregoing adhesive layer, a release layer can be further added. In order to impart release properties, it is preferred that a release agent is contained in the release layer. As the release agent, in general, silicone based release agents composed of a polyorganosiloxane, fluorocarbon based compounds, long-chain alkyl-modified products of polyvinyl alcohol, long-chain alkyl-modified products of polyethyleneimine, and the like can be used. Also, various release agents, for example, hot melt type release agents and monomer type release agents capable of curing a releasable monomer by means of radical polymerization, cationic polymerization, polycondensation reaction, etc. and, besides, copolymer based resins, for example, acryl-silicone based copolymer resins, acryl-fluorocarbon based copolymer resins, and urethane-silicone-fluorocarbon based copolymer resins, resin blends of a silicone based resin and an acrylic resin, and resin blends of a fluorocarbon based resin and an acrylic resin may be used. Also, a hard coat release layer obtained by curing a curable composition containing any one of a fluorine atom and/or a silicon atom and an active energy ray-polymerizable group-containing compound may be formed.

### 3) Other layers

A protective layer may be provided on the overcoat layer (hydrophilic layer). The protective layer has a function for preventing injuring on the hydrophilic surface upon handling, shipment or storage or the like or preventing reduction of the hydrophilicity to be caused due to the adhesion of a staining substance. As the protective layer, the hydrophilic polymer layer used in the foregoing release layer can be used. The protective layer is peeled away after sticking the hydrophilic member onto an adequate substrate.

### [Form of structure]

The structure having the hydrophilic layer of the invention may be fed in a sheet-like form, a roll-like form, or a ribbon-like form. For the purpose of sticking onto an adequate substrate, the structure may be fed in a form in which it is previously cut.

In the case of applying (using or sticking) the hydrophilic member having provided thereon the hydrophilic layer of the invention by coating to a window pane or the like, transparency is of importance in view of ensuring visibility. The aforesaid hydrophilic film has excellent transparency and, even when the film thickness is large, does not suffer reduction in transparency, thus the film being capable of providing both transparency and durability. The thickness of the hydrophilic film is preferably from 0.01 µm to 100 µm, more preferably from 0.05 µm to 50 µm, most preferably from 0.1 µm to 20 µm. When the thickness is 0.01 µm or more, there can be obtained sufficient hydrophilicity and durability, thus such thickness being preferred and, when the thickness is 100 µm or less, there are involved no problems with respect to filming properties, such as formation of cracks, thus such thickness being preferred.
The above-described film thickness can be attained by adjusting the dry coated amount of the hydrophilic layer of the invention to preferably from 0.01 g/m² to 100 g/m², more preferably from 0.02 g/m² to 80 g/m², particularly preferably from 0.05 g/m² to 50 g/m².
Also, the thickness of the undercoat layer is preferably from 0.01 µm to 100 µm, more preferably from 0.02 µm to 80 µm, still more preferably from 0.05 µm to 50 µm.
The above-described film thickness can be attained by adjusting the dry coated amount of the composition for forming the undercoat layer to preferably from 0.01 g/m² to 100 g/m², more preferably from 0.02 g/m² to 80 g/m², particularly preferably from 0.05 g/m² to 50 g/m².
The transparency is evaluated by measuring a light transmittance in a visible light region (from 400 nm to 800 nm) by a spectrophotometer. The light transmittance is preferably in the range of from 100% to 70%, more preferably from 95% to 75%, most preferably from 95% to 80%. When the light transmittance falls within this range, the hydrophilic member having a hydrophilic film provided therein can be applied to various applications without disturbing the visibility.

The hydrophilic member of the invention can be obtained by coating an adequate substrate with the composition for forming the undercoat layer and the hydrophilic composition, and heat-drying to form a surface hydrophilic layer.
As methods for coating the composition for forming the undercoat layer and the hydrophilic composition, known coating methods may be employed. Examples of the coating method which can be applied include a spray coating method, a dip coating method, a flow coating method, a spin coating method, a roll coating method, a film applicator method, a screen printing method, a bar coater method, painting with a brush, and painting with a sponge.

In the case where anti-fogging effect is expected, examples to which the hydrophilic member of the invention is applicable are transparent ones such as a transparent glass substrate or transparent plastic substrate, a lens, a prism, a mirror, etc.
As glasses, any of soda-lime glass, lead glass, and borosilicate glass may be used. Also, float sheet glass, figured sheet glass, ground sheet glass, wire glass, crosswire glass, tempered glass, laminated glass, multi-layered glass, vacuum glass, security glass, and high-heat insulating Low-E multi-layered glass can be used depending upon the purpose.
Uses to which the hydrophilic members having the anti-fogging effect are applicable include mirrors such as rearview mirrors, mirrors for use in bathrooms, washstand mirrors, mirrors for dental use, and road mirrors; lenses such as lenses of spectacles, optical lenses, lenses for cameras, endoscope lenses, lenses for use in lighting, lenses for use in semiconductor equipment, and lenses for use in copiers; prisms; window panes of buildings or lookout towers; glasses for other building materials; window glasses for automobiles, railroad vehicles, aircraft, submarines, snow cars, gondolas of ropeway, gondolas of amusement parks, and various vehicles; wind-proof glasses for other building materials; window glasses for automobiles, railroad vehicles, aircraft, submarines, snow cars, snowmobiles, motor cycles, gondolas of ropeway, gondolas of amusement parks, and various vehicles; glasses for protective goggles, sporting goggles, protective mask shields, sports mask shields, helmet shields, and show cases for frozen foods; instrument cover glasses; and films for sticking to the surface of the above-described articles. The most preferred use is for glasses for automobiles and building materials.

Also, in the case where the surface-hydrophilic member of the invention is expected to have anti-fouling effect, examples of the substrate include metal, ceramic, wood, stone, cement, concrete, fiber, fabric, paper and combinations or laminates of these materials can preferably be utilized as a substrate beside the glasses and plastics.
Examples of uses to which the member having anti-fouling effect is applicable include building materials, exteriors of buildings such as exterior walls and roofs; interiors of buildings, window frames, window panes, and structural members; exteriors and coatings of vehicles such as automobiles, rail cars, aircraft, boats and ships, bicycles, and motorbikes; exteriors, dust-resistant covers and coatings of mechanical devices and articles; exteriors and coatings of traffic signs, various display devices, advertising towers, road sound abatement shields, railroad soundproof walls, bridges, and guardrails; interiors and coatings of tunnels; insulators, solar cell covers, heat collecting covers of solar water heaters, vinyl houses, panel light covers of cars, home accommodations, toilets, bathtubs, washstands, lighting fixtures, illumination covers, kitchen utensils, dishes, dish washers, dish driers, sinks, kitchen ranges, kitchen hoods, ventilating fans, and films for sticking to the surface of the above-described articles.
Also included are signboards, traffic signs, soundproof walls, vinyl houses, insulators, covers for vehicles, tent materials, anti-reflection plates, shutters, screen doors, solar cell covers, covers for heat collectors of solar water heaters, streetlights, paved roads, outdoor illumination, stones for artificial fall and artificial fountain, tiles, bridges, greenhouses, outside wall members, sealers between walls or glasses, guardrails, verandas, vending machines, outdoor machines for air conditioners, outdoor benches, various display devices, shutters, tollgates, fee boxes, gutters for roofs, covers for protecting vehicle lamps, dust-resistant covers and coatings, coatings of mechanical apparatuses and articles, exteriors and coatings of advertising towers, structural members, home accommodations, toilets, bathtubs, washstands, lighting fixtures, kitchen utensils, dishes, dish driers, sinks, kitchen ranges, kitchen hoods, ventilating fans, window rails, window frames, inside walls of tunnels, illumination inside tunnels, window sashes, radiation fins for heat exchangers, pavement, mirrors for use in bathrooms, washstand mirrors, ceilings for vinyl houses, washing and dressing tables, automobile bodies, and films for sticking to the surface of the above-described articles.
Application to roof members for snowy countries, antennas, power cables, and the like is also possible. In such cases, excellent snow-phobic properties are obtained.

Also, in the case where the surface-hydrophilic member of the invention is expected to show quick water-drying properties, examples of the substrate include metal, ceramic, wood, stone, cement, concrete, fiber, fabric, paper and combinations or laminates of these materials, and can preferably be utilized as a substrate beside the glasses and plastics. Examples of uses to which the member showing quick water-drying properties is applicable include building materials; exteriors of buildings such as exterior walls and roofs; interiors of buildings, window frames, window panes, and structural members; exteriors and coatings of vehicles such as automobiles, rail cars, aircraft, boats and ships, bicycles, and motorbikes; exteriors, dust-resistant covers and coatings of mechanical devices and articles; exteriors and coatings of traffic signs, various display devices, advertising towers, road sound abatement shields, railroad soundproof walls, bridges, and guardrails; interiors and coatings of tunnels; insulators, solar cell covers, heat collecting covers of solar water heaters, vinyl houses, panel light covers of cars, home accommodations, toilets, bathtubs, washstands, lighting fixtures, illumination covers, kitchen utensils, dishes, dish washers, dish driers, sinks, kitchen ranges, kitchen hoods, ventilating fans, and films for sticking to the surface of the above-described articles.
Also included are signboards, traffic signs, soundproof walls, vinyl houses, insulators, covers for vehicles, tent materials, anti-reflection plates, shutters, screen doors, solar cell covers, covers for heat collectors of solar water heaters, streetlights, paved roads, outdoor illumination, stones for artificial fall and artificial fountain, tiles, bridges, greenhouses, outside wall members, sealers between walls or glasses, guardrails, verandas, vending machines, outdoor machines for air conditioners, outdoor benches, various display devices, shutters, tollgates, fee boxes, gutters for roofs, covers for protecting vehicle lamps, dust-resistant covers and coatings, coatings of mechanical apparatuses and articles, exteriors and coatings of advertising towers, structural members, home accommodations, toilets, bathtubs, washstands, lighting fixtures, kitchen utensils, dishes, dish driers, sinks, kitchen ranges, kitchen hoods, ventilating fans, window rails, window frames, inside walls of tunnels, illumination inside tunnels, window sashes, radiation fins for heat exchangers, pavement, mirrors for use in bathrooms, washstand mirrors, ceilings for vinyl houses, washing and dressing tables, automobile bodies, and films for sticking to the surface of the above-described articles. Also, in the case where a drying step is provided in the process of producing products for use in these applications, it is expected that drying period can be shortened, which serves to improve productivity.

Of the uses described above, application of the hydrophilic member in accordance with the invention to fin stocks is preferred, particularly preferably to a fin stock made from aluminum. That is, it is preferred to coat a fin stock (preferably an aluminum fin stock) with the composition for forming the hydrophilic film in accordance with the invention to form a hydrophilic layer on the surface of the fin stock.
Aluminum fin stocks used in heat exchangers for room air conditioners or car air conditioners cause degradation in cooling capabilities during the cooling operation, because aggregated water produced during the cooling grows into water drops and stays between fins to result in formation of water bridges. In addition, dust gets deposited between fins, and thereby degradation in cooling capabilities is also caused. With these problems in view, fin stocks having excellent hydrophilic and antifouling properties and long persistence of these properties are obtained by applying the hydrophilic members of the invention to fin stocks. It is preferred that the fin stocks in accordance with to the invention have water contact angles of 40° or below after they are subjected to 5 cycles of treatment including exposure to palmitic acid gas for 1 hour, washing with water for 30 minutes, and drying for 30 minutes.

As aluminum which can be used for the fin stock, there is illustrated an aluminum plate whose surface has undergone degreasing treatment and, when required, chemical conversion treatment. It is preferred for the surface of the aluminum fin stock to undergo chemical conversion treatment in view of adhesiveness to a coating formed by hydrophilicity imparting treatment, corrosion resistance, and so on. An example of the chemical conversion treatment is chromate treatment. Typical examples of chromate treatment include alkali salt-chromate methods (such as B.V. method, M.B.V. method, E.W. method, Alrock method, and Pylumin method), a chromic acid method, a chromate method, and a phosphoric acid-chromic acid method, and non-washing coat-type treatment with a composition predominantly composed of chromium chromate.

As a thin aluminum plate usable for the fin stock of a heat exchanger, any of pure aluminum plates compliant with JIS, such as 1100, 1050, 1200, and 1N30, Al-Cu alloy plates compliant with JIS, such as 2017 and 2014, Al-Mn alloy plates compliant with JIS, such as 3003 and 3004, Al-Mg alloy plates compliant with JIS, such as 5052 and 5083, and Al-Mg-Si alloy plates compliant with JIS, such as 6061 may be used, and these thin plates may have either sheeted or coiled shape.

Fin stocks in accordance with the invention are preferably used in heat exchangers. The heat exchangers using fin stocks in accordance with the invention can prevent water drops and dust from depositing between fins because the fin stocks have excellent hydrophilic and antifouling properties and long persistence of these properties. As the heat exchangers, there are illustrated heat exchangers for use in a room cooler or room-air conditioner, an oil cooler for construction equipment, a car radiator, a capacitor, and so on.
Also, it is preferred that the heat exchangers with fin stocks in accordance with the invention be used in air conditioners. The fin stocks in accordance with the invention have excellent hydrophilic and antifouling properties and long persistence of these properties, and hence they can provide air conditioners less suffering the problem of degradation in cooling capabilities as described hereinbefore. These air conditioners may be any of room-air conditioners, packaged air conditioners, and car air-conditioners.
In addition, known techniques (as disclosed in JP-A-2002-106882 and JP-A-2002-156135) can be applied to the heat exchangers and air conditioners in accordance with the invention, and the invention has no particular restrictions as to techniques adopted.

### Examples

The invention will be described in detail by reference to Examples, but the invention is not limited by them.

### (Synthesis of specific hydrophilic polymer (I-1))

28.3 g of acrylamide, 27.5 g of acrylamide-3-(triethoxysilyl)propyl, and 85 g of 1-methoxy-2-propanol were placed in a 300-ml three-neck flask and, in a stream of 80°C nitrogen, 0.7 g of dimethyl 2,2'-azobis(2-methylpropionate) was added thereto. The mixture was kept at the same temperature while stirring for 6 hours and thereafter cooled to room temperature. Then, the reaction solution was poured into 2 liter of n-hexane, and the precipitated solid was collected by filtration. The obtained solid was washed with n-hexane to obtain the specific hydrophilic polymer (I-1) of the foregoing illustrative compound (I-1). The dry weight of the product was 53.2 g. By GPC (polyethylene oxide standard), this polymer was found to be a polymer having a weight average molecular weight of 22,000.
Specific hydrophilic polymers used in the following Examples were synthesized in the same manner as described above and used for evaluation.

### (Example 1)

### [Hydrophilic sol-gel solution]

11.3 g of (A) the specific hydrophilic polymer (I-1) was mixed with 100 g of purified water, followed by stirring at room temperature for 2 hours to prepare a hydrophilic sol-gel solution.

### [Hydrophilic composition]

The above-described hydrophilic sol-gel solution was mixed with 2.3 g of a 5% by weight aqueous solution (G) of the following anionic surfactant (1) and 115 g of purified water to prepare a hydrophilic composition.

### [Sol-gel solution for forming undercoat layer]

4.0 g of tetramethoxysilane (C) and 4.0 g of methyltrimethoxysilane were mixed into 14.2 g of ethyl alcohol and 50 g of purified water, followed by stirring at room temperature for 2 hours to prepare a sol-gel solution for forming undercoat layer.

### [Composition for forming undercoat layer]

The above-described sol-gel solution for forming undercoat layer was mixed with 2.8 g of a 5% by weight aqueous solution of the following anionic surfactant (1) and 240 g of purified water to prepare a coating solution.

### [Coating method]

An alkali-degreased aluminum substrate (thickness: about 100 µm) was prepared, and the aforesaid composition for forming the undercoat layer was bar-coated on the aluminum substrate, followed by drying in an oven at 150°C for 30 minutes to form an undercoat layer of 0.1 g/m² in a dry coated amount. After sufficiently cooling to room temperature, the foregoing hydrophilic composition was bar-coated thereon, followed by drying in an oven at 150°C for 30 minutes to form an overcoat layer of 0.4 g/m² in a dry coated amount and obtain a hydrophilic member.

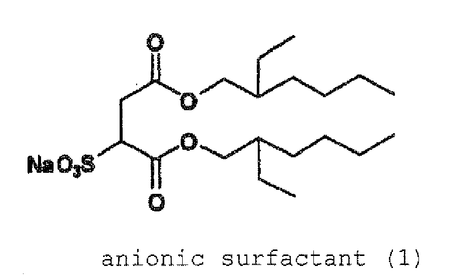

### (Example 2)

A hydrophilic member was prepared in the same manner as in Example 1 except for adding 0.05 g of a 1N hydrochloric acid aqueous solution as the catalyst (E) to the hydrophilic sol-gel solution to prepare a hydrophilic member.

### (Example 3)

A hydrophilic member was prepared in the same manner as in Example 1 except for adding 0.1 g of acetylacetone and 0.1 g of tetraethyl orthotitanate as the catalysts (E) to the hydrophilic sol-gel solution to prepare a hydrophilic member.

### (Examples 4 and 5)

Hydrophilic members were prepared in the same manner as in Example 2 except for changing the catalyst (E) added to the hydrophilic sol-gel solution to the following ones. Example 4: 0.2 g of ethyl acetoacetatoaluminum diisopropylate (manufactured by Kawaken Fine Chemicals Co., Ltd.; ALCH)

### Example 5: 0.2 g of zirconium chelate compound

50 g of tetrabutoxyzirconium and 20 g of ethyl acetoacetate were added to a reactor equipped with a stirrer, followed by stirring at room temperature for 1 hour to obtain the zirconium chelate compound.

### (Example 6)

A hydrophilic member was prepared in the same manner as in Example 2 except for adding 0.05 g of 1N hydrochloric acid aqueous solution as the catalyst (E) to the hydrophilic sol-gel solution for forming the undercoat layer to prepare a hydrophilic member.

### (Example 7)

A hydrophilic member was prepared in the same manner as in Example 3 except for adding 0.05 g of 1N hydrochloric acid aqueous solution as the catalyst (E) to the hydrophilic sol-gel solution for forming the undercoat layer to prepare a hydrophilic member.

### (Example 8)

A hydrophilic member was prepared in the same manner as in Example 3 except for adding 0.1 g of acetylacetone and 0.1 g of tetraethyl orthotitanate as the catalysts (E) to the hydrophilic sol-gel solution for forming the undercoat layer to prepare a hydrophilic member.

### (Examples 9 and 10)

Hydrophilic members were prepared in the same manner as in Example 8 except for changing the catalyst (E) added to the hydrophilic sol-gel solution for forming the undercoat layer to the following ones.Example 9: 0.2 g of ethyl acetoacetatoaluminum diisopropylate (manufactured by Kawaken Fine Chemicals Co., Ltd.; ALCH)
Example 10: 0.2 g of zirconium chelate compound
50 g of tetrabutoxyzirconium and 20 g of ethyl acetoacetate were added to a reactor equipped with a stirrer, followed by stirring at room temperature for 1 hour to obtain the zirconium chelate compound.

### (Examples 11 to 13)

Hydrophilic members were prepared in the same manner as in Example 8 except for adding each of the following compounds to the hydrophilic sol-gel solution.
Example 11: 0.5 g of tetramethoxysilane
Example 12: 1.0 g of tetramethoxysilane
Example 13: 0.5 g of tetraethoxy titanate

### (Examples 14 to 18)

Hydrophilic members were prepared in the same manner as in Example 8 except for changing the specific hydrophilic polymer (I-1) to the following ones.
Example 14: specific hydrophilic polymer (I-5)
Example 15: specific hydrophilic polymer (I-21)
Example 16: specific hydrophilic polymer (I-34)
Example 17: specific hydrophilic polymer (I-71)
Example 18: specific hydrophilic polymer (I-81)

### (Examples 19 to 24)

Hydrophilic members were prepared in the same manner as in Example 8 except for changing the combination of (C) tetramethoxysilane and (D) methyltrimethoxysilane in the sol-gel solution for forming the undercoat layer to the following combinations.
Example 19: (C) tetraethoxy titanate and (D) methyltriethoxysilane
Example 20: (C) triethoxy alumiate and (D) methyltriethoxysilane
Example 21: (C) tetramethoxysilane and (D) methyltriethoxysilane
Example 22: (C) tetramethoxysilane and (D) ethyltrimethoxysilane
Example 23: (C) tetraethoxysilane and (D) methyltrimethoxysilane
Example 24: (C) tetramethoxysilane and (D) dimethyldimethoxysilane

### (Examples 25 to 29)

Hydrophilic members were prepared in the same manner as in Example 8 except for changing the addition amounts of (C) tetramethoxysilane and (D) methyltrimethoxysilane to the following amounts.
Example 25: 2.4 g of (C) tetramethoxysilane and 5.6 g of (D) methyltrimethoxysilane
Example 26: 5.6 g of (C) tetramethoxysilane and 2.4 g of (D) methyltrimethoxysilane
Example 27: 7.2 g of tetramethoxysilane and 0.8 g of methyltrimethoxysilane
Example 28: 7.6 g of tetramethoxysilane and 0.4 g of methyltrimethoxysilane
Example 29: 1.6 g of tetramethoxysilane and 6.4 g of methyltrimethoxysilane

### (Examples 30 to 34)

Hydrophilic members were prepared in the same manner as in Example 8 except for changing (G) the anionic surfactant (1) to the following ones.
Example 30: anionic surfactant (2)
Example 31: amphoteric surfactant (3)
Example 32: amphoteric surfactant (4)
Example 33: fluorine-containing surfactant (5)
Example 34: fluorine-containing surfactant (6)

NaO₃SO-C₁₂H₂₅ anionic surfactant (2)

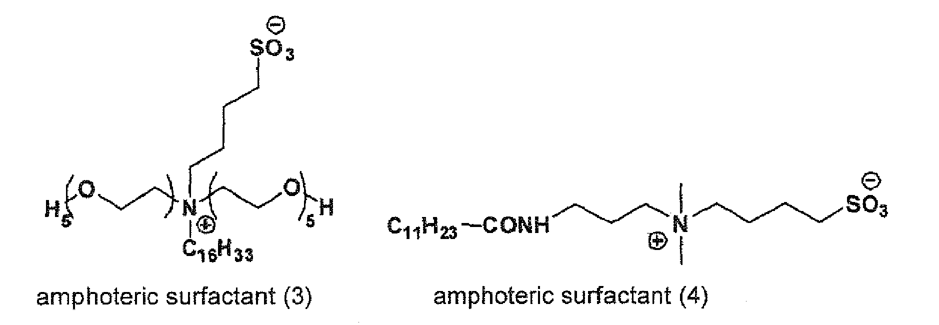

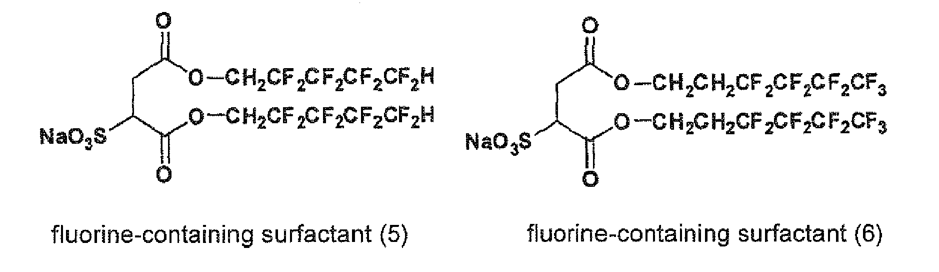

### (Example 35)

A hydrophilic member was prepared in the same manner as in Example 8 except for changing the substrate to the following one.
Example 35: polyethylene terephthalate substrate (thickness: 50 µm) hydrophilized by subjecting the surface thereof to glow treatment

### (Examples 36 to 38)

Hydrophilic members were prepared in the same manner as in Example 35 except for changing (A) the specific hydrophilic polymer (I-1) to the following ones.
Example 36: specific hydrophilic polymer (I-5)
Example 37: specific hydrophilic polymer (I-21)
Example 38: specific hydrophilic polymer (I-34)

### (Example 39)

A hydrophilic member was prepared in the same manner as in Example 8 except for changing the substrate to the following one.
Example 39: TAC substrate (thickness: 30 µm) hydrophilized by subjecting the surface thereof to saponification treatment

### (Examples 40 to 42)

Hydrophilic members were prepared in the same manner as in Example 39 except for changing (A) the specific hydrophilic polymer (I-1) to the following ones.
Example 40: specific hydrophilic polymer (I-5)
Example 41: specific hydrophilic polymer (I-21)
Example 42: specific hydrophilic polymer (I-34)

### (Examples 43 and 44)

Hydrophilic members were prepared in the same manner as in Example 8 except for adding 2 g of the following compound to the hydrophilic composition in Example 8.
Example 43: zirconium oxychloride (additive 1)
Example 44: zirconium tetrakis(acetylacetonato)zirconium (additive 2)

### Examples 45 and 46)

(Hydrophilic members were prepared in the same manner as in Example 8 except for adding 0.5 g of the following compound to the hydrophilic composition in Example 8.
Example 45: TBZ (manufactured by Chugoku Kogyo K.K.) (antibacterial agent 1)
Example 46: Zeomic (manufactured by SHINANEN Co., Ltd.) (antibacterial agent 2)

### (Comparative Example 1)

A hydrophilic member of Comparative Example 1 was obtained in the same manner as in Example 8 except for using a comparative hydrophilic polymer (i) outside the scope of the invention having the following formula (weight-average molecular weight: 10,000) in place of the specific hydrophilic polymer (I-1) of the invention. Additionally, numbers for repeating units each represents a composition ratio.

### comparative hydrophilic polymer (i)

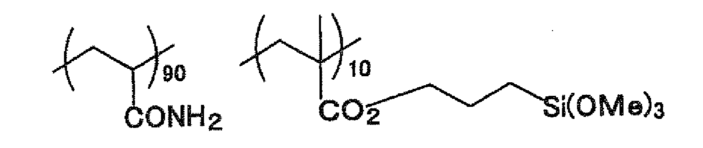

### (Comparative Example 2)

A hydrophilic member of Comparative Example 2 was obtained in the same manner as in Example 8 except for changing the amount of tetramethoxysilane (C) in the sol-gel solution for forming the undercoat layer to 8 g and not adding methyltrimethoxysilane (D).

### (Comparative Example 3)

A hydrophilic member of Comparative Example 3 was obtained in the same manner as in Example 8 except for forming the overcoat layer without forming the undercoat layer.

### (Synthesis of specific hydrophilic polymer (II-1))

25 g of acrylamide, 3.5 g of 3-mercaptopropyltrimethoxysilane, and 51.3 g of dimethylformamide were placed in a 200-ml three-neck flask and, in a stream of 65°C nitrogen, 0.25 g of 2,2'-azobis(2,4-dimethylvaleronitrile) was added thereto to initiate reaction. After stirring the mixture for 6 hours, the temperature of the reaction mixture was allowed to cool to room temperature, and poured into 1.5 L of methanol to precipitate a solid. The thus-obtained solid was washed with acetone to obtain the hydrophilic polymer (II-1) of the foregoing illustrative compound (II-1). The dry weight of the product was 21.7 g. By GPC (polyethylene oxide standard), this polymer was found to be a polymer having a weight average molecular weight of 9,000.
Specific hydrophilic Polymers used in the following Examples were synthesized in the same manner and used for evaluation.

### (Example 47)

### [Hydrophilic sol-gel solution]

11.3 g of (B) the specific hydrophilic polymer (II-1) and, as the catalyst (E), 0.05 g of 1N hydrochloric acid aqueous solution were mixed with 100 g of purified water, followed by stirring at room temperature for 2 hours to prepare a hydrophilic sol-gel solution.

### [Hydrophilic composition]

The above-described hydrophilic sol-gel solution was mixed with 2.3 g of a 5% by weight aqueous solution (G) of the following anionic surfactant (1) and 115 g of purified water to prepare a hydrophilic composition.

### [Sol-gel solution for forming undercoat layer]

4.0 g of tetramethoxysilane (C), 4.0 g of methyltrimethoxysilane and, as the catalyst (E), 0.05 g of 1N hydrochloric acid aqueous solution were mixed into 14.2 g of ethyl alcohol and 50 g of purified water, followed by stirring at room temperature for 2 hours to prepare a sol-gel solution for forming undercoat layer.

### [Composition for forming undercoat layer]

The above-described sol-gel solution for forming undercoat layer was mixed with 2.8 g of a 5% by weight aqueous solution of (G) the anionic surfactant (1) described in Example 1 and 240 g of purified water to prepare a coating solution.

### [Coating method]

An alkali-degreased aluminum substrate (thickness: about 100 µm) was prepared, and the aforesaid composition for forming the undercoat layer was bar-coated on the aluminum substrate, followed by drying in an oven at 150°C for 30 minutes to form an undercoat layer of 0.1 g/m² in a dry coated amount. After sufficiently cooling to room temperature, the foregoing hydrophilic composition was bar-coated thereon, followed by drying in an oven at 150°C for 30 minutes to form an overcoat layer of 0.4 g/m² in a dry coated amount and obtain a hydrophilic member.

### [Example 48]

A hydrophilic member was prepared in the same manner as in Example 47 except for changing the catalyst (E) added to the hydrophilic sol-gel solution to the following one. Example 48: 0.1 g of acetylacetone and 0.1 g of tetraethyl orthotitanate

### [Example 49]

A hydrophilic member was prepared in the same manner as in Example 48 except for changing the catalyst (E) added to the hydrophilic sol-gel solution for forming the undercoat to the following one.
Example 49: 0.1 g of acetylacetone and 0.1 g of tetraethyl orthotitanate

### (Examples 50 to 53)

Hydrophilic members were prepared in the same manner as in Example 49 except for changing (B) the specific hydrophilic polymer (II-1) to the following ones.
Example 50: specific hydrophilic polymer (II-12)
Example 51: specific hydrophilic polymer (II-32)
Example 52: specific hydrophilic polymer (II-81)
Example 53: specific hydrophilic polymer (II-91)

### (Examples 54 to 56)

Hydrophilic members were prepared in the same manner as in Example 49 except for adding the following compound to the hydrophilic sol-gel solution in Example 49.
Example 54: 0.5 g of tetramethoxysilane
Example 55: 1.0 g of tetramethoxysilane
Example 56: 0.5 g of tetraethoxytitanate

### (Examples 57 to 62)

Hydrophilic members were prepared in the same manner as in Example 49 except for changing the combination of (C) tetramethoxysilane and (D) methyltrimethoxysilane in the sol-gel solution for forming the undercoat layer to the following combinations.
Example 57: (C) tetraethoxy titanate and (D) methyltriethoxysilane
Example 58: (C) triethoxy alumiate and (D) methyltriethoxysilane
Example 59: (C) tetramethoxysilane and (D) methyltriethoxysilane
Example 60: (C) tetramethoxysilane and (D) ethyltrimethoxysilane
Example 61: (C) tetraethoxysilane and (D) methyltrimethoxysilane
Example 62: (C) tetramethoxysilane and (D) dimethyldimethoxysilane

### (Examples 63 to 67)

Hydrophilic members were prepared in the same manner as in Example 49 except for changing the combination of (C) tetramethoxysilane and (D) methyltrimethoxysilane in the sol-gel solution for forming the undercoat layer to the following combinations.
Example 63: 2.4 g of (C) tetramethoxysilane and 5.6 g of (D) methyltrimethoxysilane
Example 64: 5.6 g of (C) tetramethoxysilane and 2.4 g of (D) methyltrimethoxysilane
Example 65: 7.2 g of (C) tetramethoxysilane and 0.8 g of (D) methyltrimethoxysilane
Example 66: 7.6 g of (C) tetramethoxysilane and 0.4 g of (D) methyltrimethoxysilane
Example 67: 1.6 g of (C) tetramethoxysilane and 6.4 g of (D) methyltrimethoxysilane

### (Examples 68 to 72)

Hydrophilic members were prepared in the same manner as in Example 49 except for changing (G) the anionic surfactant (1) to the following ones.
Example 68: anionic surfactant (2) described in Example 30
Example 69: amphoteric surfactant (3) described in Example 31
Example 70: amphoteric surfactant (4) described in Example 32
Example 71: fluorine-containing surfactant (5) described in Example 33
Example 72: fluorine-containing surfactant (6) described in Example 34

### (Example 73)

A hydrophilic member was prepared in the same manner as in Example 49 except for changing the substrate to the following one.
Example 73: polyethylene terephthalate substrate (thickness: 50 µm) hydrophilized by subjecting the surface thereof to glow treatment

### (Example 74)

A hydrophilic member was prepared in the same manner as in Example 73 except for changing (B) the specific hydrophilic polymer (II-1) to the following one.
Example 74: specific hydrophilic polymer (II-12)

### (Example 75)

A hydrophilic member was prepared in the same manner as in Example 49 except for changing the substrate to the following one.
Example 75: TAC substrate (thickness: 30 µm) hydrophilized by subjecting the surface thereof to saponification treatment

### (Example 76)

A hydrophilic member was prepared in the same manner as in Example 75 except for changing (B) the specific hydrophilic polymer (II-1) to the following one.
Example 76: specific hydrophilic polymer (II-12)

### (Comparative Example 4)

A hydrophilic member of Comparative Example 2 was obtained in the same manner as in Example 49 except for changing the amount of tetramethoxysilane (C) in the sol-gel solution for forming the undercoat layer to 8 g and not adding methyltrimethoxysilane (D).

### (Comparative Example 5)

A hydrophilic member of Comparative Example 5 was obtained in the same manner as in Example 49 except for forming the overcoat layer without forming the undercoat layer.

### (Example 77)

### [Hydrophilic sol-gel solution]

7.5 g of (A) the specific hydrophilic polymer (I-1), 2.5 g of (B) the specific hydrophilic polymer (II-1) and, as the catalyst (E), 0.1 g of acetylacetone and 0.1 g of tetraethyl orthotitanate were mixed into 100 g of purified water, followed by stirring at room temperature for 2 hours to prepare a hydrophilic sol-gel solution.

### [Hydrophilic composition]

The above-described hydrophilic sol-gel solution was mixed with 2.3 g of a 5% by weight aqueous solution (G) of the anionic surfactant (1) used in Example 1 and 115 g of purified water to prepare a hydrophilic composition.

### [Sol-gel solution for forming undercoat layer]

4.0 g of tetramethoxysilane (C), 4.0 g of methyltrimethoxysilane and, as the catalyst (E), 0.1 g of acetylacetone and 0.1 g of tetraethyl orthotitanate were mixed into 14.2 g of ethyl alcohol and 50 g of ppurified water, followed by stirring at room temperature for 2 hours to prepare a sol-gel solution for forming undercoat layer.

### [Composition for forming undercoat layer]

The above-described sol-gel solution for forming undercoat layer was mixed with 2.8 g of a 5% by weight aqueous solution of (G) the anionic surfactant (1) described in Example 1 and 240 g of purified water to prepare a coating solution.

### [Coating method]

An alkali-degreased aluminum substrate (thickness: about 100 µm) was prepared, and the aforesaid composition for forming the undercoat layer was bar-coated on the aluminum substrate, followed by drying in an oven at 150°C for 30 minutes to form an undercoat layer of 0.1 g/m² in a dry coated amount. After sufficiently cooling to room temperature, the foregoing hydrophilic composition was bar-coated thereon, followed by drying in an oven at 150°C for 30 minutes to form an overcoat layer of 0.4 g/m² in a dry coated amount and obtain a hydrophilic member.

### (Examples 78 and 79)

Hydrophilic members were prepared in the same manner as in Example 77 except for changing the specific hydrophilic polymer (II-1) to the following ones.
Example 78: specific hydrophilic polymer (II-12)
Example 79: specific hydrophilic polymer (II-32)

### (Examples 80 and 81)

Hydrophilic members were prepared in the same manner as in Example 77 except for changing (A) the specific hydrophilic polymer (I-1) to the following ones.
Example 80: specific hydrophilic polymer (I-5)
Example 81: specific hydrophilic polymer (I-21)

### (Examples 82 and 83)

Hydrophilic members were prepared in the same manner as in Example 77 except for changing the addition amounts of (A) the specific hydrophilic polymer (I-1) and (B) the specific hydrophilic polymer (II-1) to the following amounts.
Example 82: 9.5 g of (A) the specitic hydrophilic polymer (I-1) and 0.5 g of (B) the specific hydrophilic polymer (II-1)
Example 83: 5.0 g of (A) the specific hydrophilic polymer (I-1) and 5.0 g of (B) the specific hydrophilic polymer (II-1)
Example 84: 9.8 g of (A) the specitic hydrophilic polymer (I-1) and 0.2 g of (B) the specific hydrophilic polymer (II-1)
Example 85: 4.0 g of (A) the specitic hydrophilic polymer (I-1) and 6.0 g of (B) the specific hydrophilic polymer (II-1)

### (Examples 86 and 87)

Hydrophilic members were prepared in the same manner as in Example 77 except for adding each of the following compounds to the hydrophilic sol-gel solution.
Example 86: 0.5 g of tetramethoxysilane
Example 87: 1.0 g of tetramethoxysilane

### (Examples 88 and 89)

Hydrophilic members were prepared in the same manner as in Example 77 except for changing the addition amounts of (C) tetramethoxysilane and (D) methyltrimethoxysilane to the following amounts.
Example 88: 5.6 g of (C) tetramethoxysilane and 2.4 g of (D) methyltrimethoxysilane
Example 89: 7.2 g of (C) etramethoxysilane and 0.8 g of (D) methyltrimethoxysilane

### (Example 90)

A hydrophilic member was prepared in the same manner as in Example 77 except for changing the substrate to the following one.
Example 90: polyethylene terephthalate substrate (thickness: 50 µm) hydrophilized by subjecting the surface thereof to glow treatment

### (Example 91)

A hydrophilic member was prepared in the same manner as in Example 90 except for changing (B) the specific hydrophilic polymer (II-1) to the following one.
Example 91: specific hydrophilic polymer (II-2)

### (Examples 92 and 93)

Hydrophilic members were prepared in the same manner as in Example 90 except for changing (A) the specific hydrophilic polymer (I-1) to each of the following ones.
Example 92: specific hydrophilic polymer (I-5)
Example 93: specific hydrophilic polymer (I-21)

### (Example 94)

A hydrophilic member was prepared in the same manner as in Example 77 except for changing the substrate to the following one.
Example 94: TAC substrate (thickness: 30 µm) hydrophilized by subjecting the surface thereof to saponification treatment

### (Example 95)

A hydrophilic member was prepared in the same manner as in Example 94 except for changing (B) the specific hydrophilic polymer (II-1) to the following one.
Example 95: specific hydrophilic polymer (II-12)

### (Examples 96 and 97)

Hydrophilic members were prepared in the same manner as in Example 94 except for changing (A) the specific hydrophilic polymer (I-1) to each of the following ones.
Example 96: specific hydrophilic polymer (I-5)
Example 97: specific hydrophilic polymer (I-21)

### (Comparative Example 6)

A hydrophilic member of Comparative Example 6 was obtained in the same manner as in Example 77 except for changing the amount of tetramethoxysilane (C) in the sol-gel solution for forming the undercoat layer to 8 g and not adding methyltrimethoxysilane (D).

### (Comparative Example 7)

A hydrophilic member of Comparative Example 7 was obtained in the same manner as in Example 77 except for forming the overcoat layer without forming the undercoat layer.

### [Evaluation of hydrophilic members]

### [Surface free energy]

The degree of hydrophilicity of the overcoat layer surface is in general measured in terms of a droplet contact angle (DropMaster 500 manufactured by Kyowa Kaimenkagaku K.K. However, with respect to a surface with very high hydrophilicity as in the invention, there is a possibility that the droplet contact angle is 10° or less, and even 5° or less. Thus, in mutually comparing the degree of hydrophilicity, there is a limit. On the other hand, examples of a method for evaluating the degree of hydrophilicity on a solid surface in more detail include a measurement of surface free energy. There are proposed various methods. In the invention, however, the surface free energy was measured by employing the Zisman plot method as one example. Specifically, the Zisman plot method is a measurement method in which, by utilizing the properties that an aqueous solution of an inorganic electrolyte such as magnesium chloride shows a larger surface tension with an increase of the concentration thereof, a contact angle is measured in air under a room temperature condition by using the aqueous solution; a surface tension of the aqueous solution is taken on the abscissa, whereas a value obtained by reducing the contact angle into cosθ is taken on the ordinate; points of the aqueous solution of various concentrations are plotted to obtain a linear relationship; and the surface tension at cosθ = 1, namely at a contact angle = 0° is defined as surface free energy of the solid. The surface tension of water is 72 mN/m, and it may be said that, the larger the value of surface free energy, the higher the hydrophilicity is.

### [Evaluation of wear resistance]

The surface of the thus-obtained hydrophilic members was given 250 to-and-fro rubbings with nonwoven fabric (BEMCOT; manufactured by Asahi Kasei Fibers) under a load of 200 g. Visual changes before and after the rubbings were observed by the eye.
A: No scratches on the surface before and after the rubbings.
B: There exists about one-line scratch.
C: There exist many scratches.

### [Evaluation (1) of antifouling properties]

A line was drawn with an oil based ink (oil based marker; manufactured by Mitsubishi Pencil Co., Ltd.) on the surface of the above-obtained hydrophilic member, distilled water was continuously splashed, and whether or not the ink ran down was evaluated according to the following three grades.
A: The ink completely disappears within one minute.
B: The ink disappears after one minute.
C: The ink remains after splashing water longer than 2 minutes to 10 minutes.

### (Evaluation of antifouling properties (2))

0.2 g of palmitic acid was placed in a 50-ml volume sample bottle, and the opening of the bottle was covered with the hydrophilic member with the film-coated surface thereof facing downward, followed by heating at 105°C for 30 minutes. Further, the surface was washed with running water (2L/h) for 30 minutes, and dried at 80°C for 30 minutes. This cycle was repeated 5 times, and then the contact angle of the surface was measured.
A: The contact angle was less than 25°.
B: The contact angle was not less than 25° and less than 35°.
C: The contact angle was not less than 35° and less than 50°.
D: The contact angle was not less than 50°.

### [Evaluation of adhesion]

The above-obtained hydrophilic member was immersed in purified water for 200 hours and, after drying, presence or absence of peeling of the film was visually observed.
A: No peeling was observed.
B: Partial peeling was observed.
C: Entire peeling was observed.

### [Evaluation of flexibility]

Holes were formed in the above-obtained hydrophilic member by punching out from above by means of a paper punch for official use, and the edge portion was observed under a scanning type electron microscope.
A: No cracks were formed.
B: No cracks were formed, but some breakages were observed.
C: Cracks were formed.

### [Evaluation of quick-drying properties of water]

About 1 ml of pure water was dropped onto the above-obtained hydrophilic member, the member was allowed to stand under an environment of 25°C and 50% RH, and the period till the water droplets were dried was visually observed every 5 minutes.
Results of respective evaluations are shown in the following Tables 1 to 3.

**[Table 1]**

| | Evaluation of Performance | | | | | | |
|---|---|---|---|---|---|---|---|
| | Surface Free Energy | Wear Resistance | Antifouling Properties (1) | Antifouling Properties (2) | Adhesion | Flexibility | Quick-drying Properties of Water |
| Example 1 | 82 mN/m | B | A | B | B | A | 5 minutes |
| Example 2 | 83 mN/m | B | A | B | B | A | 5 minutes |
| Example 3 | 83 mN/m | B | A | B | A | A | 5 minutes |
| Example 4 | 82 mN/m | B | A | B | A | A | 5 minutes |
| Example 5 | 83 mN/m | B | A | B | A | A | 5 minutes |
| Example 6 | 80 mN/m | B | A | B | B | A | 5 minutes |
| Example 7 | 80 mN/m | B | A | B | B | A | 5 minutes |
| Example 8 | 82 mN/m | A | A | B | A | A | 5 minutes |
| Example 9 | 83 mN/m | A | A | B | A | A | 5 minutes |
| Example 10 | 81 mN/m | A | A | B | A | A | 5 minutes |
| Example 11 | 83 mN/m | A | A | B | A | A | 5 minutes |
| Example 12 | 82 mN/m | A | A | B | A | A | 5 minutes |
| Example 13 | 81 mN/m | A | A | B | A | A | 5 minutes |
| Example 14 | 81 mN/m | A | A | B | A | A | 5 minutes |
| Example 15 | 81 mN/m | A | A | B | A | A | 5 minutes |
| Example 16 | 83 mN/m | A | A | B | A | A | 5 minutes |
| Example 17 | 79 mN/m | A | A | B | A | A | 5 minutes |
| Example 18 | 82 mN/m | A | A | B | A | A | 5 minutes |
| Example 19 | 83 mN/m | A | A | B | A | A | 5 minutes |
| Example 20 | 81 mN/m | A | A | B | A | A | 5 minutes |
| Example 21 | 82 mN/m | A | A | B | A | A | 5 minutes |
| Example 22 | 82 mN/m | A | A | B | A | A | 5 minutes |
| Example 23 | 82 mN/m | A | A | B | A | A | 5 minutes |
| Example 24 | 83 mN/m | A | A | B | A | A | 5 minutes |
| Example 25 | 82 mN/m | A | A | B | B | A | 5 minutes |
| Example 26 | 82 mN/m | A | A | B | A | A | 5 minutes |
| Example 27 | 82 mN/m | A | A | B | A | B | 5 minutes |
| Example 28 | 81 mN/m | A | A | B | A | B | 5 minutes |
| Example 29 | 80 mN/m | B | A | B | B | A | 5 minutes |
| Example 30 | 81 mN/m | A | A | B | A | A | 5 minutes |
| Example 31 | 80 mN/m | A | A | B | A | A | 5 minutes |
| Example 32 | 81 mN/m | A | A | B | A | A | 5 minutes |
| Example 33 | 82 mN/m | A | A | B | A | A | 5 minutes |
| Example 34 | 83 mN/m | A | A | B | A | A | 5 minutes |
| Example 35 | 83 mN/m | A | A | B | A | A | 5 minutes |
| Example 36 | 81 mN/m | A | A | B | A | A | 5 minutes |
| Example 37 | 83 mN/m | A | A | B | A | A | 5 minutes |
| Example 38 | 82 mN/m | A | A | B | A | A | 5 minutes |
| Example 39 | 82 mN/m | A | A | B | A | A | 5 minutes |
| Example 40 | 83 mN/m | A | A | B | A | A | 5 minutes |
| Example 41 | 81 mN/m | A | A | B | A | A | 5 minutes |
| Example 42 | 83 mN/m | A | A | B | A | A | 5 minutes |
| Example 43 | 81 mN/m | A | A | B | A | A | 5 minutes |
| Example 44 | 81 mN/m | A | A | B | A | A | 5 minutes |
| Example 45 | 82 mN/m | A | A | B | A | A | 5 minutes |
| Example 46 | 83 mN/m | A | A | B | A | A | 5 minutes |
| Compara-tive Example 1 | 70 mN/m | A | C | D | A | A | 20 minutes |
| Compara-tive Example 2 | 82 mN/m | A | A | C | B | C | 15 minutes |
| Compara-tive Example 3 | 83 mN/m | C | A | C | C | B | 5 minutes |

As is shown in Table 1, the hydrophilic members of the invention using the overcoat layer and the undercoat layer are excellent in antifouling properties, adhesion, flexibility, and quick-drying properties of water. By further adding the catalyst, hydrolysis·condensation reaction is allowed to proceed, thus hydrophilic members having extremely excellent wear resistance being able to be provided. Comparison of Example 8 with Comparative Examples 1 and 2 reveals that, when polymers other than the specific hydrophilic polymer (A) used in the hydrophilic layer of the invention is used, wear resistance and adhesion are incompatible with antifouling properties. Also, since the specific alkoxysilane (D) was not used in the undercoat layer, there resulted a film having no flexibility. Further, in the case of not using the undercoat layer as in Comparative Example 5, there result poor wear resistance and adhesion. Thus, the invention can provide hydrophilic members having excellent wear resistance, antifouling properties, adhesion, flexibility, and quick-drying properties of water.

**[Table 2]**

| | Evaluation of Performance | | | | | | |
|---|---|---|---|---|---|---|---|
| | Surface Free Energy | Wear Resistance | Antifouling Properties (1) | Antifouling Properties (2) | Adhesion | Flexibility | Quick-drying Properties of Water |
| Example 47 | 82 mN/m | B | A | C | B | A | 5 minutes |
| Example 48 | 82 mN/m | B | A | C | B | A | 5 minutes |
| Example 49 | 82 mN/m | B | A | C | A | A | 5 minutes |
| Example 50 | 83 mN/m | B | A | C | A | A | 5 minutes |
| Example 51 | 82 mN/m | B | A | C | A | A | 5 minutes |
| Example 52 | 78 mN/m | B | A | C | A | A | 5 minutes |
| Example 53 | 82 mN/m | B | A | C | A | A | 5 minutes |
| Example 54 | 83 mN/m | B | A | C | A | A | 5 minutes |
| Example 55 | 82 mN/m | B | A | C | A | A | 5 minutes |
| Example 56 | 84 mN/m | B | A | C | A | A | 5 minutes |
| Example 57 | 83 mN/m | B | A | C | A | A | 5 minutes |
| Example 58 | 82 mN/m | B | A | C | A | A | 5 minutes |
| Example 59 | 83 mN/m | B | A | C | A | A | 5 minutes |
| Example 60 | 81 mN/m | B | A | C | A | A | 5 minutes |
| Example 61 | 83 mN/m | B | A | C | A | A | 5 minutes |
| Example 62 | 82 mN/m | B | A | C | A | A | 5 minutes |
| Example 63 | 82 mN/m | B | A | C | B | A | 5 minutes |
| Example 64 | 81 mN/m | B | A | C | A | A | 5 minutes |
| Example 65 | 81 mN/m | B | A | C | A | B | 5 minutes |
| Example 66 | 82 mN/m | B | A | C | A | B | 5 minutes |
| Example 67 | 81 mN/m | B | A | C | B | A | 5 minutes |
| Example 68 | 81 mN/m | B | A | C | A | A | 5 minutes |
| Example 69 | 82 mN/m | B | A | C | A | A | 5 minutes |
| Example 70 | 83 mN/m | B | A | C | A | A | 5 minutes |
| Example 71 | 82 mN/m | B | A | C | A | A | 5 minutes |
| Example 72 | 81 mN/m | B | A | C | A | A | 5 minutes |
| Example 73 | 81 mN/m | B | A | C | A | A | 5 minutes |
| Example 74 | 83 mN/m | B | A | C | A | B | 5 minutes |
| Example 75 | 82 mN/m | B | A | C | A | B | 5 minutes |
| Example 76 | 82 mN/m | B | A | C | A | A | 5 minutes |
| Comparative Example 4 | 80 mN/m | C | A | C | B | C | 15 minutes |
| Comparative Example 5 | 81 mN/m | C | A | C | C | B | 5 minutes |

**[Table 3]**

| | Evaluation of Performance | | | | | | |
|---|---|---|---|---|---|---|---|
| | Surface Free Energy | Wear Resistance | Antifouling Properties (1) | Antifouling Properties (2) | Adhesion | Flexibility | Quick-drying Properties of Water |
| Example 77 | 81 mN/m | A | A | A | A | A | 5 minutes |
| Example 78 | 83 mN/m | A | A | A | A | A | 5 minutes |
| Example 79 | 81 mN/m | A | A | A | A | A | 5 minutes |
| Example 80 | 82 mN/m | A | A | A | A | A | 5 minutes |
| Example 81 | 83 mN/m | A | A | A | A | A | 5 minutes |
| Example 82 | 83 mN/m | A | A | A | A | A | 5 minutes |
| Example 83 | 81 mN/m | A | A | A | A | A | 5 minutes |
| Example 84 | 81 mN/m | A | A | B | A | A | 5 minutes |
| Example 85 | 82 mN/m | A | A | C | A | A | 5 minutes |
| Example 86 | 82 mN/m | A | A | A | A | A | 5 minutes |
| Example 87 | 82 mN/m | A | A | A | A | A | 5 minutes |
| Example 88 | 82 mN/m | A | A | A | A | A | 5 minutes |
| Example 89 | 81 mN/m | A | A | A | A | A | 5 minutes |
| Example 90 | 83 mN/m | A | A | A | A | A | 5 minutes |
| Example 91 | 81 mN/m | A | A | A | A | A | 5 minutes |
| Example 92 | 81 mN/m | A | A | A | A | A | 5 minutes |
| Example 93 | 82 mN/m | A | A | A | A | A | 5 minutes |
| Example 94 | 81 mN/m | A | A | A | A | A | 5 minutes |
| Example 95 | 82 mN/m | A | A | A | A | A | 5 minutes |
| Example 96 | 83 mN/m | A | A | A | A | A | 5 minutes |
| Example 97 | 81 mN/m | A | A | A | A | A | 5 minutes |
| Comparative Example 6 | 80 mN/m | B | A | A | B | C | 15 minutes |
| Comparative Example 7 | 80 mN/m | C | A | A | C | B | 5 minutes |

As is shown in Tables 2 and 3, it has become apparent that, in the case where the hydrophilic polymer (B) of the invention is used and in the case where both the hydrophilic polymer (A) and the hydrophilic polymer (B) are used as a mixture, there can be obtained excellent antifouling properties, adhesion, flexibility, and quick-drying properties of water.

Respective materials used in Examples and Comparative Examples are tabulated in Tables 4 to 6.

**[Table 4]**

| | Hydrophilic Layer | | | | Undercoat Layer | | | Others |
|---|---|---|---|---|---|---|---|---|
| | Specific Hydrophilic Polymer (A) | Specific Alkoxide (F) | Catalyst (E) | Surfactant (G) | Alkoxide (C) | Alkoxy-silane (D) | Catalyst (E) | |
| Example 1 | (I-1) | - | - | (1) | TMOS | MTMS | - | |
| Example 2 | (I-1) | - | HCl | (1) | TMOS | MTMS | - | |
| Example 3 | (I-1) | - | Ti | (1) | TMOS | MTMS | - | |
| Example 4 | (I-1) | - | Al | (1) | TMOS | MTMS | - | |
| Example 5 | (I-1) | - | Zr | (1) | TMOS | MTMS | - | |
| Example 6 | (I-1) | - | HCl | (1) | TMOS | MTMS | HCl | |
| Example 7 | (I-1) | - | Ti | (1) | TMOS | MTMS | HCl | |
| Example 8 | (I-1) | - | Ti | (I) | TMOS | MTMS | Ti | |
| Example 9 | (I-1) | - | Ti | (1) | TMOS | MTMS | Al | |
| Example 10 | (I-1) | - | Ti | (1) | TMOS | MTMS | Zr | |
| Example 11 | (I-1) | TMOS (0.5g) | Ti | (1) | TMOS | MTMS | Ti | |
| Example 12 | (I-1) | TMOS (1.0g) | Ti | (1) | TMOS | MTMS | Ti | |
| Example 13 | (I-1) | TEOT (0.5g) | Ti | (1) | TMOS | MTMS | Ti | |
| Example 14 | (I-5) | - | Ti | (1) | TMOS | MTMS | Ti | |
| Example 15 | (I-21) | - | Ti | (1) | TMOS | MTMS | Ti | |
| Example 16 | (I-34) | - | Ti | (1) | TMOS | MTMS | Ti | |
| Example 17 | (I-71) | - | Ti | (1) | TMOS | MTMS | Ti | |
| Example 18 | (I-81) | | Ti | (1) | TMOS | MTMS | Ti | |
| Example 19 | (I-1) | - | Ti | (1) | TEOT | MTMS | Ti | |
| Example 20 | (I-1) | - | Ti | (1) | TEOA | MTMS | Ti | |
| Example 21 | (I-1) | - | Ti | (1) | TMOS | MTES | Ti | |
| Example 22 | (I-1) | - | Ti | (1) | TMOS | ETMS | Ti | |
| Example 23 | (I-1) | - | Ti | (1) | TEOS | MTMS | Ti | |
| Example 24 | (I-1) | - | Ti | (1) | TMOS | DMDMS | Ti | |
| Example 25 | (I-1) | - | Ti | (1) | TMOS (2.4g) | MTMS (5.6g) | Ti | |
| Example 26 | (I-1) | - | Ti | (1) | TMOS (5.6g) | MTMS (2.4g) | Ti | |
| Example 27 | (I-1) | - | Ti | (1) | TMOS (7.2g) | MTMS (0.8g) | Ti | |
| Example 28 | (I-1) | - | Ti | (1) | TMOS (7.6g) | MTMS (0.4g) | Ti | |
| Example 29 | (I-1) | - | Ti | (1) | TMOS (1.6g) | MTMS (6.4g) | Ti | |
| Example 30 | (I-1) | - | Ti | (2) | TMOS | MTMS | Ti | |
| Example 31 | (I-1) | - | Ti | (3) | TMOS | MTMS | Ti | |
| Example 32 | (I-1) | - | Ti | (4) | TMOS | MTMS | Ti | |
| Example 33 | (I-1) | | Ti | (5) | TMO | MUMS | Ti | |
| Example 34 | (I-1) | - | Ti | (6) | TMOS | MTMS | Ti | |
| Example 35 | (I-1) | - | Ti | (1) | TMOS | MTMS | Ti | PET substrate |
| Example 36 | (I-5) | - | Ti | (1) | TMOS | MTMS | Ti | PET substrate |
| Example 37 | (I-21) | - | Ti | (1) | TMOS | MTMS | Ti | PET substrate |
| Example 38 | (I-34) | - | Ti | (1) | TMOS | MTMS | Ti | PET substrate |
| Example 39 | (I-1) | - | Ti | (1) | TMOS | MTMS | Ti | TAC substrate |
| Example 40 | (I-5) | - | Ti | (1) | TMOS | MTMS | Ti | TAC substrate |
| Example 41 | (I-21) | - | Ti | (1) | TMOS | MTMS | Ti | TAC substrate |
| Example 42 | (I-34) | - | Ti | (1) | TMOS | MTMS | Ti | TAC substrate |
| Example 43 | (I-1) | - | Ti | (1) | TMOS | MTMS | Ti | Additive 1 |
| Example 44 | (I-1) | - | Ti | (1) | TMOS | MTMS | Ti | Additive 2 |
| Example 45 | (I-1) | - | Ti | (1) | TMOS | MUMS | Ti | Anti-bacterial agent 1 |
| Example 46 | (I-1) | - | Ti | (1) | TMOS | MTMS | Ti | Antibacterial agent 2 |
| Comparative Example 1 | Comparative polymer (1) | - | Ti | (1) | TMOS | MTMS | Ti | |
| Comparative Example 2 | (I-1) | - | Ti | (1) | TMOS | - | Ti | |
| Comparative Example 3 | (I-1) | - | Ti | (1) | - | | | |

**[Table 5]**

| | Hydrophilic Layer | | | | Undercoat Layer | | | Others |
|---|---|---|---|---|---|---|---|---|
| | Specific Hydrophilic Polymer (B) | Specific Alkoxide (F) | Catalyst (E) | Surfactant (G) | Alkoxide (C) | Alkoxy-silane (D) | Catalyst (E) | |
| Example 47 | (II-1) | - | HCl | (1) | TMOS | MTMS | HCl | |
| Example 48 | (II-1) | - | Ti | (1) | TMOS | MTMS | HCl | |
| Example 49 | (II-1) | - | Ti | (1) | TMOS | MTMS | Ti | |
| Example 50 | (II-12) | - | Ti | (1) | TMOS | MTMS | Ti | |
| Example 51 | (II-32) | - | Ti | (1) | TMOS | MTMS | Ti | |
| Example 52 | (II-81) | - | Ti | (1) | TMOS | MTMS | Ti | |
| Example 53 | (II-91) | | Ti | (1) | TMOS | MTMS | Ti | |
| Example 54 | (II-1) | TMOS (0.5 g) | Ti | (1) | TMOS | MTMS | Ti | |
| Example 55 | (II-1) | TMOS (1.0g) | Ti | (1) | TMOS | MTMS | Ti | |
| Example 56 | (II-1) | TEOT (0.5g) | Ti | (1) | TMOS | MTMS | Ti | |
| Example 57 | (II-1) | - | Ti | (1) | TEOT | MTMS | Ti | |
| Example 58 | (II-1) | - | Ti | (1) | TEOA | MTMS | Ti | |
| Example 59 | (II-1) | - | Ti | (1) | TMOS | MTES | Ti | |
| Example 60 | (II-1) | - | Ti | (1) | TMOS | ETMS | Ti | |
| Example 61 | (II-1) | - | Ti | (1) | TEOS | MTMS | Ti | |
| Example 62 | (II-1) | - | Ti | (1) | TMOS | DMDMS | Ti | |
| Example 63 | (II-1) | - | Ti | (1) | TMOS (2.4g) | MTMS (5.6g | Ti | |
| Example 64 | (II-1) | - | Ti | (1) | TMOS (5.6g) | MTMS (2.4g) | Ti | |
| Example 65 | (II-1) | - | Ti | (1) | TMOS (7.2g) | MTMS (0.8g) | Ti | |
| Example 66 | (II-1) | - | Ti | (1) | TMOS (7.6g) | MTMS (0.4g) | Ti | |
| Example 67 | (II-1) | - | Ti | (1) | TMOS (1.6g) | MTES (6.4g) | Ti | |
| Example 68 | (II-1) | - | Ti | (2) | TMOS | MTMS | Ti | |
| Example 69 | (II-1) | - | Ti | (3) | TMOS | MTMS | Ti | |
| Example 70 | (II-1) | - | Ti | (4) | TMOS | MTMS | Ti | |
| Example 71 | (II-1) | - | Ti | (5) | TMOS | MTMS | Ti | |
| Example 72 | (II-1) | - | Ti | (6) | TMOS | MTMS | Ti | |
| Example 73 | (II-1) | - | Ti | (I) | TMOS | MTMS | Ti | PET substrate |
| Example 74 | (II-12) | - | Ti | (1) | TMOS | MTMS | Ti | PET substrate |
| Example 75 | (II-1) | - | Ti | (1) | TMOS | MTMS | Ti | TAC substrate |
| Example 76 | (II-12) | - | Ti | (1) | TMOS | MTMS | Ti | TAC substrate |
| Comparative Example 4 | (II-1) | - | Ti | (1) | TMOS | - | Ti | |
| Comparative Example 5 | (II-1) | - | Ti | (1) | - | | | |

**[Table 6]**

| | | Hydrophilic Layer | | | | | Undercoat Layer | | | Others |
|---|---|---|---|---|---|---|---|---|---|---|
| | Specific Hydrophilic Polymer (A) | Specific Hydrophilic Polymer (B) | (A)/ (B) | Specific Alkoxide (F) | Catalyst (E) | Surfactant (G) | Alkoxide (C) | Alkoxy-silane (D) | Catalyst (E) | |
| Example 77 | (I-1) | (II-1) | 75/25 | - | Ti | (1) | TMO S | MTMS | Ti | |
| Example 78 | (I-1) | (II-12) | 75/25 | - | Ti | (1) | TMO S | MTMS | Ti | |
| Example 79 | (I-1) | (II-32) | 75/25 | - | Ti | (1) | TMO S | MTMS | Ti | |
| Example 80 | (I-5) | (II-1) | 75/25 | - | Ti | (1) | TMO S | MTMS | Ti | |
| Example 81 | (I-21) | (II-1) | 75/25 | - | Ti | (1) | TMO S | MTMS | Ti | |
| Example 82 | (I-1) | (II-1) | 95/5 | - | Ti | (1) | TMO S | MTMS | Ti | |
| Example 83 | (I-1) | (II-1) | 50/50 | - | Ti | (1) | TMO S | MTMS | Ti | |
| Example 84 | (I-1) | (II-1) | 98/2 | - | Ti | (1) | TMO S | MTMS | Ti | |
| Example 85 | (I-1) | (II-1) | 40/60 | - | Ti | (1) | TMO S | MTMS | Ti | |
| Example 86 | (I-1) | (II-1) | 75/25 | TMO S (0.5g) | Ti | (1) | TMO S | MTMS | Ti | |
| Example 87 | (I-1) | (II-1) | 75/25 | TMO S (1.0g) | Ti | (1) | TMO S | MTMS | Ti | |
| Example 88 | (I-1) | (II-1) | 75/25 | - | Ti | (1) | TMO S (5.5g) | MTMS (2.4g) | Ti | |
| Example 89 | (I-1) | (II-1) | 75/25 | - | Ti | (1) | TMO S (7.2g) | MTMS (0.8g) | Ti | |
| Example 90 | (I-1) | (II-1) | 75/25 | - | Ti | (1) | TMO S | MTMS | Ti | PET substrate |
| Example 91 | (I-1) | (II-12) | 75/25 | - | Ti | (1) | TMO S | MTMS | Ti | PET substrate |
| Example 92 | (I-5) | (II-1) | 75/25 | - | Ti | (1) | TMO S | DMDMS | Ti | PET substrate |
| Example 93 | (I-21) | (II-1) | 75/25 | - | Ti | (1) | TMO S | MTMS | Ti | PPET substrate |
| Example 94 | (I-1) | (II-1) | 75/25 | - | Ti | (1) | TMO S | MTMS | Ti | TAC substrate |
| Example 95 | (I-1) | (II-12) | 75/25 | - | Ti | (1) | TMO S | MTMS | Ti | TAC substrate |
| Example 96 | (I-5) | (II-1) | 75/25 | - | Ti | (1) | TMO S | MTMS | Ti | TAC substrate |
| Example 97 | (I-21) | (II-1) | 75/25 | - | Ti | (I) | TMO S | MTMS | Ti | TAC substrate |
| Compara -tive Example 6 | (I-1) | (II-1) | 75/25 | - | Ti | (1) | TMO S | - | Ti | |
| Compara -tive Example 7 | (I-1) | (II-1) | 75/25 | - | Ti | (1) | - | | | |

(Notes)
TMOS: tetramethoxysilane
TEOS: tetraethoxysilane
TEOT: tetraethoxy titanate
TEOA: triethoxy aluminate
MTMS: methyltrimethoxysilane
MTES: methyltriethoxysilane
ETMS: ethyltrimethoxysilane
DMDMS: dimethyldimethoxysilane
Ti: catalyst composed of acetylacetone and tetraethyl orthotitanate
Al: ethyl acetoacetatoaluminum diisopropylate
Zr: zirconium chelate compound

### Industrial Applicability

The hydrophilic members of the invention can provide hydrophilic members comprising a substrate of every kind having thereon a surface having excellent antifouling properties, quick-drying properties of water or the like, and wear resistance and having flexible properties.

Although the invention has been described in detail and by reference to specific embodiments, it is apparent to those skilled in the art that it is possible to add various alterations and modifications insofar as the alterations and modifications do not deviate from the spirit and the scope of the invention.
This application is based on a Japanese patent application filed on Feb. 1, 2008 (Japanese Patent Application No. 2008-23109), a Japanese patent application filed on Mar. 24, 2008 (Japanese Patent Application No. 2008-76762), and a Japanese patent application filed on Aug. 15, 2008 (Japanese Patent Application No. 2008-209381), and the contents thereof are incorporated herein by reference.

## Claims

1. A hydrophilic member which comprises: an overcoat layer formed from a hydrophilic composition containing at least one of a hydrophilic polymer (A) containing a structure represented by the following general formula (I-1) and a structure represented by the general formula (I-2) and a hydrophilic polymer (B) containing a structure represented by the general formula (II-1) and a structure represented by the general formula (II-2); and an undercoat layer formed from a composition for forming the undercoat layer containing an alkoxide (C) represented by the general formula (III) of M(OR¹⁴)₄ in which M represents an element selected from Si, Ti and Zr and an alkoxysilane (D) represented by the general formula (IV) of Si(OR¹⁵)ₐR¹⁶₄₋ₐ in which R¹⁴ to R¹⁶ each independently represents a hydrogen atom or a hydrocarbon group and a represents 2 or 3: 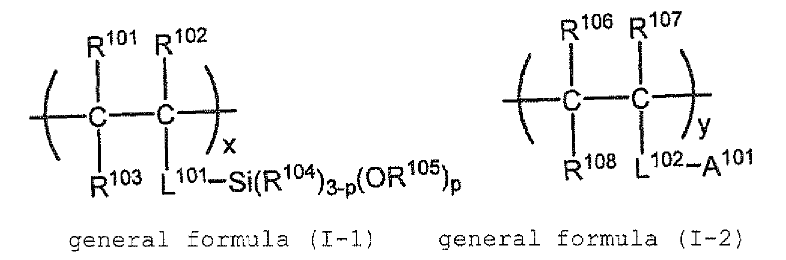 wherein, in the general formulae (I-1) and (I-2), R¹⁰¹ to R¹⁰⁸ each independently represents a hydrogen atom or a hydrocarbon group, p represents an integer of from 1 to 3, L¹⁰¹ represents a single bond or a polyvalent organic linking group having one or more structures selected from the group consisting of -CONH-, -NHCONH-, -OCONH-, -SO₂NH-and -SO₃-, L¹⁰² represents a single bond or a polyvalent organic linking group, x and y each represents a composition ratio, with x being 0<x<100 and y being 0<y<100, A¹⁰¹ represents -OH, -ORₐ, -CORₐ, -CO₂Rₑ, -CON(Rₐ)(R_{b}), - N(Rₐ)(R_{b}), -NHCOR_{d}, -NHCO₂Rₐ, -OCON(Rₐ)(R_{b}), -NHCON(Rₐ)(R_{b}),-SO₃Rₑ, -OSO₃Rₑ, -SO₂R_{d}, -NHSO₂R_{d}, -SO₂N(Rₐ)(R_{b}), -N(Rₐ)(R_{b})(R_{c}), -N (Rₐ)(R_{b})(R_{c})(R_{g}), -PO₃(Rₑ)(R_{f}), -OPO₃(Rₑ)(R_{f}) or -PO₃(R_{d})(Rₑ), in which Rₐ, R_{b} and R_{c} each independently represents a hydrogen atom or a straight, branched or cyclic alkyl group, R_{d} represents a straight, branched or cyclic alkyl group, Rₑ and R_{f} each independently represents a hydrogen atom, a straight, branched or cyclic alkyl group, an alkali metal, an alkaline earth metal or an onium, and R_{g} represents a halogen ion, an inorganic anion or an organic anion; 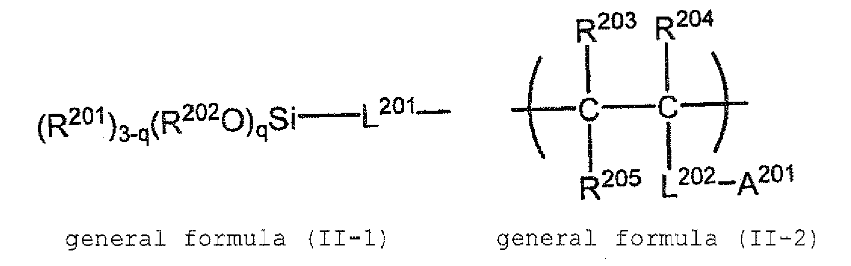 wherein, in the general formulae (II-1) and (II-2), R²⁰¹ to R²⁰⁵ each independently represents a hydrogen atom or a hydrocarbon group, q represents an integer of from 1 to 3, L²⁰¹ and L²⁰² each independently represents a single bond or a polyvalent organic linking group, A²⁰¹ represents -OH, - ORₐ, -CORₐ, -CO₂Rₑ, -CON(Rₐ)(R_{b}), -N(Rₐ)(R_{b}), -NHCOR_{d}, -NHCO₂Rₐ, -OCON(Rₐ)(R_{b}), -NHCON(Rₐ)(R_{b}), -SO₃Rₑ, -OSO₃Rₑ, -SO₂R_{d}, - NHSO₂R_{d}, -SO₂N(Rₐ)(R_{b}), -N(Rₐ)(R_{b})(R_{c}), -N(Rₐ)(R_{b})(R_{c})(R_{g}), - PO₃(Rₑ)(R_{f}), -OPO₃(Rₑ)(R_{f}) or -PO₃(R_{d})(Rₑ) in which Rₐ, R_{b} and R_{c} each independently represents a hydrogen atom or a straight, branched or cyclic alkyl group, R_{d} represents a straight, branched or cyclic alkyl group, Rₑ and R_{f} each independently represents a hydrogen atom, a straight, branched or cyclic alkyl group, an alkali metal, an alkaline earth metal or an onium, and R_{g} represents a halogen ion, an inorganic anion or an organic anion.

2. The hydrophilic member as claimed in claim 1, wherein the hydrophilic composition further contains a catalyst (E).

3. The hydrophilic member as claimed in claim 1 or 2, wherein the hydrophilic composition further contains an alkoxide compound (F) of an element selected from Si, Ti, Zr and Al.

4. The hydrophilic member as claimed in any one of claims 1 to 3, wherein the composition for forming the undercoat layer further contains a catalyst (E).

5. The hydrophilic member as claimed in any one of claims 2 to 4, wherein the catalyst (E) is a non-volatile catalyst.

6. The hydrophilic member as claimed in any one of claims 1 to 5, wherein the hydrophilic composition contains the hydrophilic polymer (A) and the hydrophilic polymer (B), and a weight ratio of the hydrophilic polymer (A) to the hydrophilic polymer (B) (hydrophilic polymer (A)/hydrophilic polymer (B)) is in a range of from 95/5 to 50/50.

7. The hydrophilic member as claimed in any one of claims 1 to 6, wherein the composition for forming the undercoat layer further contains a surfactant (G).

8. The hydrophilic member as claimed in claim 7, wherein the surfactant (G) is at least one selected from an anionic surfactant, an amphoteric surfactant and a fluorine-containing surfactant.

9. The hydrophilic member as claimed in any one of claims 1 to 8, wherein a weight ratio of the alkoxide (C) to the alkoxysilane (D) (alkoxide (C)/alkoxysilane (D)) in the composition for forming the undercoat layer is in a range of from 90/10 to 30/70.

10. The hydrophilic member as claimed in any one of claims 1 to 9, which is obtained by applying the composition for forming the undercoat layer onto a substrate and heating and drying the applied composition to form the undercoat layer, and applying the hydrophilic composition onto the undercoat layer and heating and drying the applied hydrophilic composition to form the overcoat layer.

11. The hydrophilic member as claimed in any one of claims 1 to 10, wherein the substrate is a flexible substrate.

12. A fin stock using the hydrophilic member claimed in any one of claims 1 to 11.

13. An aluminum fin stock, wherein the fin stock claimed in claim 12 is made from aluminum.

14. A heat exchanger using the aluminum fin stock claimed in claim 13.

15. An air-conditioner using the heat exchanger claimed in claim 14.
